# NEUE EUROPÄISCHE PATENTSCHRIFT

(11) **EP 3 061 779 B2**
(45) Veröffentlichungstag und Bekanntmachung des Hinweises auf die Entscheidung über den Einspruch: **05.01.2022**
(45) Hinweis auf die Patenterteilung: 10.04.2019
(21) Anmeldenummer: 15157013.2
(22) Anmeldetag: 27.02.2015
(51) Int. Cl.: C08G 18/72, C08G 18/78, C08G 18/79, C09D 175/02, C08G 18/38

(54) **Beschichtungsmittel und deren Verwendung, insbesondere zur Ausbildung einer Schutzbeschichtung auf einer Oberfläche**
Coating agent and the use of same, in particular for forming a protective coating on a surface
Agent de revêtement et son utilisation, en particulier destiné à former un revêtement de protection sur une surface

(43) Veröffentlichungstag der Anmeldung: 31.08.2016
(73) Patentinhaber: MIPA SE, 84051 Essenbach (DE)
(72) Erfinder: Rohr, Uwe, 84051 Essenbach/Mirskofen (DE)
(74) Vertreter: Müller, Christian Stefan Gerd

(56) Entgegenhaltungen:
- EP-A1- 2 172 502
- EP-A1- 2 810 970
- EP-A1- 2 832 735
- WO-A1-2013/188176
- WO-A2-2011/126562
- DE-A1-102009 016 173
- JP-A- 2011 001 397
- US-A1- 2010 261 825
- US-A1- 2011 076 485
- US-A1- 2012 130 039
- US-A1- 2015 040 966
- Bibliographische Daten und Ubersetzung aus Espacenet
- Professionelle Übersetzung der Abschnitte [0011] und [0040] bis [0050] der Schrift
- Auszug aus dem Sicherheitsdatenblatt zu Desmodur® NZ 1 Ausgabedatum 16.02.2004
- Auszug aus der Datenbank der Europäischen Chemikalien Agentur (ECHA): https://echa.europa.eu/de/reqistration-dos sier/-/registered-dossier/14695/1 HDI oligomers, isocyanurate", Blatt "General information", "Identification"
- Auszug aus der Datenbank der Europäischen Chemikalien Agentur (ECHA): https://echa.europa.eu/de/reqistration-dos sier/-/reqistered-dossier/14595/1 3- Isocyanatomethyl-3,5,5-trimethylcyclohexyl isocyanate homopolymer, isocyanurate type", Blatt General Information", Identification
- Auszug aus der Datenbank der Europäischen Chemikalien Agentur (ECHA): https://echa.europa.eu/de/reqistration-dos sier/-/reqistered-dossier/14595/1 3-Isocyanalomethyl-3,5,5-trimethylcyclohe xyl isocyanate homopolymer, isocyanurate type , Blatt General Information , Composition - oligomerization prod
- Produktdatenblatt zu Desmophen® NH 1420, Ausgabedatum 27.10.2009
- Produktdatenblatt zu Coronate® 2770 von September 2004
- Internetauszug; Wikipedia: Rost , https://de.wikipedia.org/wiki/Rost
- Auszug aus Polyurethane , Ulrich Meyer-Westhues, 2007

## Beschreibung

Die Erfindung betrifft eine Beschichtungszusammensetzung, die eine Bindemittelkomponente und eine Härterkomponente umfasst, wobei die Bindemittelkomponente mindestens eine Polyaminverbindung umfasst, die Härterkomponente mindestens zwei Polyisocyanate umfasst und die Beschichtungszusammensetzung im Wesentlichen styrolfrei, gegebenenfalls auch frei von ungesättigten Polyestern und/oder Wasser ist.

### HINTERGRUND DER ERFINDUNG

Heutzutage werden Oberflächen von Gegenständen (wie z.B. carbonfaserverstärkte Kunststoffe, Musikinstrumente (wie Piano oder Geige) oder Edelholzfurniere) häufig mit einer Beschichtung versehen, um der Oberfläche ein besonderes ästhetisches Aussehen (wie Hochglanz) zu verleihen und/oder die Oberfläche vor äußeren Einwirkungen (wie Kratzer und/oder Korrosion) zu schützen.

Gegenwärtig werden zu diesem Zweck meist Beschichtungssysteme verwendet, die auf ungesättigten Polyestern oder Acryl-Polyurethanen (Acryl-PU-Lacke) basieren. Jedoch weisen diese gegenwärtig verwendeten System Nachteile auf. Z.B. sind Lacke auf Basis von ungesättigten Polyestern nicht UV-beständig, kratzempfindlich, weisen eine hohe Lösungsmittelemission auf, sind teilweise wegen eines hohen Gehalts an Styrol ökologisch bedenklich und/oder man braucht viele (ca. 6 bis 15) Schichten, um eine ausreichend dicke Beschichtung (z.B. 1000 µm) aufzubauen, was die Produktionszeit dramatisch verlängert und die Kosten erhöht. Andererseits weisen die gegenwärtig verwendeten Acryl-PU-Lacke eine sehr hohe Lösungsmittelemission auf, man braucht sehr viele (ca. 10 bis 15) Schichten, um eine ausreichend dicke Beschichtung (z.B. 1000 µm) aufzubauen, wodurch der Lackier- und Trocknungsprozess sehr zeitaufwendig wird, und/oder ein hoher Energieaufwand ist für den Trocknungs- und Aushärtungsprozess erforderlich.

Die WO 2011/126562 A2 D1 betrifft Polyharnstoff-Beschichtungszusammensetzungen, die das Reaktionsprodukt zwischen einer Isocyanat-funktionellen Komponente (A) und einer gegenüber Isocyanat reaktiven Komponente (B) umfassen, wobei Komponente (A) a) ein aliphatisches Isocyanat-funktionelles Material und b) ein cycloaliphatisches Isocyanat-funktionelles Material umfasst. Die JP 2011-1397 A beschreibt Beschichtungszusammensetzungen aus aliphatischen Polyharnstoffharzen. Die US 2015/0040966 A1 betrifft Photovoltaik-Zellen, die eine schützende Beschichtung aufweisen. Die US 2010/0261825 A1 offenbart eine Polyharnstoff-Beschichtungszusammensetzung, enthaltend (a) eine erste Komponente, die ein Isocyanat enthält, und (b) eine zweite Komponente, die ein Amin enthält. Die US 2012/0130039 A1 betrifft Beschichtungszusammensetzungen, die ein Isocyanat-funktionelles Prepolymer und eine Mischung aus Polyaminen enthalten. Die US 2011/0076485 A1 beschreibt Beschichtungszusammensetzungen, die eine Polyaminkomponente und ein Polyisocyanat enthalten.

Es besteht somit ein Bedarf an einer Beschichtungszusammensetzung, die kratzbeständig und ökologisch unbedenklich ist. Außerdem wäre es wünschenswert, dass die Beschichtungszusammensetzung derart ausgestaltet ist, so dass (i) die sich ergebende Beschichtung UV-beständig ist, (ii) Lösungsmittelemissionen reduziert werden, (iii) die Beschichtung energetisch und/oder zeitlich effizient erfolgen kann (z.B. Minimierung der Anzahl an Arbeitsschritten und/oder der benötigten Energie; insbesondere sollte die Beschichtungszusammensetzung bei Raumtemperatur derart aushärten, so dass eine Weiterbehandlung schnell (z.B. innerhalb von 60 min) möglich ist), (iv) die Verarbeitungszeit (Topfzeit) relativ lange ist (z.B. bis zu 60 min) und/oder (iv) optimale mechanische Eigenschaften (z.B. hohe Härte, Schwerentflammbarkeit und/oder geringer Schrumpf der ausgehärteten Beschichtung) erreicht werden.

In einem ersten Aspekt wird daher zur Lösung einer oder mehreren der vorstehenden Aufgaben eine Beschichtungszusammensetzung, die die Merkmale von Anspruch 1 umfasst, bereitgestellt. In weiteren Aspekten werden die Verwendung einer Beschichtungszusammensetzung des ersten Aspekts zur Ausbildung einer Beschichtung, insbesondere einer Korrosionsschutz- und/oder Brandschutzbeschichtung auf einer Oberfläche sowie ein Verfahren zur Beschichtung einer Oberfläche bereitgestellt, wobei das Verfahren ein Aufbringen einer Beschichtungszusammensetzung des ersten Aspekts auf zumindest einen Teil der Oberfläche und gegebenenfalls ein Aushärten der Beschichtungszusammensetzung umfasst.

Weitere erfindungsgemäße Aspekte und Merkmale werden aus dem Folgenden ersichtlich.

### KURZE BESCHREIBUNG DER ABBILDUNGEN

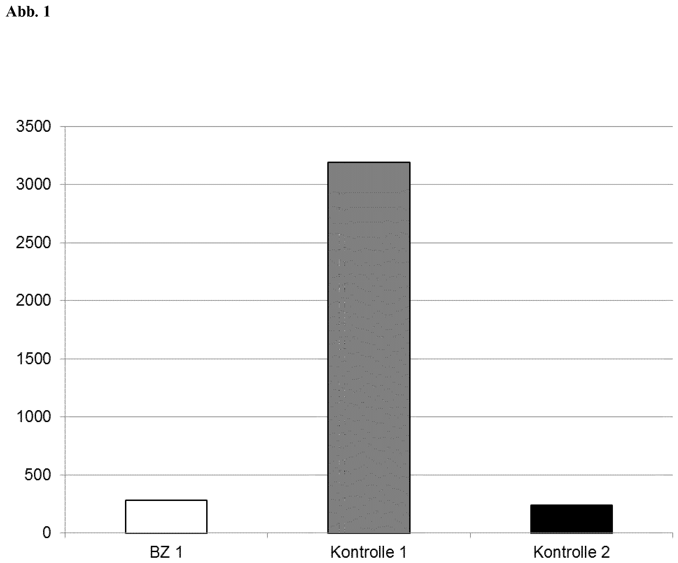

Abbildung 1 ist ein Diagramm, das berechnete Lösungsmittelemissionswerte zeigt, die bei vorschriftsgemäßer Beschichtung (Gesamtbeschichtungsdicke von 1000 µm) von Holzflächen mit verschiedenen Zusammensetzungen freigesetzt werden. Folgende Beschichtungszusammensetzungen wurden verglichen: erfindungsgemäße Beschichtungszusammensetzung (BZ 1); Kontrolle 1 (herkömmlicher Acryl-Polyurethanlack (Acryl-PUR-Lack, basierend auf Acrylharz-Bindemittel und isocyanathaltigem Härter); Kontrolle 2 (herkömmlicher Polyesterlack (PE-Lack, basierend auf ungesättigten Polyestern (UPE) und Styrol). Die Lösungsmittelemission ist in ml pro m² lackierter Holzfläche angegeben.

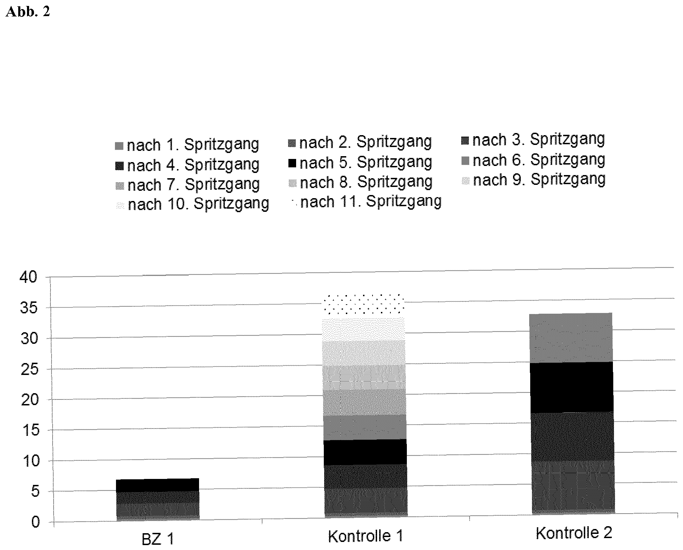

Abbildung 2 ist ein Diagramm, das die Ergebnisse von Lackierungsexperimenten hinsichtlich des Zeitbedarfs zeigt. Holzflächen wurden hierzu mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) solange Spritzgängen (bestehend aus Besprühen und Aushärten) unterzogen, bis eine Testschichtdicke von 1000 µm erreicht wurde, wobei nach jedem Spritzgang die benötigte Zeit gemessen wurde. Der Zeitbedarf ist in Stunden (h) angegeben.

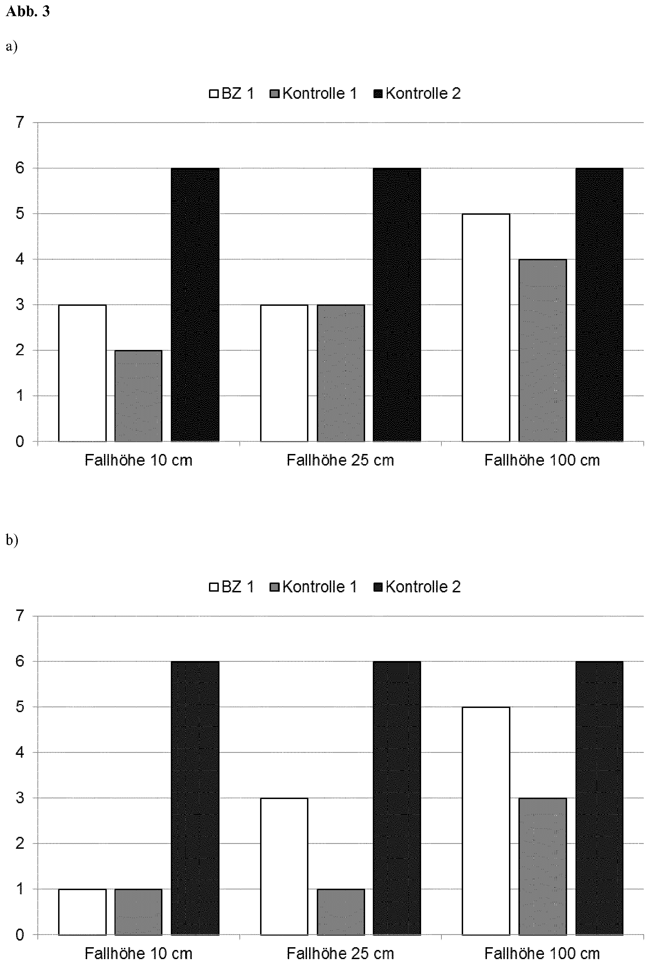

Abbildungen 3a und 3b sind Diagramme, die die Ergebnisse von Kugelschlagprüfungen nach DIN EN ISO 6272 zeigen, bei denen Holzflächen, die mit verschiedenen Zusammensetzungen (erfindungsgemäße Beschichtungszusammensetzung (BZ 1);Kontrolle 1 (herkömmlicher Acryl-PUR-Lack); Kontrolle 2 (herkömmlicher PE-Lack)) bis zu einer Schichtdicke von 100 µm (Abb. 3a) bzw. 500 µm (Abb. 3b) lackiert worden waren, Kugelschlagprüfungen (Kugel: 20 mm; Matrize: 27 mm; Gewicht: 1 kg; Fallhöhe: 10, 25 bzw. 100 cm) unterzogen wurden. Der Schaden wurde beurteilt, wobei 1 bedeutet, dass die Lackschicht unbeschädigt geblieben ist, und 6 bedeutet, dass die Lackschicht zerstört worden ist.

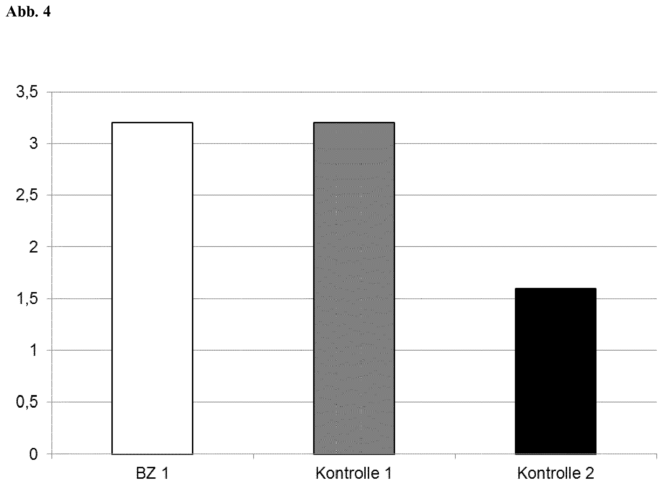

Abbildung 4 ist ein Diagramm, das die Ergebnisse der Tiefungsprüfung von Substraten nach DIN EN ISO 1520 zeigt, die mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) bis zu einer Testschichtdicke von 100 µm beschichtet worden waren.

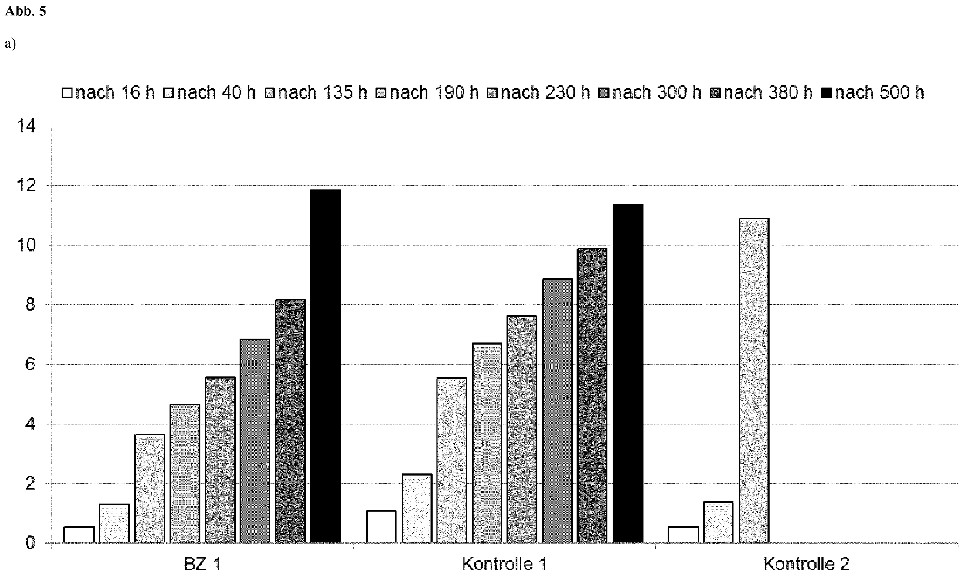

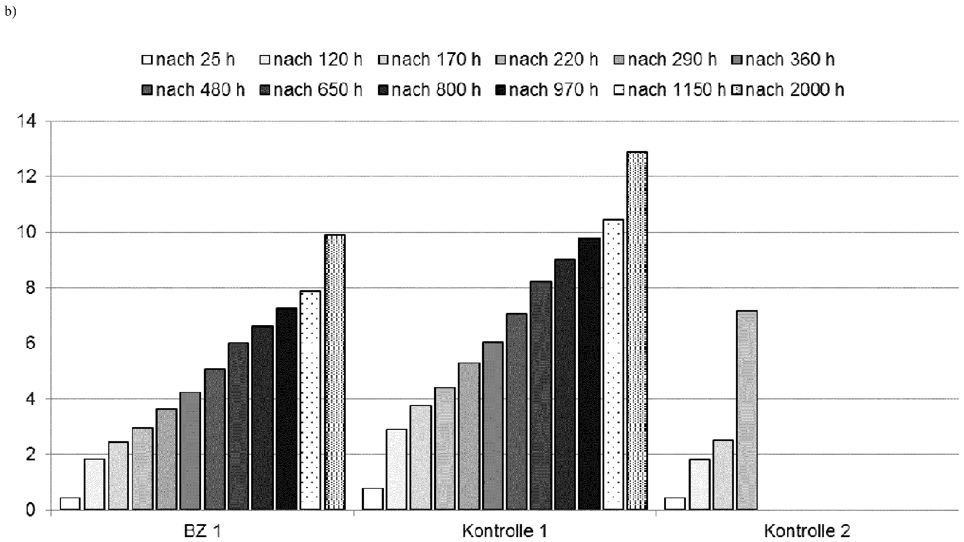

Abbildungen 5a und 5b sind Diagramme, die die Ergebnisse von Kondenswasser-Klima-Tests nach DIN EN ISO 6270-2 zeigen, bei denen Holzflächen (Buche-Vollholz, 76 cm²), die mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) bis zu einer Schichtdicke von 100 µm (Abb. 5a) bzw. 500 µm (Abb. 5b) beschichtet worden waren, Kondenswasser ausgesetzt wurden. Die Wasseraufnahme wurde in gewissen Zeitabständen gemessen und ist in g angegeben. Das Kontrollsystem 2 war nach 190 h (Abb. 5a) bzw. 220 h (Abb. 5b) zerstört, was zum Testabbruch führte.

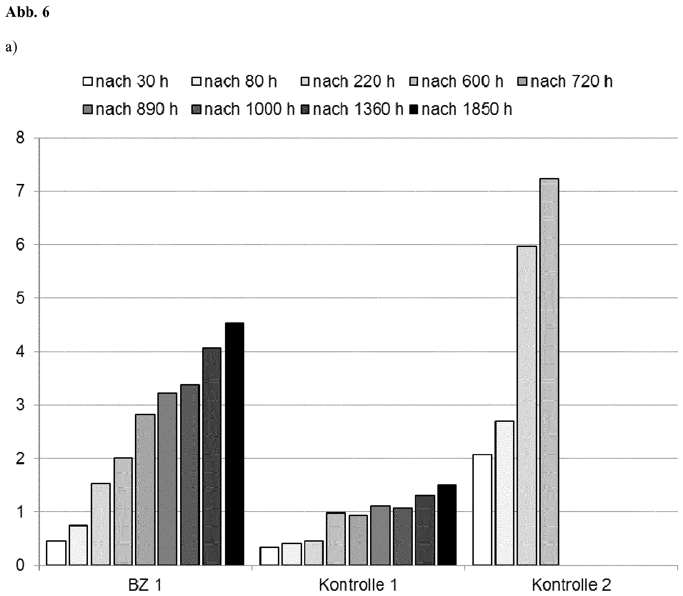

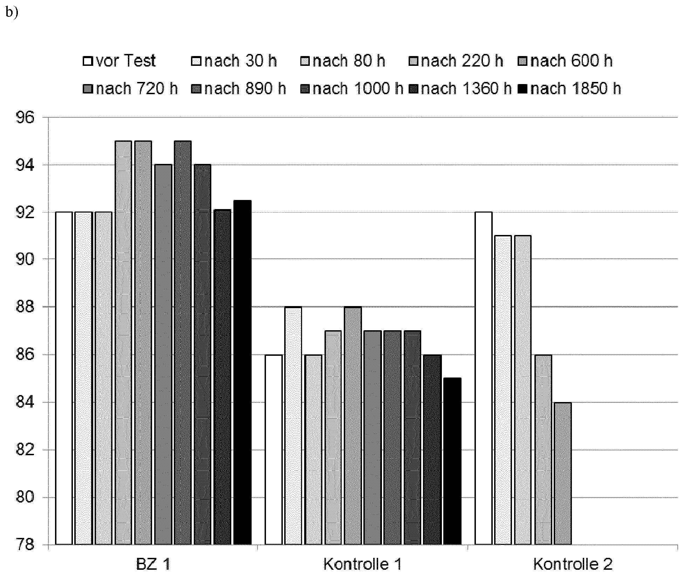

Abbildungen 6a und 6b sind Diagramme, die die Ergebnisse von QUV-Tests zeigen, bei denen Holzflächen, die jeweils einen weißen Basislack und darauf eine Beschichtung, die mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) erzeugt worden war und eine Schichtdicke von 100 µm aufwies, einer künstlichen Bewitterung ausgesetzt wurden. Die Farbtonveränderung (ΔE*; Abb. 6a) und die Glanzveränderung bei einem Winkel von 60° (Abb. 6b) wurden in gewissen Zeitabständen gemessen. Das Kontrollsystem 2 war nach 600 h zerstört, was zum Testabbruch führte.

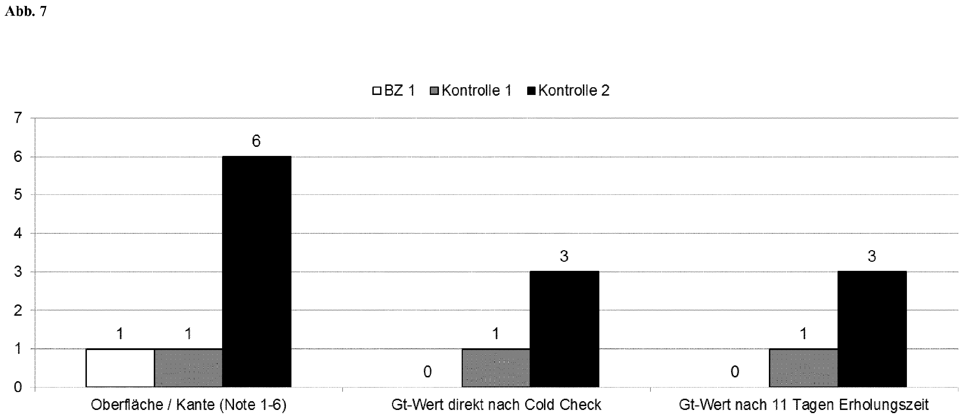

Abbildung 7 ist ein Diagramm, das die Ergebnisse von Cold Check-Tests zeigt. Fichte-Vollholz wurde mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack) beschichtet, um eine Testschichtdicke von 150 µm zu erzeugen, und 28 Bewitterungszyklen (Zyklus: (4 h /-20°C ohne Feuchte) + (4 h/+60°C mit 30 % Feuchte) + (4 h/+60°C mit 90 % Feuchte) unterworfen. Die Oberfläche bzw. Kante der beschichteten Substrate wurde visuell nach Schulnoten beurteilt und die Haftung wurde mittels Gitterschnitt und gemäß DIN EN ISO 2409 bewertet.

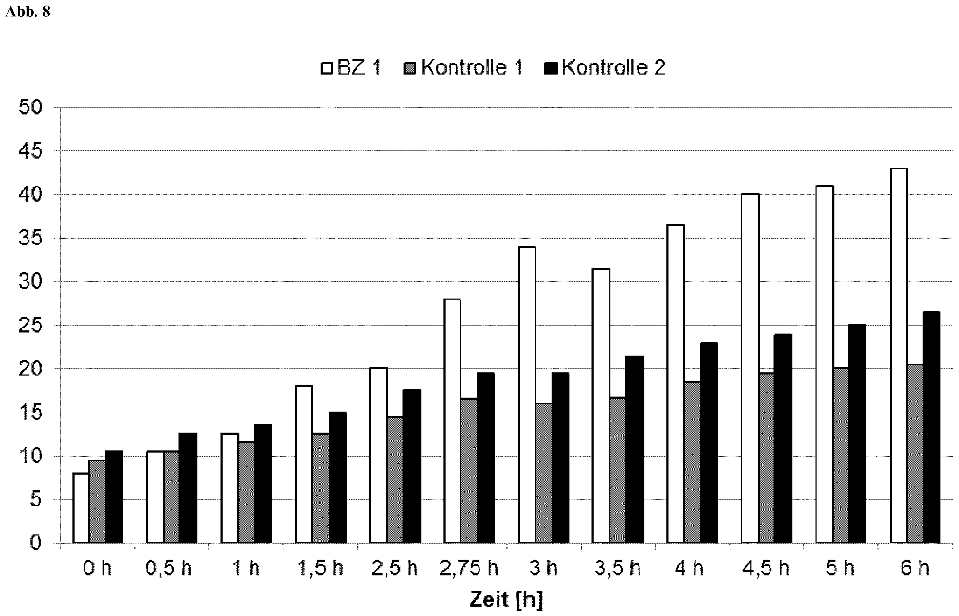

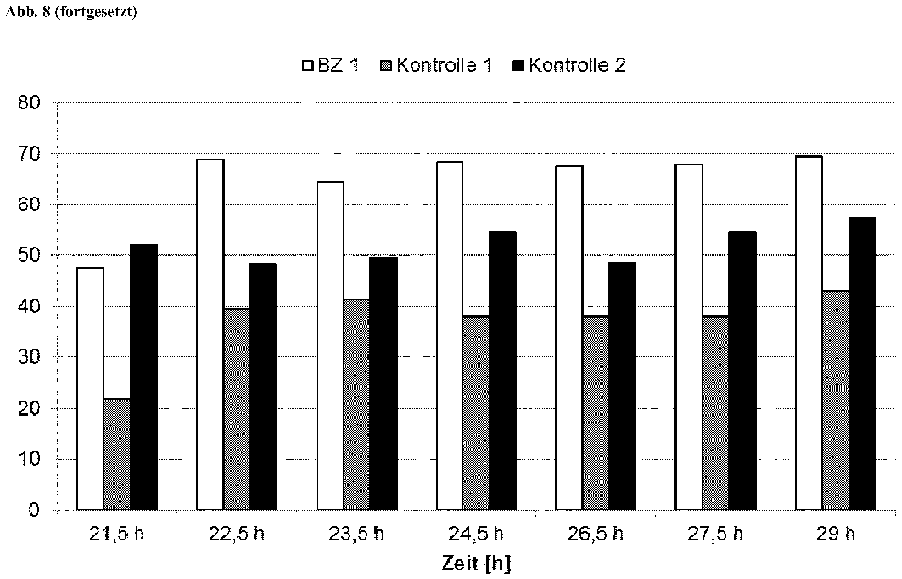

Abbildung 8 ist ein Diagramm, das die Ergebnisse von Pendelhärte-Tests (König) nach EN ISO 1522 in Abhängigkeit der Trockenzeit zeigt. Substrate wurden mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack) beschichtet, um eine Testschichtdicke von 150 µm zu erzeugen. Gezeigt ist die Anzahl der Pendelschwingungen, die bei den jeweiligen Trockenzeiten bei Raumtemperatur und Raumklima gemessen wurden.

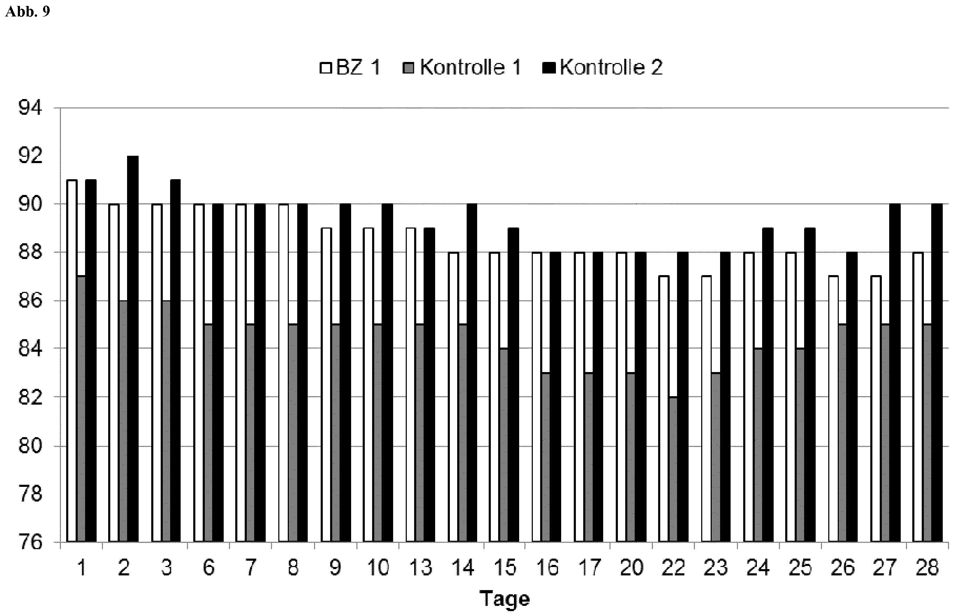

Abbildung 9 ist ein Diagramm, das den Glanzgradverlauf in Abhängigkeit der Trockenzeit bei Raumtemperatur zeigt. Substrate wurden mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack) beschichtet. Die Glanzeinheiten wurden gemäß DIN EN ISO 2813 bestimmt.

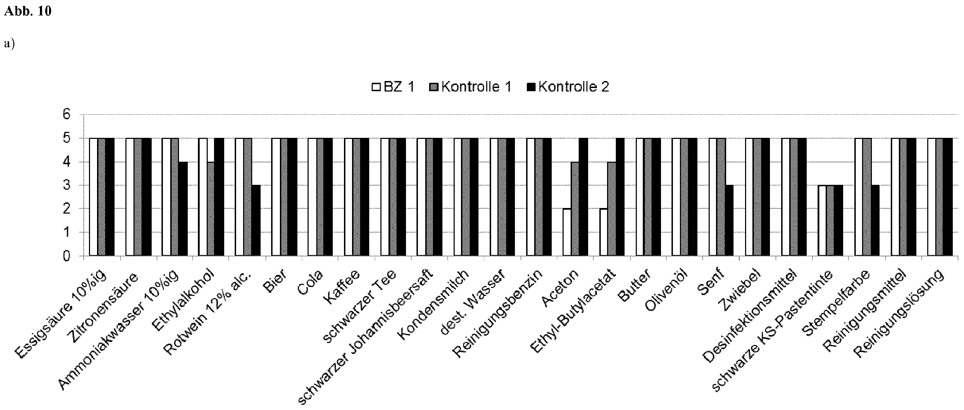

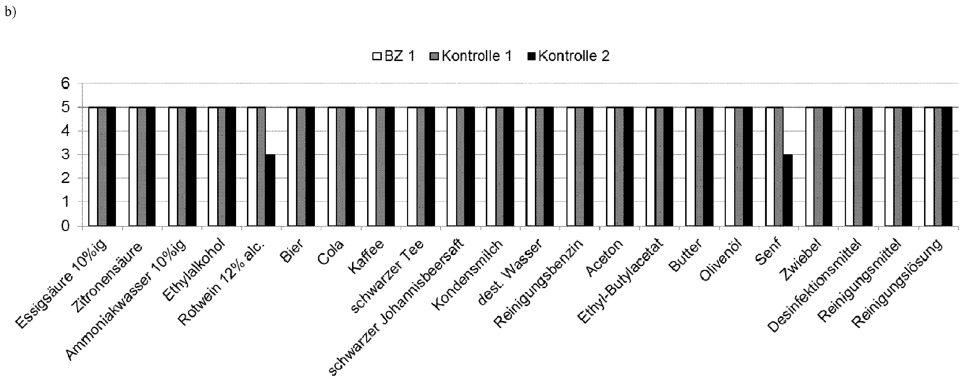

Abbildungen 10a und 10b sind Diagramme, die die Ergebnisse von Chemikalienbeständigkeitstests zeigen. Substrate wurden mit verschiedenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack) beschichtet und unterschiedlichen Chemikalien (Beanspruchungsgruppe 1A (Abb. 10a) bzw. 1B (Abb. 10b) gemäß DIN 68861-1) ausgesetzt. Die zu verwendenden Flüssigkeiten sind in der Norm DIN68861-1 aufgelistet. Die Bewertung erfolgte nach DIN EN 12720.

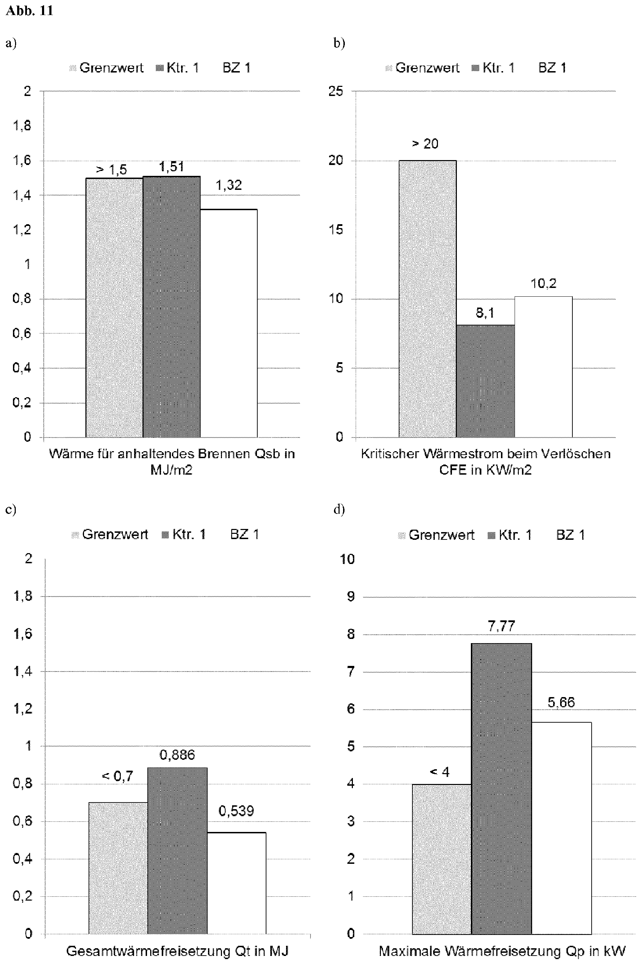

Abbildung 11 ist ein Satz von Diagrammen, die die Ergebnisse von Brandprüfungen gemäß MSC.307 (88) - (2010 FTP Code) Anlage 1 Teil 5 zeigen. Substrate wurden mit verschiedenen Zusammensetzungen (erfindungsgemäße Beschichtungszusammensetzung (BZ 1; ohne Flammschutzmittel); Kontrolle 1 (Ktr. 1, herkömmlicher Acryl-PUR-Lack, der Flammschutzmittel enthält)) beschichtet, um eine Testschichtdicke von 500 µm zu erzeugen. Die Beschichtungen wurden in einer speziellen Messanordnung gemäß Entschließung MSC. 307 (88) einer Flamme ausgesetzt. Als Messgrößen wurden Entzündungszeit, Flammenfortschritt, Erlöschen der Flamme, Flammenausdehnung, Rauchentwicklung, Verkohlen/Verfärben/Rissbildung, brennendes Abfallen und Dauer des Brandversuchs ermittelt. Daraus ergaben sich die in den Diagrammen dargestellten, abgeleiteten Brandeigenschaften, d.h. die Wärme für anhaltendes Brennen (Q_{sb}; Abb. 11a), der kritische Wärmestrom beim Verlöschen (CFE; Abb. 11b), die freigesetzte Gesamtwärmemenge (Qₜ, Abb. 11c) und die maximale Wärmefreisetzungsrate (Qₚ; Abb. 11d). In den Diagrammen ist der jeweilige Grenzwert zum Vergleich angegeben.

### GENAUE BESCHREIBUNG DER ERFINDUNG

Obwohl es nachstehend genauer beschrieben ist, soll verstanden werden, dass die Erfindung auf die hierin beschriebenen Methoden, Verfahren, Protokolle und Reagenzien nicht begrenzt ist, da diese variieren können. Es soll auch verstanden werden, dass die hierin verwendete Terminologie dem Zweck dient, lediglich spezifische Ausführungsformen zu beschreiben, und nicht den Schutzumfang der vorliegenden Erfindung begrenzen soll, der lediglich durch die angehängten Patentansprüche und andere Offenbarungen hierin begrenzt wird. Falls nicht anders definiert, weisen alle hierin verwendeten technischen und wissenschaftlichen Begriffe die gleichen Bedeutungen auf, wie sie ein Fachmann üblicherweise verstehen würde.

Im Folgenden werden die erfindungsgemäßen Elemente genauer beschrieben werden. Diese Elemente sind zwar mit spezifischen Ausführungsformen aufgelistet, es soll aber verstanden werden, dass sie in jeglicher Weise und in jeglicher Anzahl kombiniert werden können, um zusätzliche Ausführungsformen zu kreieren. Die verschiedenartig beschriebenen Beispiele und bevorzugten Ausführungsformen sollten nicht derart ausgelegt werden, dass sie die vorliegende Erfindung auf die explizit beschriebenen Ausführungsformen begrenzen. Die vorliegende Beschreibung soll so verstanden werden, dass sie Ausführungsformen stützt und umfasst, die die explizit beschriebenen Ausführungsformen mit einer jeglichen Anzahl der beschriebenen und/oder bevorzugten Elemente kombinieren. Weiterhin sollen jegliche Permutationen und Kombinationen aller in der vorliegenden Anmeldung beschriebenen Elemente als durch die Offenbarung der vorliegenden Anmeldung beschrieben angesehen werden, es sei denn, dass der Kontext etwas anderes anzeigt. Wenn zum Beispiel in einer Ausführungsform die Bindemittelkomponente der erfindungsgemäßen Beschichtungszusammensetzung mindestens zwei Polyaminverbindungen der Formel (I) umfasst und in einer weiteren Ausführungsform der erfindungsgemäßen Beschichtungszusammensetzung das auf Isophoron basierende Polyisocyanat ein Trimer von Isophorondiisocyanat umfasst, so kann in einer bevorzugten Ausführungsform die erfindungsgemäße Beschichtungszusammensetzung eine Bindemittelkomponente (A), die mindestens zwei Polyaminverbindungen der Formel (I) umfasst, und als Teil der Härterkomponente (B) ein Trimer von Isophorondiisocyanat umfassen.

Bei der Durchführung der vorliegenden Erfindung werden, wenn nicht anders angegeben, herkömmliche Verfahren der Chemie verwendet werden, die in der Literatur auf dem Fachgebiet erklärt sind (vgl. z.B. Organikum, Deutscher Verlag der Wissenschaften, Berlin 1990; Streitwieser/Heathcook, "Organische Chemie", VCH, 1990; Beyer/Walter, "Lehrbuch der Organischen Chemie", S. Hirzel Verlag Stuttgart, 1988; Carey/Sundberg, "Organische Chemie", VCH, 1995; March, "Advanced Organic Chemistry", John Wiley & Sons, 1985; Römpp Chemie Lexikon, Falbe/Regitz (Hrsg.), Georg Thieme Verlag Stuttgart, New York, 1989).

Überall in der Beschreibung der vorliegenden Anmeldung und in den Patentansprüchen, die folgen, werden das Wort "umfassen" und Variationen davon wie "umfasst" und "umfassend" derart verstanden werden, dass sie die Einbeziehung eines angegebenen Mitglieds, einer angegebenen Zahl oder eines angegebenen Schrittes oder einer angegebenen Gruppe von Mitgliedern, Zahlen oder Schritten, aber nicht den Ausschluss eines jeglichen anderen Mitglieds, einer jeglichen anderen Zahl oder eines jeglichen anderen Schrittes oder einer jeglichen anderen Gruppe von Mitgliedern, Zahlen oder Schritten beinhaltet, es sei denn, dass der Kontext etwas anderes erfordert. Der Begriff "umfassend" beinhaltet den Begriff "im Wesentlichen bestehend aus", wobei letzterer wiederum den Begriff "bestehend aus" beinhaltet. Folglich kann der Begriff "umfassend" an jeder Stelle, an der er in der vorliegenden Anmeldung vorkommt, durch den Begriff "im Wesentlichen bestehend aus" oder "bestehend aus" ersetzt werden. In ähnlicher Weise kann der Begriff "im Wesentlichen bestehend aus" an jeder Stelle, an der er in der vorliegenden Anmeldung vorkommt, durch den Begriff "bestehend aus" ersetzt werden.

Begriffe wie "ein", "eine", "einer", "der", "die", "das" und eine ähnliche Bezugnahme, die im Kontext des Beschreibens der vorliegenden Erfindung (insbesondere im Kontext der Patentansprüche) verwendet wird, sollen derart ausgelegt werden, dass sie sowohl den Singular als auch den Plural abdecken, es sei denn, dass es hierin anders angegeben ist oder dies dem Kontext klar widersprechen würde. Sofern ein Bereich von Zahlenwerten hierin angegeben ist, soll dies lediglich als ein abgekürztes Verfahren zur individuellen Bezugnahme auf jeden einzelnen Wert, der in den Bereich fällt, dienen. Sofern nicht anders hierin angegeben, ist jeglicher individueller Wert eines Bereichs in die Offenbarung der vorliegenden Anmeldung eingeschlossen, als wäre er hierin individuell aufgezählt. Alle hierin beschriebenen Verfahren können in jeglicher geeigneten Reihenfolge durchgeführt werden, es sei denn, dass es hierin anders angegeben ist oder dies dem Kontext klar widersprechen würde. Die Verwendung eines jeglichen oder aller der hierin bereitgestellten Beispiele oder eines beispielhaften Wortlautes (z.B. "wie beispielsweise" oder "wie z.B.") soll lediglich dazu dienen, die Erfindung besser zu veranschaulichen, und soll nicht eine Begrenzung des Schutzumfanges der Erfindung, wie sie beansprucht wird, darstellen. Kein Wortlaut in der vorliegenden Beschreibung soll derart ausgelegt werden, dass ein Element, das nicht Bestandteil des unabhängigen Patentanspruchs (bzw. der unabhängigen Patentansprüche) ist, als essentiell für die Durchführung der vorliegenden Erfindung angesehen wird.

Mehrere Dokumente werden in dem Text der vorliegenden Beschreibung zitiert. Ein jegliches der hierin zitierten Dokumente (einschließlich aller Patente, Patentanmeldungen, wissenschaftlicher Veröffentlichungen, Produktbeschreibungen, Herstellerangaben, etc.), ob vor- oder nachstehend zitiert, werden hiermit durch Bezugnahme in ihrer Gesamtheit eingeschlossen. Nichts, was hierin angegeben ist, soll als Zugeständnis ausgelegt werden, dass die vorliegende Erfindung nicht der Offenbarung solcher Dokumente vorausgeht.

### Definitionen

Eine "organische Verbindung" ist eine Verbindung, die auf Kohlenstoff und mindestens einer weiteren Atomsorte (insbesondere ausgewählt aus H, O, S, N, Halogen, P, Si, Li, Na und K) basiert, wobei elementare Formen des Kohlenstoffs (d.h. Graphit, Diamant, Fullerene) und anorganische Verbindungen (wie wasserstofffreie Chalkogenide des Kohlenstoffs (d.h. Kohlenstoffmonoxid, Kohlenstoffdioxid, Schwefelkohlenstoff), die Kohlensäure (H₂CO₃), anorganische Salze der Kohlensäure (d.h. anorganische Carbonate z.B. NaHCO₃), Carbide sowie die ionischen Cyanide, Cyanate und Thiocyanate (wie NaCN, KOCN oder (NH₄)SCN)) nicht eingeschlossen sind. Beispiele organischer Verbindungen beinhalten Alkane, Alkene, Alkine, Cycloalkane, Heterocyclen, Aromaten und Heteroaromaten sowie substituierte Formen davon, in denen 1 Wasserstoffatom (oder mehrere Wasserstoffatome) durch eine funktionelle Gruppe (oder funktionelle Gruppen, die gleich oder verschieden sein können) ersetzt sind.

Ein "organischer Rest" ist ein Rest, der durch Entfernung mindestens eines Wasserstoffatoms von einer organischen Verbindung entsteht. Leitet sich der organische Rest durch Entfernung nur eines Wasserstoffatoms von der organischen Verbindung ab, ist der Rest monovalent, während durch Entfernung zweier Wasserstoffatome von einer organischen Verbindung ein bivalenter (oder divalenter) Rest (auch als Diradikal (allgemeine Endung "diyl") bezeichnet) entsteht, usw. Geminale Diradikale (Endung "yliden") sind Reste, in denen zwei Wasserstoffatome von demselben Kohlenstoffatom einer organischen Verbindung entfernt wurden. Beispiele monovalenter organischer Reste beinhalten Alkyl-, Alkenyl-, Alkinyl-, Cycloalkyl-, Heterocyclyl-, Aryl- oder Heteroarylreste (d.h. abgeleitet durch die Entfernung eines Wasserstoffatoms von einem Alkan, Alken, Alkin, Cycloalkan, Heterocyclus, Aromaten bzw. Heteroaromaten). Beispiele divalenter organischer Reste beinhalten Alkylen- (wie Alkandiyl- oder Alkylidenreste), Alkenylen- (wie Alkendiyl- oder Alkenylidenreste), Alkinylen- (wie Alkindiylreste), Cycloalkylen- und Heterocyclylenreste. Beispiele geminaler Diradikale beinhalten Alkyliden- und Alkenylidenreste.

Die Begriffe "Alkylrest", "Alkylgruppe" und "Alkyl" werden hierin austauschbar verwendet und betreffen einen monovalenten Rest eines gesättigten geraden oder verzweigten Kohlenwasserstoffs (d.h. eines Alkans). Vorzugsweise umfasst der Alkylrest 1 bis 14 (wie 1 bis 12 oder 1 bis 10) Kohlenstoffatome, d.h. 1, 2, 3, 4, 5, 6, 7, 8, 9, 10, 11, 12, 13 oder 14 Kohlenstoffatome (wie 1, 2, 3, 4, 5, 6, 7, 8, 9, 10, 11 oder 12 Kohlenstoffatome), vorzugsweise 1 bis 8 Kohlenstoffatome, wie 1 bis 6 oder 1 bis 4 Kohlenstoffatome. Beispielhafte Alkylreste beinhalten Methyl-, Ethyl-, Propyl-, isoPropyl- (auch bekannt als 2-Propyl- oder 1-Methylethyl-), Butyl-, iso-Butyl-, tert-Butyl-, n-Pentyl-, iso-Pentyl-, sec-Pentyl-, neo-Pentyl-, 1,2-Dimethylpropyl-, iso-Amyl-, n-Hexyl-, iso-Hexyl-, sec-Hexyl-, n-Heptyl-, iso-Heptyl-, n-Octyl-, 2-Ethylhexyl-, n-Nonyl-, n-Decyl-, n-Undecyl-, n-Dodecyl-, n-Tridecyl-, n-Tetradecylreste und dergleichen.

Die Begriffe "Alkylenrest", "Alkylengruppe" und "Alkylen" werden hierin austauschbar verwendet und betreffen einen divalenten Rest eines gesättigten geraden oder verzweigten Kohlenwasserstoffs (d.h. eines Alkans). Vorzugsweise umfasst der Alkylenrest 1 bis 14 (wie 1 bis 12 oder 1 bis 10) Kohlenstoffatome, d.h. 1, 2, 3, 4, 5, 6, 7, 8, 9, 10, 11, 12, 13 oder 14 Kohlenstoffatome (wie 1, 2, 3, 4, 5, 6, 7, 8, 9, 10, 11 oder 12 Kohlenstoffatome), vorzugsweise 1 bis 8 Kohlenstoffatome, wie 1 bis 6 oder 1 bis 4 Kohlenstoffatome. Beispielhafte Alkylenreste beinhalten Methylen-, Ethylenreste (d.h. 1,1-Ethylen- (auch als Ethylidenrest bezeichnet), 1,2-Ethylenreste), Propylenreste (d.h. 1,1-Propylen-(auch als Propylidenrest bezeichnet), 1,2-Propylen- (-CH(CH₃)CH₂-), 2,2-Propylen- (-C(CH₃)₂-) und 1,3-Propylenreste), die Butylenisomere (z.B., 1,1-, 1,2-, 2,2-, 1,3-Butylen-, 2,3-Butylen- (cis oder trans oder ein Gemisch davon), 1,4-Butylen-, 1,1-iso-Butylen-, 1,2-iso-Butylen- und 1,3-iso-Butylenreste), die Pentylenisomere (z.B. 1,1-, 1,2-, 1,3-, 1,4-, 1,5-Pentylen-, 1,1-iso-Pentylen-, 1,1-sec-Pentylen, 1,1-neo-Pentylenreste), die Hexylenisomere (z.B. 1,1-, 1,2-, 1,3-, 1,4-, 1,5-, 1,6-Hexylen- und 1,1-iso-Hexylenreste), die Heptylenisomere (z.B. 1,1-, 1,2-, 1,3-, 1,4-, 1,5-, 1,6-, 1,7-Heptylen- und 1,1-iso-Heptylenreste), die Octylensomere (z.B. 1,1-, 1,2-, 1,3-, 1,4-, 1,5-, 1,6-, 1,7-, 1,8-Octylen- und 1,1-iso-Octylenreste) und dergleichen. Die geraden Alkylenreste mit mindestens 3 Kohlenstoffatome und einer freien Valenz an jedem Ende können auch als ein Vielfaches eines Methylenrests bezeichnet werden (z.B. kann 1,4-Butylen auch als Tetramethylen bezeichnet werden). Allgemein kann man anstelle der Endung "ylen" für Alkylenreste, wie vorstehend spezifiziert, auch die Endung "diyl" verwenden (z.B. kann 1,2-Butylen auch als Butan-1,2-diyl bezeichnet werden).

Die Begriffe "Alkenylrest", "Alkenylgruppe" und "Alkenyl" werden hierin austauschbar verwendet und betreffen einen monovalenten Rest eines ungesättigten geraden oder verzweigten Kohlenwasserstoffs mit mindestens einer Kohlenstoff-Kohlenstoff-Doppelbindung (d.h. eines Alkens).

Allgemein kann die maximale Anzahl von Kohlenstoff-Kohlenstoff-Doppelbindungen in der Alkenylgruppe gleich zu der ganzen Zahl sein, die dadurch berechnet wird, dass man die Kohlenstoffatome in der Alkenylgruppe durch 2 teilt und, falls die Anzahl der Kohlenstoffatome in der Alkenylgruppe ungerade ist, das Ergebnis der Division auf die nächst kleinere ganze Zahl abrundet. Beispielsweise ist für eine Alkenylgruppe mit 9 Kohlenstoffatomen die maximale Anzahl an Kohlenstoff-Kohlenstoff-Doppelbindungen 4. Vorzugsweise weist die Alkenylgruppe 1 bis 7 (wie 1 bis 4), d.h. 1, 2, 3, 4, 5, 6 oder 7, Kohlenstoff-Kohlenstoff-Doppelbindungen auf. Vorzugsweise umfasst die Alkenylgruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9, 10, 11 oder 12 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkenylgruppe 2 bis 14 (z.B. 2 bis 10) Kohlenstoffatome und 1, 2, 3, 4, 5, 6 oder 7 (z.B. 1, 2, 3, 4 oder 5) Kohlenstoff-Kohlenstoff-Doppelbindungen, mehr bevorzugt umfasst sie 2 bis 8 Kohlenstoffatome und 1, 2, 3 oder 4 Kohlenstoff-Kohlenstoff-Doppelbindungen, wie 2 bis 6 Kohlenstoffatome und 1, 2 oder 3 Kohlenstoff-Kohlenstoff-Doppelbindungen oder 2 bis 4 Kohlenstoffatome und 1 oder 2 Kohlenstoff-Kohlenstoff-Doppelbindungen. Die Kohlenstoff-Kohlenstoff-Doppelbindung(en) kann (können) in cis (Z)- oder trans (E)-Konfiguration vorliegen. Beispielhafte Alkenylgruppen beinhalten Vinyl-, 1-Propenyl-, 2-Propenyl- (d.h. Allyl-), 1-Butenyl-, 2-Butenyl-, 3-Butenylreste, die Pentenylisomere (d.h. 1-, 2-, 3-, 4-Pentenyl), die Hexenylisomere (z.B. 1- 2-, 3-, 4- und 5-Hexenyl), die Heptenylisomere (z.B. 1-, 2-, 3-, 4-, 5- und 6-Heptenyl), die Octenylisoemer (z.B. 1-, 2-, 3-, 4-, 5-, 6- und 7-Octenyl), die Nonenylisomere (1-, 2-, 3-, 4-, 5-, 6-, 7- und 8-Nonenyl), die Decenylisomere (z.B. 1-, 2-, 3-, 4-, 5-, 6-, 7-, 8- und 9-Decenyl), die Undecenylisomere (z.B. 1-, 2-, 3-, 4-, 5-, 6-, 7-, 8-, 9- und 10-Undecenyl), die Dodecenylisomere (z.B. 1-, 2-, 3-, 4-, 5-, 6-, 7-, 8-, 9-, 10- und 11-Dodecenyl), die Tridecenylisomere (z.B. 1-, 2-, 3-, 4-, 5-, 6-, 7-, 8-, 9-, 10-, 11- und 12-Tridecenyl), die Tetradecenylisomere (z.B. 1-, 2-, 3-, 4-, 5-, 6-, 7-, 8-, 9-, 10-, 11-, 12- und 13-Tetradecenyl) und dergleichen. Falls eine Alkenylgruppe an ein Stickstoffatom gebunden ist, so kann die Doppelbindung nicht alpha-ständig zu dem Stickstoffatom sein.

Die Begriffe "Alkenylenrest", "Alkenylengruppe" und "Alkenylen" werden hierin austauschbar verwendet und betreffen einen divalenten Rest eines ungesättigten geraden oder verzweigten Kohlenwasserstoffs mit mindestens einer Kohlenstoff-Kohlenstoff-Doppelbindung (d.h. eines Alkens). Allgemein kann die maximale Anzahl von Kohlenstoff-Kohlenstoff-Doppelbindungen in der Alkenylengruppe gleich zu der ganzen Zahl sein, die dadurch berechnet wird, dass man die Kohlenstoffatome in der Alkenylengruppe durch 2 teilt und, falls die Anzahl der Kohlenstoffatome in der Alkenylengruppe ungerade ist, das Ergebnis der Division auf die nächst kleinere ganze Zahl abrundet. Beispielsweise ist für eine Alkenylengruppe mit 9 Kohlenstoffatomen die maximale Anzahl an Kohlenstoff-Kohlenstoff-Doppelbindungen 4. Vorzugsweise weist die Alkenylengruppe 1 bis 7 (wie 1 bis 4), d.h. 1, 2, 3, 4, 5, 6 oder 7, Kohlenstoff-Kohlenstoff-Doppelbindungen auf. Vorzugsweise umfasst die Alkenylengruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9, 10, 11 oder 12 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkenylengruppe 2 bis 14 (z.B. 2 bis 10) Kohlenstoffatome und 1, 2, 3, 4, 5, 6 oder 7 (z.B. 1, 2, 3, 4 oder 5) Kohlenstoff-Kohlenstoff-Doppelbindungen, mehr bevorzugt umfasst sie 2 bis 8 Kohlenstoffatome und 1, 2, 3 oder 4 Kohlenstoff-Kohlenstoff-Doppelbindungen, wie 2 bis 6 Kohlenstoffatome und 1, 2 oder 3 Kohlenstoff-Kohlenstoff-Doppelbindungen oder 2 bis 4 Kohlenstoffatome und 1 oder 2 Kohlenstoff-Kohlenstoff-Doppelbindungen. Die Kohlenstoff-Kohlenstoff-Doppelbindung(en) kann (können) in cis (Z)- oder trans (E)-Konfiguration vorliegen. Beispielhafte Alkenylengruppe beinhalten Ethen-1,2-diyl, Vinyliden (auch als Ethenyliden bezeichnet), 1-Propen-1,2-diyl, 1-Propen-1,3-diyl, 1-Propen-2,3-diyl, Allyliden, 1-Buten-1,2-diyl, 1-Buten-1,3-diyl, 1-Buten-1,4-diyl, 1-Buten-2,3-diyl, 1-Buten-2,4-diyl, 1-Buten-3,4-diyl, 2-Buten-1,2-diyl, 2-Buten-1,3-diyl, 2-Buten-1,4-diyl, 2-Buten-2,3-diyl, 2-Buten-2,4-diyl, 2-Buten-3,4-diyl und dergleichen. Falls eine Alkenylengruppe an ein Stickstoffatom gebunden ist, so kann die Doppelbindung nicht alpha-ständig zu dem Stickstoffatom sein.

Die Begriffe "Alkinylrest", "Alkinylgruppe" und "Alkinyl" werden hierin austauschbar verwendet und betreffen einen monovalenten Rest eines ungesättigten geraden oder verzweigten Kohlenwasserstoffs mit mindestens einer Kohlenstoff-Kohlenstoff-Dreifachbindung (d.h. eines Alkins). Allgemein kann die maximale Anzahl von Kohlenstoff-Kohlenstoff-Dreifachbindungen in der Alkinylgruppe gleich zu der ganzen Zahl sein, die dadurch berechnet wird, dass man die Kohlenstoffatome in der Alkinylgruppe durch 2 teilt und, falls die Anzahl der Kohlenstoffatome in der Alkinylgruppe ungerade ist, das Ergebnis der Division auf die nächst kleinere ganze Zahl abrundet. Beispielsweise ist für eine Alkinylgruppe mit 9 Kohlenstoffatomen die maximale Anzahl an Kohlenstoff-Kohlenstoff-Dreifachbindungen 4. Vorzugsweise weist die Alkinylgruppe 1 bis 7 (wie 1 bis 4), d.h. 1, 2, 3, 4, 5, 6 oder 7 (wie 1, 2, 3 oder 4), mehr bevorzugt 1 oder 2, Kohlenstoff-Kohlenstoff-Dreifachbindungen auf. Vorzugsweise umfasst die Alkinylgruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9, 10, 11 oder 12 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkinylgruppe 2 bis 14 (z.B. 2 bis 10) Kohlenstoffatome und 1, 2, 3, 4, 5, 6 oder 7 (z.B. 1, 2, 3, 4 oder 5 (vorzugsweise 1, 2 oder 3)) Kohlenstoff-Kohlenstoff-Dreifachbindungen, mehr bevorzugt umfasst sie 2 bis 8 Kohlenstoffatome und 1, 2, 3 oder 4 (vorzugsweise 1 oder 2) Kohlenstoff-Kohlenstoff-Dreifachbindungen, wie 2 bis 6 Kohlenstoffatome und 1, 2 oder 3 Kohlenstoff-Kohlenstoff-Dreifachbindungen oder 2 bis 4 Kohlenstoffatome und 1 oder 2 Kohlenstoff-Kohlenstoff-Dreifachbindungen. Beispielhafte Alkinylgruppen beinhalten Ethinyl, 1-Propinyl, 2-Propinyl, 1-Butinyl, 2-Butinyl, 3-Butinyl, die Pentinylisomere (z.B. 1-, 2-, 3-, 4-Pentinyl), die Hexinylisomere (z.B. 1-, 2-, 3-, 4- und 5-Hexinyl), die Heptinylisomere (z.B. 1-, 2-, 3-, 4-, 5- und 6-Heptinyl), die Octinylisomere (z.B. 1-, 2-, 3-, 4-, 5-, 6- und 7-Octinyl), die Noninylisomere (z.B. 1-, 2-, 3-, 4-, 5-, 6-, 7- und 8-Noninyl), die Decinylisomere (z.B. 1-, 2-, 3-, 4-, 5-, 6-, 7-, 8- und 9-Decinyl) und dergleichen. Falls eine Alkinylgruppe an ein Stickstoffatom gebunden ist, so kann die Dreifachbindung nicht alpha-ständig zu dem Stickstoffatom sein.

Die Begriffe "Alkinylenrest", "Alkinylengruppe" und "Alkinylen" werden hierin austauschbar verwendet und betreffen einen divalenten Rest eines ungesättigten geraden oder verzweigten Kohlenwasserstoffs mit mindestens einer Kohlenstoff-Kohlenstoff-Dreifachbindung (d.h. eines Alkins). Allgemein kann die maximale Anzahl von Kohlenstoff-Kohlenstoff-Dreifachbindungen in der Alkinylengruppe gleich zu der ganzen Zahl sein, die dadurch berechnet wird, dass man die Kohlenstoffatome in der Alkinylengruppe durch 2 teilt und, falls die Anzahl der Kohlenstoffatome in der Alkinylengruppe ungerade ist, das Ergebnis der Division auf die nächst kleinere ganze Zahl abrundet. Beispielsweise ist für eine Alkinylengruppe mit 9 Kohlenstoffatomen die maximale Anzahl an Kohlenstoff-Kohlenstoff-Dreifachbindungen 4. Vorzugsweise weist die Alkinylengruppe 1 bis 7 (wie 1 bis 4), d.h. 1, 2, 3, 4, 5, 6 oder 7 (wie 1, 2, 3 oder 4), mehr bevorzugt 1 oder 2, Kohlenstoff-Kohlenstoff-Dreifachbindungen auf. Vorzugsweise umfasst die Alkinylengruppe 2 bis 14 (wie 2 bis 12 oder 2 bis 10) Kohlenstoffatome, d.h. 2, 3, 4, 5, 6, 7, 8, 9, 10, 11, 12, 13 oder 14 Kohlenstoffatome (wie 2, 3, 4, 5, 6, 7, 8, 9 oder 10 Kohlenstoffatome), mehr bevorzugt 2 bis 8 Kohlenstoffatome, wie 2 bis 6 Kohlenstoffatome oder 2 bis 4 Kohlenstoffatome. Folglich umfasst in einer bevorzugten Ausführungsform die Alkinylengruppe 2 bis 14 (z.B. 2 bis 10) Kohlenstoffatome und 1, 2, 3, 4, 5, 6 oder 7 (z.B. 1, 2, 3, 4 oder 5 (vorzugsweise 1, 2 oder 3)) Kohlenstoff-Kohlenstoff-Dreifachbindungen, mehr bevorzugt umfasst sie 2 bis 8 Kohlenstoffatome und 1, 2, 3 oder 4 (vorzugsweise 1 oder 2) Kohlenstoff-Kohlenstoff-Dreifachbindungen, wie 2 bis 6 Kohlenstoffatome und 1, 2 oder 3 Kohlenstoff-Kohlenstoff-Dreifachbindungen oder 2 bis 4 Kohlenstoffatome und 1 oder 2 Kohlenstoff-Kohlenstoff-Dreifachbindungen. Beispielhafte Alkinylengruppen beinhalten Ethin-1,2-diyl, 1-Propin-1,3-diyl, 1-Propin-3,3-diyl, 1-Butin-1,3-diyl, 1-Butin-1,4-diyl, 1-Butin-3,4-diyl, 2-butin-1,4-diyl und dergleichen. Falls eine Alkinylengruppe an ein Stickstoffatom gebunden ist, so kann die Dreifachbindung nicht alpha-ständig zu dem Stickstoffatom sein.

Die Begriffe "Arylrest", "Arylgruppe", "aromatischer Ring" und "Aryl" werden hierin austauschbar verwendet und betreffen einen monovalenten Rest eines aromatischen cyclischen Kohlenwasserstoffs (d.h. eines Aromaten). Vorzugsweise enthält die Arylgruppe 3 bis 14 (z.B. 5, 6, 7, 8, 9 oder 10, wie 5, 6 oder 10) Kohlenstoffatome, die in einem Ring (z.B. Phenyl) oder zwei oder mehr kondensierten Ringen (z.B. Naphthyl) angeordnet sein können. Beispielhafte Arylgruppen beinhalten Cyclopropenylium, Cyclopentadienyl, Phenyl, Indenyl, Naphthyl, Azulenyl, Fluorenyl, Anthryl und Phenanthryl. Vorzugsweise ist die Arylgruppe ein monocyclischer Ring mit 6 Kohlenstoffatomen oder ein aromatisches bicyclisches Ringsystem mit 10 Kohlenstoffatomen. Bevorzugte Beispiele sind Phenyl and Naphthyl. Aryl umfasst vorzugsweise keine Fullerene.

Die Begriffe "Heteroarylrest", "Heteroarylgruppe", "heteroaromatischer Ring" und "Heteroaryl" werden hierin austauschbar verwendet und betreffen eine wie vorstehend definierte Arylgruppe, in der ein oder mehrere Kohlenstoffatome in der Arylgruppe durch Heteroatome (wie O, S oder N) ersetzt sind. Vorzugsweise ist eine Heteroarylgruppe ein fünf- oder sechsgliedriger aromatischer monocyclischer Ring, wobei 1, 2 oder 3 Kohlenstoffatome durch das gleiche Heteroatom aus O, S oder N oder durch verschiedene Heteroatome, ausgewählt aus der Gruppe O, S und N, ersetzt sind. Alternativ kann eine Heteroarylgruppe ein aromatisches bicyclisches oder tricyclisches Ringsystem sein, wobei 1, 2, 3, 4 oder 5 Kohlenstoffatome durch das gleiche Heteroatom aus O, S oder N oder durch verschiedene Heteroatome, ausgewählt aus der Gruppe O, S und N, ersetzt sind. Vorzugsweise ist die maximale Anzahl an O-Atomen in jedem Ring der Heteroarylgruppe 1, die maximale Anzahl an S-Atomen in jedem Ring der Heteroarylgruppe ist 1 und die maximale Gesamtanzahl an O- und S-Atomen in jedem Ring der Heteroarylgruppe ist 2. Beispielsweise umfasst eine 3- bis 14-gliedrige Heteroarylgruppe monocyclische Heteroarylgruppen (z.B. 5- oder 6-gliedrig), bicyclische Heteroarylgruppen (z.B. 9- oder 10-gliedrig) und tricyclische Heteroarylgruppen (z.B. 13- oder 14-gliedrig). Beispielhafte Heteroarylgruppen beinhalten Furanyl, Thienyl, Oxazolyl, Isoxazolyl, Oxadiazolyl, Pyrrolyl, Imidazolyl, Pyrazolyl, Triazolyl, Tetrazolyl, Thiazolyl, Isothiazolyl, Thiadiazolyl, Pyridyl, Pyrimidinyl, Pyrazinyl, Triazinyl, Benzofuranyl, Indolyl, Isoindolyl, Benzothienyl, 1H-Indazolyl, Benzimidazolyl, Benzoxazolyl, Indoxazinyl, Benzisoxazolyl, Benzothiazolyl, Benzisothiazolyl, Benzotriazolyl, Chinolinyl, Isochinolinyl, Benzodiazinyl, Chinoxalinyl, Chinazolinyl, Benzotriazinyl, Pyridazinyl, Phenoxazinyl, Thiazolopyridinyl, Pyrrolothiazolyl, Phenothiazinyl, Isobenzofuranyl, Chromenyl, Xanthenyl, Phenoxathiinyl, Pyrrolizinyl, Indolizinyl, Indazolyl, Purinyl, Chinolizinyl, Phthalazinyl, Naphthyridinyl, Cinnolinyl, Pteridinyl, Carbazolyl, Phenanthridinyl, Acridinyl, Perimidinyl, Phenanthrolinyl, Phenazinyl, Oxazolopyridinyl, Isoxazolopyridinyl, Pyrrolooxazolyl und Pyrrolopyrrolyl. Beispielhafte 5- oder 6-gliedrige Heteroarylgruppen beinhalten Furanyl, Thienyl, Oxazolyl, Isoxazolyl, Oxadiazolyl, Pyrrolyl, Imidazolyl, Pyrazolyl, Triazolyl, Thiazolyl, Isothiazolyl, Thiadiazolyl, Pyridyl, Pyrimidinyl, Pyrazinyl, Triazinyl und Pyridazinyl.

Die Begriffe "Cycloalkylrest", "Cycloalkylgruppe", "cycloaliphatisch" und "Cycloalkyl" werden hierin austauschbar verwendet und betreffen eine cyclische nicht-aromatische Version von "Alkylgruppe" oder "Alkenylgruppe" mit vorzugsweise 3 bis 14 Kohlenstoffatomen, wie 3 bis 12 oder 3 bis 10 Kohlenstoffatomen, d.h. 3, 4, 5, 6, 7, 8, 9, 10, 11, 12, 13 oder 14 Kohlenstoffatomen (wie 3, 4, 5, 6, 7, 8, 9 oder 10 Kohlenstoffatomen), mehr bevorzugt 3 bis 7 Kohlenstoffatomen. Beispielhafte Cycloalkylgruppen beinhalten Cyclopropyl, Cyclopropenyl, Cyclobutyl, Cyclobutenyl, Cyclopentyl, Cyclopentenyl, Cyclohexyl, Cyclohexenyl, Cycloheptyl, Cycloheptenyl, Cyclooctyl, Cyclooctenyl, Cyclononyl, Cyclononenyl, Cylcodecyl, Cylcodecenyl und Adamantyl. Der Begriff "Cycloalkyl" soll auch bicyclische und tricyclische Versionen davon betreffen. Falls bicyclische Ringe ausgebildet werden, ist es bevorzugt, dass die entsprechenden Ringe miteinander an zwei benachbarten Kohlenstoffatomen verbunden sind; alternativ können jedoch die zwei Ringe über das gleiche Kohlenstoffatom verbunden sein, d.h. sie bilden ein Spiroringsystem aus oder sie bilden ein verbrückendes Ringsystem aus. Bevorzugte Beispiele von Cycloalkylgruppen beinhalten C₃-C₈-Cycloalkyl, insbesondere Cyclopropyl, Cyclobutyl, Cyclopentyl, Cyclohexyl, Cycloheptyl, Cyclooctyl, Spiro[3,3]heptyl, Spiro[3,4]octyl, Spiro[4,3]octyl, Bicyclo[4.1.0]heptyl, Bicyclo[3.2.0]heptyl, Bicyclo[2.2.1]heptyl, Bicyclo[2.2.2]octyl, Bicyclo[5.1.0]octyl und Bicyclo[4.2.0]octyl. Cycloalkyl umfasst vorzugsweise keine Fullerene.

Die Begriffe "Cycloalkylenrest", "Cycloalkylengruppe" und "Cycloalkylen" werden hierin austauschbar verwendet und betreffen eine wie hierin vorstehend definierte Cycloalkylgruppe, in der ein weiteres Wasserstoffatom entfernt wurde, was zu einem divalenten Rest führt. In bestimmten Ausführungsformen ist die Cycloalkylengruppe (i) monocyclische oder polycyclisch (wie bi- oder tricyclisch) und/oder (ii) 3- bis 14-gliedrig (d.h. 3-, 4-, 5-, 6-, 7-, 8-, 9-, 10-, 11-, 12-, 13- oder 14-gliedrig, wie 3- bis 12-gliedrig oder 3- bis 10-gliedrig). In einer Ausführungsform ist die Cycloalkylengruppe eine mono-, bi- oder tricyclische 3- bis 14-gliedrige (d.h. 3-, 4-, 5-, 6-, 7-, 8-, 9-, 10-, 11-, 12-, 13- oder 14-gliedrige, wie 3- bis 12-gliedrige oder 3- bis 10-gliedrige) Cycloalkylengruppe. Der Begriff "Cycloalkylengruppe" soll auch teilweise oder vollständig hydrierte Formen (wie Dihydro-, Tetrahydro- oder Perhydroformen) der vorstehend beschriebenen Arylgruppen (vorzugsweise teilweise oder vollständig hydrierte Formen der vorstehend beschriebenen mono- oder bicyclischen Arylgruppen) umfassen, bei denen ein weiteres Wasserstoffatom entfernt wurde, was zu einem divalenten Rest führt. Folglich kann erfindungsgemäß eine Cycloalkylengruppe gesättigt oder ungesättigt sein (d.h. sie kann eine oder mehrere Doppelbindungen in dem Ring enthalten), aber sie kann nicht aromatisch sein. Beispielhafte Cycloalkylengruppen beinhalten Cyclohexylen, Cycloheptylen, Cyclopropylen, Cyclobutylen, Cyclopentylen, Cyclooctylen, Cyclohexenylen, Cycloheptenylen, Cyclopropenylen, Cyclobutenylen, Cyclopentenylen, Cyclooctenylen, Cicyclo[3.2.1]octylen, Bicyclo[3.2.2]nonylen und Adamantanylen (d.h. Tricyclo[3.3.1.1^{3,7}]decandiyl).

Die Begriffe "Heterocyclylrest", "Heterocyclylgruppe", "heterocyclischer Ring" und "Heterocyclyl" werden hierin austauschbar verwendet und betreffen eine wie hierin vorstehend definierte Cycloalkylgruppe, in der 1, 2, 3 oder 4 Kohlenstoffatome in der Cycloalkylgruppe durch Heteroatome (wie diejenigen, ausgewählt aus der Gruppe, bestehend aus O, S und N) ersetzt sind. Falls ein Ring der Heterocyclylgruppe lediglich eine Art an Heteroatom enthält, kann die maximale Anzahl an diesem Heteroatom in dem Ring der Heterocyclylgruppe wie folgt sein: 2 O-Atome (vorzugsweise 1 O-Atom); 2 S-Atome (vorzugsweise 1 S-Atom); und 4 N-Atome. Falls ein Ring der Heterocyclylgruppe zwei oder mehr Arten an Heteroatomen enthält, kann die maximale Anzahl dieser Heteroatome in dem Ring der Heterocyclylgruppe wie folgt sein: 1 O-Atom; 1 S-Atom; und/oder 2 N-Atome (vorzugsweise 1 N-Atom), wobei die maximale Gesamtanzahl von Heteroatomen in dem Ring der Heterocyclylgruppe 4 ist und die maximale Gesamtanzahl jedes Heteroatoms in dem Ring der Heterocyclylgruppe wie folgt ist: 1 O-Atom; 1 S-Atom; und/oder 1 oder 2 N-Atome. In einer Ausführungsform werden die Heteroatome der Heterocyclylgruppe ausgewählt aus der Gruppe, bestehend aus O, S und N. Vorzugsweise ist in dieser Ausführungsform in jedem Ring der Heterocyclylgruppe die maximale Anzahl an O-Atomen 1, die maximale Anzahl an S-Atomen ist 1 und die maximale Gesamtanzahl an O- und S-Atomen ist 2. Beispielsweise umfasst eine 3- bis 14-gliedrige Heterocyclylgruppe monocyclische Heterocyclylgruppen (z.B. 3-, 4-, 5-, 6- oder 7-gliedrig), bicyclische Heterocyclylgruppen (z.B. 8-, 9- oder 10-gliedrig) und tricyclische Heterocyclylgruppen (z.B. 12-, 13- oder 14-gliedrig). Der Begriff "Heterocyclylgruppe" soll auch teilweise oder vollständig hydrierte Formen (wie Dihydro-, Tetrahydro-, Hexahydro-, Octahydro-, Decahydro-, Dodecahydro-, etc. oder Perhydroformen) der vorstehend beschriebenen Heteroarylgruppen umfassen. Beispielhafte Heterocyclylgruppen beinhalten Morpholino, Isochromanyl, Chromanyl, Pyrrolidinyl, Imidazolidinyl, Pyrazolidinyl, Piperidinyl, Piperazinyl, Indolinyl, Isoindolinyl, Triazininanyl, Di- und Tetrahydrofuranyl, Di- und Tetrahydrothienyl, Di- und Tetrahydrooxazolyl, Di- und Tetrahydroisoxazolyl, Di- und Tetrahydrooxadiazolyl, Dihydropyrrolyl, Dihydroimidazolyl, Dihydropyrazolyl, Di- und Tetrahydrotriazolyl, Di- und Tetrahydrothiazolyl, Di- und Tetrahydrothiazolyl, Di- und Tetrahydrothiadiazolyl, Di- und Tetrahydropyridyl.

Die Begriffe "Heterocyclylenrest", "Heterocyclylengruppe" und "Heterocyclylen" werden hierin austauschbar verwendet und betreffen eine wie hierin vorstehend definierte Heterocyclylgruppe, die mindestens ein Ringheteroatom (z.B. ausgewählt aus der Gruppe, bestehend aus O, S und N) enthält und in der ein weiteres Wasserstoffatom entfernt wurde, was zu einem divalenten Rest führt. In einer Ausführungsform werden die Heteroatome der Heterocyclylengruppe ausgewählt aus der Gruppe, bestehend aus O, S und N. Vorzugsweise ist in jedem Ring der Heterocyclylengruppe die maximale Anzahl an O-Atomen 1, die maximale Anzahl an S-Atomen ist 1 und die maximale Gesamtanzahl an O- und S-Atomen ist 2. Die Heterocyclylengruppe kann monocyclisch oder polycyclisch (wie bi- oder tricyclisch) sein. In einer Ausführungsform ist die Heterocyclylengruppe eine mono-, bi- oder tricyclische 4- bis 14-gliedrige (d.h. 4-, 5-, 6-, 7-, 8-, 9-, 10-, 11-, 12-, 13- oder 14-gliedrige, wie 4- bis 12-gliedrige oder 4- bis 10-gliedrige) Heterocyclylengruppe. Der Begriff "Heterocyclylengruppe" soll auch teilweise oder vollständig hydrierte Formen (wie Dihydro-, Tetrahydro-, Hexahydro-, Octahydro-, Decahydro-, Dodecahydro-, etc. oder Perhydroformen) der vorstehend beschriebenen Heteroarylgruppen (vorzugsweise teilweise oder vollständig hydrierte Formen der vorstehend beschriebenen mono-, bi- oder tricyclischen Heteroarylgruppen) umfassen, bei denen ein weiteres Wasserstoffatom entfernt wurde, was zu einem divalenten Rest führt. Folglich kann erfindungsgemäß eine Heterocyclylengruppe gesättigt oder ungesättigt sein (d.h. sie kann eine oder mehrere Doppelbindungen in dem Ring enthalten), aber sie kann nicht aromatisch sein.

Der Begriff "polycyclisch", wie hierin verwendet, bedeutet, dass die Struktur zwei oder mehr (wie 2, 3, 4, 5, 6, 7, 8, 9 oder 10), vorzugsweise 2, 3, 4 oder 5, mehr bevorzugt 2, 3 oder 4, Ringe aufweist. Folglich umfasst der Begriff "polycyclisch" nicht monocyclische Strukturen, d.h. Strukturen, die lediglich einen Ring enthalten. Beispiele polycyclischer Gruppen sind kondensierte Strukturen (wie Naphthyl oder Anthryl), Spiroverbindungen, Ringe, die über Einfach- oder Doppelbindungen verbunden sind (wie Biphenyl), und verbrückte Strukturen (wie Bornyl). Beispielhafte polycyclische Strukturen sind diejenigen Aryl-, Heteroaryl-, Cycloalkyl- und Heterocyclylgruppen, die vorstehend spezifiziert sind und mindestens zwei Ringe aufweisen.

Unter "funktionelle Gruppe" einer Verbindung wird erfindungsgemäß eine Atomgruppe der Verbindung verstanden, die die Stoffeigenschaften und das Reaktionsverhalten der Verbindung, die die funktionelle Gruppe trägt, maßgeblich bestimmt. Verbindungen, die die gleichen funktionellen Gruppen tragen, werden oft zu Stoffklassen, die ähnliche Eigenschaften aufweisen, zusammengefasst. Beispiele funktioneller Gruppen beinhalten Acyl- (insbesondere gesättigt (wie Acetyl-)), Aldehyd-, Alkyl-, Alkenyl- (z.B. Vinyl-), Alkinyl-, Aryl-, Heteroaryl-, Heterocyclyl-, Cycloalkyl-, Alkoxysilyl-, Alkylsulfonyl-, Amino-, Azido-, Carboxyloxy- (d.h. R-C(O)O-, worin R ein organischer monovalenter Rest ist), Carboxyl- (-COOH), Hydroxy-, Keto-, Mercapto-, Sulfonyl-, Ureidogruppen und Halogenatome.

Die Begriffe "Halogenatom", "Halogen" und "Halo" werden hierin austauschbar verwendet und betreffen Fluoratom, Chloratom, Bromatom oder Iodatom.

Der Begriff "Azido" betrifft die Gruppe -N₃.

Der Begriff "Aminogruppe" oder "Amino" betrifft die Gruppe -NRR', worin R und R' unabhängig voneinander Wasserstoffatom oder ein organischer Rest sind und gleich oder verschieden sein können. Falls die Aminogruppe in einem Molekül (wie einem Bindemittel) mit einer funktionellen Gruppe (wie einer Isocyanatgruppe) eines anderen Moleküls (wie einem Härter) reagieren soll, ist es bevorzugt, dass die Aminogruppe die Formel -NHR aufweist. Ein Polyamin betrifft eine Verbindung, die zwei oder mehr Aminogruppen aufweist.

Der Begriff "Isocyanatgruppe" oder "Isocyanato" betrifft die Gruppe -N=C=O. Ein Polyisocyanat betrifft eine organische Verbindung, die zwei oder mehr Isocyanatgruppen aufweist.

Der Begriff "Hydroxygruppe" betrifft die Gruppe -OH. Ein Polyalkohol betrifft eine organische Verbindung, die zwei oder mehr OH-Gruppen aufweist.

Der Begriff "Ureidogruppe" betrifft den Harnstoff-Rest -NH-C(O)-NH₂. Demzufolge können Ureidoverbindungen als einseitig substituierte Harnstoffverbindungen bezeichnet werden.

Der Begriff "Allophanatgruppe" betrifft die Gruppe -O-C(O)-NR-C(O)-NH-, worin R ein H-Atom oder ein organischer Rest (insbesondere ein organischer Rest, der sich durch ist Entfernung einer Isocyanatgruppe von einem Polyisocyanat ergibt) ist.

Der Begriff "Isophorondiisocyanat" betrifft die Verbindung 1-Isocyanato-3-isocyanatomethyl-3,5,5-trimethylcyclohexan.

Der Begriff "Dimer" betrifft eine Verbindung, die zwei Untereinheiten (sog. Monomere) aufweist, die gleich oder unterschiedlich sein können. Der Begriff "Trimer" betrifft eine Verbindung, die drei Untereinheiten (sog. Monomere) aufweist, die gleich oder unterschiedlich sein können.

Der Begriff "aromatisch", wie hierin im Zusammenhang mit organischen Verbindungen verwendet, bedeutet, dass das gesamte Molekül aromatisch sein muss. Beispielsweise wird, falls eine monocyclische Arylgruppe hydriert wird (entweder teilweise oder vollständig), die sich ergebende hydrierte cyclische Struktur erfindungsgemäß als Cycloalkyl klassifiziert. In ähnlicher Weise wird, falls eine bi- oder polycyclische Arylgruppe (wie Naphthyl) hydriert wird, die sich ergebende hydrierte bi- oder polycyclische Struktur (wie 1,2-Dihydronaphthyl) erfindungsgemäß als Cycloalkyl klassifiziert (selbst wenn ein Ring, wie in 1,2-Dihydronaphthyl, noch aromatisch ist). Eine ähnliche Unterscheidung wird erfindungsgemäß zwischen Heteroaryl und Heterocyclyl gemacht. Beispielsweise wird Indolinyl, d.h. eine Dihydrovariante von Indolyl, erfindungsgemäß als Heterocyclyl klassifiziert, da lediglich ein Ring der bicyclischen Struktur aromatisch ist und ein Ringatom ein Heteroatom ist.

Der Begriff "ungesättigt" betrifft eine organische Verbindung oder einen entsprechenden organischen Rest, die/der mindestens eine Kohlenstoff-Kohlenstoff-Doppel- oder -Dreifachbindung aufweist. Der Begriff "gesättigt" betrifft eine organische Verbindung oder einen entsprechenden organischen Rest, die/der keine Kohlenstoff-Kohlenstoff-Doppel- oder -Dreifachbindung aufweist und auch nicht aromatisch ist (d.h. alle Bindungen zwischen Kohlenstoffatomen in dieser Verbindung bzw. diesem Rest sind Einfachbindungen).

Der Begriff "aliphatisch", wie hierin im Zusammenhang mit organischen Verbindungen verwendet, bedeutet, dass die organische Verbindung insgesamt nicht aromatisch ist, insbesondere auch keine aromatische Teilstruktur enthält. Aliphatische organische Verbindungen können acyclisch (d.h. ringfrei oder kettenförmig (linear oder verzweigt)) oder cyclisch (sog. alicyclische Verbindungen) sein. Sie können gesättigt oder ungesättigt sein und/oder sie können Heteroatome aufweisen.

Der Ausdruck "teilweise hydrierte Form" einer ungesättigten Verbindung oder Gruppe, wie hierin verwendet, bedeutet, dass ein Teil der Ungesättigtheit entfernt wurde, formal durch Addition von Wasserstoff an die anfangs ungesättigte Verbindung oder Gruppe, ohne alle ungesättigten Reste zu entfernen. Der Ausdruck "vollständig hydrierte Form" einer ungesättigten Verbindung oder Gruppe wird hierin mit dem Ausdruck "perhydro" verwendet und bedeutet, dass die gesamte Ungesättigtheit entfernt wurde, formal durch Addition von Wasserstoff an die anfangs ungesättigte Verbindung oder Gruppe. Beispielsweise beinhalten teilweise hydrierte Formen einer 5-gliedrigen Heteroarylgruppe (mit Doppelbindungen in dem Ring, wie Furan) Dihydroformen der 5-gliedrigen Heteroarylgruppe (wie 2,3-Dihydrofuran oder 2,5-Dihydrofuran), wohingegen die Tetrahydroform der 5-gliedrigen Heteroarylgruppe (z.B. Tetrahydrofuran, d.h. THF) eine vollständig hydrierte Form (oder Perhydroform) der 5-gliedrigen Heteroarylgruppe ist. In ähnlicher Weise beinhalten für eine 6-gliedrige Heteroarylgruppe mit 3 Doppelbindungen in dem Ring (wie Pyridyl) teilweise hydrierte Formen Di- und Tetrahydroformen (wie Di- und Tetrahydropyridyl), wohingegen die Hexahydroform (wie Piperidinyl in dem Fall der Heteroarylgruppe Pyridyl) die vollständig hydrierte Form (oder Perhydroform) der 6-gliedrigen Heteroarylgruppe ist.

Der Begriff "optional" oder "gegebenenfalls", wie hierin verwendet, bedeutet, dass das darauffolgende Ereignis, der darauffolgende Umstand oder die darauffolgende Bedingung auftreten oder nicht auftreten kann und dass die vorliegende Beschreibung Fälle, bei denen das Ereignis, der Umstand oder die Bedingung auftritt, und Fälle, bei denen das Ereignis, der Umstand oder die Bedingung nicht auftritt, enthält.

Das Isocyanat-Äquivalentgewicht einer Verbindung ist diejenige Menge der Verbindung (in g), die 1 mol Isocyanatgruppen enthält. Der NCO-Gehalt einer Verbindung ist der Prozentsatz, der sich durch den Quotienten aus dem Gewicht der Isocyanatgruppe(n) der Verbindung durch das Gesamtgewicht der Verbindung ergibt (d.h. ohne Berücksichtigung weiterer Bestandteile (wie Lösungsmittel), die anwesend sein können, wenn die Verbindung beispielsweise als Lösung oder Dispersion in einem Lösungsmittel vorliegt). Der NCO-Gehalt kann z.B. durch die Norm DIN EN ISO 11909 bestimmt werden.

Der Begriff "Farbmittel" umfasst erfindungsgemäß jegliche farbgebenden Substanzen und beinhaltet insbesondere "Pigmente", d.h. farbgebende Substanzen, die im Anwendungsmedium unlöslich sind, und "Farbstoff', d.h. farbgebende Substanzen, die im Anwendungsmedium löslich sind. Farbmittel können anorganisch oder organisch sein und können nach dem Farbeindruck bunt (z.B. blau oder gelb) oder unbunt (z.B. schwarz, weiß oder grau) sein.

Der Begriff "Festkörper" betrifft den festen Rest, der nach Entfernung aller flüchtigen Bestandteile (insbesondere aller VOCs) von einem Gemisch von Substanzen (wie einer erfindungsgemäßen Beschichtungszusammensetzung), evtl. nach Aushärtung, zurückbleibt.

Die Topfzeit ist diejenige Zeitspanne, in der ein Ansatz (z.B. eine erfindungsgemäße Beschichtungszusammensetzung) nach dem Mischen aller Bestandteile verarbeitbar bleibt. Verarbeitbar bedeutet in diesem Zusammenhang, dass der Ansatz (insbesondere eine erfindungsgemäße Beschichtungszusammensetzung) auf ein Substrat (insbesondere eine Oberfläche) aufgebracht werden kann, z.B. noch so flüssig ist, um auf ein Substrat gespritzt werden zu können.

Der Begriff "Unterkreidung" betrifft den Abbau einer unteren Schicht einer Mehrschichtbeschichtung (z.B. durch Abbau des in der unteren Schicht vorhandenen Bindemittels), wodurch es zur Ablösung der über der unteren Schicht liegenden Schichten kommen kann.

Unter "Beschichtungszusammensetzung" wird erfindungsgemäß eine Zusammensetzung verstanden, die dazu geeignet ist, dass sie, nach Mischen der Bestandteile der Beschichtungszusammensetzung und gegebenenfalls weiterer Verbindungen, auf ein Substrat (insbesondere eine Oberfläche) aufgetragen werden kann (wodurch somit eine Beschichtung auf dem Substrat ausgebildet wird). Insbesondere kann die Beschichtungszusammensetzung bis zum Mischen ihrer Bestandteile in mindestens 2 Komponenten vorliegen (sogenannte 2- oder Mehrkomponentenzusammensetzung), die räumlich voneinander getrennt sind (z.B. in mindestens 2 voneinander getrennten Behältern). Vorzugsweise umfasst eine Komponente ein Bindemittel, insbesondere die mindestens eine Polyaminverbindung der Formel (I) (oder mehrere Bindemittel, falls mindestens zwei Bindemittel (insbesondere mindestens zwei Polyaminverbindungen der Formel (I)) verwendet werden), gegebenenfalls in Kombination mit einem oder mehreren Rheologiemodifizierungsmitteln, einem oder mehreren Stabilisatoren (insbesondere Lichtschutzmitteln) und/oder einem oder mehreren Lösungsmitteln (und gegebenenfalls einem oder mehreren Farbmitteln), und die andere Komponente umfasst die Härter (insbesondere das auf Isophorondiisocyanat basierende Polyisocyanat und das Allophanat-Multimer eines aliphatischen Polyisocyanats), gegebenenfalls in Kombination mit einem oder mehreren Lösungsmitteln. Weiterhin können in einer Komponente oder in allen Komponenten ein oder mehrere Füllstoffe, ein oder mehrere Flammschutzmittel und/oder ein oder mehrere Trocknungsmittel vorhanden sein.

Der Begriff "im Wesentlichen frei von X" bedeutet erfindungsgemäß, dass ein Gemisch (z.B. ein Bestandteil einer Zusammensetzung, eine Komponente einer Zusammensetzung oder die Zusammensetzung als solche) derart frei von X sein soll, wie es praktisch und realistisch machbar ist. Beispielsweise kann, wenn das Gemisch im Wesentlichen frei von X ist, die Menge an X in dem Gemisch weniger als 1 Gew.-%, (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen aus das Gesamtgewicht des Gemisches, betragen. Wenn die erfindungsgemäße Beschichtungszusammensetzung (oder ein Bestandteil davon oder eine Komponente davon) im Wesentlichen frei von Styrol-Verbindungen sein soll, ist es bevorzugt, dass die Menge an Styrol-Verbindungen in der Beschichtungszusammensetzung (bzw. dem Bestandteil oder der Komponente) weniger als 1 Gew.-%, (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen aus das Gesamtgewicht der Beschichtungszusammensetzung (bzw. des Bestandteils oder der Komponente), beträgt. Wenn die erfindungsgemäße Beschichtungszusammensetzung (oder ein Bestandteil davon oder eine Komponente davon) im Wesentlichen frei von ungesättigten Polyestern sein soll, ist es bevorzugt, dass die Menge an ungesättigten Polyestern in der Beschichtungszusammensetzung (bzw. dem Bestandteil oder der Komponente) weniger als 1 Gew.-%, (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen aus das Gesamtgewicht der Beschichtungszusammensetzung (bzw. des Bestandteils oder der Komponente), beträgt. Wenn die erfindungsgemäße Beschichtungszusammensetzung (oder ein Bestandteil davon oder eine Komponente davon) im Wesentlichen frei von Wasser sein soll, ist es bevorzugt, dass die Menge an Wasser in der Beschichtungszusammensetzung (bzw. dem Bestandteil oder der Komponente) weniger als 1 Gew.-%, (z.B. weniger als 0,5 Gew.-%, weniger als 0,4 Gew.-%, weniger als 0,3 Gew.-%, weniger als 0,2 Gew.-%, weniger als 0,1 Gew.-%, weniger als 0,09 Gew.-%, weniger als 0,08 Gew.-%, weniger als 0,07 Gew.-%, weniger als 0,06 Gew.-%, weniger als 0,05 Gew.-%, weniger als 0,04 Gew.-%, weniger als 0,03 Gew.-%, weniger als 0,02 Gew.-%, weniger als 0,01 Gew.-%, weniger als 0,005 Gew.-%, weniger als 0,001 Gew.-%), bezogen aus das Gesamtgewicht der Beschichtungszusammensetzung (bzw. des Bestandteils oder der Komponente), beträgt.

Unter einer "Styrol-Verbindung" wird erfindungsgemäß eine jegliche Verbindung verstanden, die (i) Styrol (d.h. Phenylethen oder Vinylbenzol) oder eine halogenierte Form davon ist, (ii) Styrol oder eine halogenierte Form davon freisetzen kann und/oder (iii) Styrol und/oder eine halogenierte Form davon als Teilstruktur (z.B. als Monomer in einem entsprechenden Polymer) umfasst.

Unter einem "ungesättigten Polyester" (oder ungesättigtem Polyesterharz, kurz UP) wird erfindungsgemäß eine Verbindung verstanden, die mindestens eine Kohlenstoff-Kohlenstoff-Doppel-oder -Dreifachbindung (insbesondere mindestens eine Kohlenstoff-Kohlenstoff-Doppelbindung) sowie mindestens zwei Estergruppen aufweist. Beispiele für ungesättigte Polyester beinhalten Reaktionsprodukte von ungesättigten Dicarbonsäuren (z.B. Maleinsäureanhydrid) und Di- oder Polyolen (z.B. Glykole oder Glycerin).

Der Begriff "Aufbringen" bedeutet erfindungsgemäß, dass eine Substanz (z.B. eine erfindungsgemäße Beschichtungszusammensetzung) auf ein Substrat (insbesondere auf zumindest einen Teil der Oberfläche des Substrates) aufgetragen wird. Das Aufbringen kann nach verschiedenen Verfahren erfolgen, z.B. durch Filmbildung aus flüssigen Zuständen (d.h. aus Lösungen, Dispersionen oder Schmelzen z.B. durch Spritzen, Rollen, Streichen, Gießen, Walzen, Tauchen, Drucken oder ein anderes Standardverfahren), durch Pulverbeschichtung oder durch *in*-*situ*-Polymerisation oder Plasmapolymerisation. Das Aufbringen kann auch ein oder mehrere zeitlich vorausgehende Schritte umfassen, wie z.B. ein Reinigen der Substratoberfläche (d.h. das Entfernen von Verunreinigungen auf der Substratoberfläche), das Aktivieren der Substratoberfläche und/oder das Ausbilden von haftvermittelnden Schichten. Die Reinigung von Substratoberflächen kann beispielweise mechanisch (z.B. durch Wischen, Schleifen, Polieren, Bürsten und/oder Sandstrahlen), thermisch (z.B. durch Flammstrahlen) und/oder chemisch (z.B. durch Beizen, Reinigen mit Lösungsmittel oder wässrigem Reiniger) erfolgen. Das Aktivieren einer Substratoberfläche, insbesondere einer Metalloberfläche, kann beispielsweise durch Dekapieren (Aluminium), Phosphatieren, Zirconiumdioxid-Abscheidung, Phosphorsäure-Anodisieren, Chromat-freie Verfahren und/oder Nachpassivieren durchgeführt werden.

Unter "Aushärten" wird erfindungsgemäß eine Serie von Vorgängen, Reaktionsabläufen, Umwandlungen usw. verstanden, die mit dem Übergang einer verarbeitbaren, d.h. verformbaren (insbesondere flüssigen) Zusammensetzung (insbesondere der erfindungsgemäßen Beschichtungszusammensetzung) in einen festen ("harten"), am Substrat haftenden Film einhergehen. Aushärten kann eine physikalische Härtung (z.B. Trocknung durch Lösungsmittelabgabe und/oder Vernetzung durch Verschlaufungen und Koaleszenzphänomene) und/oder eine chemische Härtung (z.B. die Ausbildung eines dreidimensionalen Netzwerkes infolge von chemische Reaktionen) beinhalten. Beispiele chemischer Härtung sind die oxidative Härtung (d.h. unter Einfluss von Luftsauerstoff erfolgt eine Verknüpfung von Molekülen über Sauerstoff-Brücken an aliphatische Doppelbindungen), die Polykondensation (d.h. die Vernetzung unter Abspaltung niedermolekularer Verbindungen (wie Wasser oder Alkohol); evtl. auch Selbstvernetzung von funktionellen Gruppen, die erst nach Hydrolyse infolge von Feuchtigkeit entstehen), die Polymerisation (d.h. Vernetzung von Monomeren und/oder Oligomeren mit aliphatischen Doppelbindungen) und die Polyaddition (d.h. abspaltproduktfreie Umsetzung der in dem Bindemittel oder den Bindemitteln vorhandenen funktionellen Gruppen (z.B. Aminogruppen) mit den in den Härtern vorhandenen funktionellen Gruppen (z.B. Isocyanatgruppen), wobei insbesondere das/die Bindemittel und die Härter vor einem Vermischen in einem 2- oder Mehrkomponentensystem vorliegen.

Der Begriff "VOC" bedeutet flüchtige organische Verbindungen ("volatile organic compounds", VOC) und ist ein Sammelbegriff für organische Stoffe, die bei atmosphärischen Bedingungen flüchtig sind (d.h. einen signifikanten Dampfdruck aufweisen). Typischerweise ist der Siedepunkt der VOC kleiner als 260°C (wie kleiner als 250°C bis 260°C).

Der Begriff "Deckvermögen" im Zusammenhang mit einer Beschichtungszusammensetzung oder der daraus resultierenden Beschichtung soll die Eigenschaft der Beschichtungszusammensetzung bzw. der Beschichtung bedeuten, den Untergrund (wie eine Oberfläche, auf die die Beschichtungszusammensetzung aufgetragen wird bzw. auf der die Beschichtung haftet) zu überdecken. Das Deckvermögen kann dadurch bestimmt werden, dass eine Beschichtung mit definierter Schichtdicke auf einer Kontrastkarte (die insbesondere schwarze und weiße Zonen aufweist) erzeugt und der Farbtonunterschied ermittelt wird. Der Begriff "Transparenz" im Zusammenhang mit einer Beschichtungszusammensetzung oder der daraus resultierenden Beschichtung soll die Eigenschaft der Beschichtungszusammensetzung bzw. der Beschichtung bedeuten, das Licht möglichst wenig zu streuen. D.h. bei Auftragung auf einen Oberfläche soll die Farbänderung möglichst gering sein. Eine Bestimmung des Deckvermögens bzw. der Transparenz ist in Anlehnung an die Normen DIN 55987 und EN 13300 möglich. Zum Beispiel kann zur Bestimmung des Deckvermögens einer nicht ganz deckenden Beschichtung die Schichtdicke d₀ ermittelt werden, die erforderlich ist, um den Farbtonunterschied auf einer Kontrastkarte auf einen vorbestimmten Wert zu vermindern. Der Deckvermögenswert D ist der reziproke Wert von d₀.

### Bestandteile der Beschichtungszusammensetzung

### Bindemittelkomponente (A)

Die erfindungsgemäße Beschichtungszusammensetzung enthält als Bestandteil (A) eine Bindemittelkomponente, die mindestens eine Polyaminverbindung der nachstehenden Formel (I) umfasst: 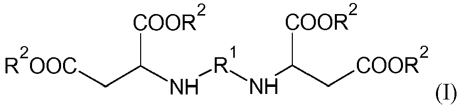 worin R¹ ein divalenter organischer Rest (insbesondere ein divalenter aliphatischer Rest, mehr bevorzugt eine divalenter aliphatischer gesättigter organischer Rest) mit bis zu 30 Kohlenstoffatomen ist und R² jeweils unabhängig ausgewählt wird aus Alkyl-, Cycloalkyl- und Arylgruppen (insbesondere Alkyl- und Cycloalkylgruppen, mehr bevorzugt Alkylgruppen).

In einer Ausführungsform weist die mindestens eine Polyaminverbindung die nachstehende Formel (Ia) auf: 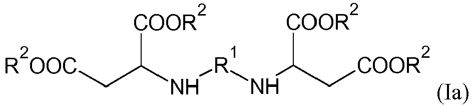 worin R² wie vorstehend definiert ist und R¹ inert gegenüber Isocyanatgruppen ist, insbesondere bei einer Temperatur, bei der die erfindungsgemäße Beschichtungszusammensetzung verwendet wird (z.B. mindestens 0°C, wie mindestens 5°C, mindestens 10°C oder mindestens 15°C, z.B. 5°C bis 100°C, wie 10°C bis 90°C, 15°C bis 80°C, 15°C bis 70°C, 20°C bis 60°C, 20 bis 50°C, 20°C bis 40°C oder 20°C bis 30°C). Bevorzugt ist R¹ ein aliphatischer organischer Rest, wie ein verzweigter oder gerader Alkylenrest mit 1 bis 20 (vorzugsweise 1 bis 15 oder 1 bis 10) Kohlenstoffatomen, ein Cycloalkylenrest mit 3 bis 20 (vorzugsweise 3 bis 15 oder 3 bis 10) Kohlenstoffatomen oder eine Kombination von Alkylen- und Cycloalkylenresten mit insgesamt 4 bis 20 (vorzugsweise 5 bis 18 oder 7 bis 17) Kohlenstoffatomen (z.B. -(C₃₋₇-Cycloalkylen)-(C₁₋₄-alkylen)-, -(C₁₋₄-Alkylen)-(C₃₋₇-cycloalkylen)- oder -(C₃₋₇-Cycloalkylen)-(C₁₋₄-alkylen)-(C₃₋₇-cycloalkylen)-, wobei die C₃₋₇-Cycloalkylengruppen gegebenenfalls jeweils unabhängig voneinander mit 1 oder mehreren (wie 1 bis zur Maximalanzahl an Wasserstoffatomen, die an der Cycloalkylengruppen gebunden sind, wie 1, 2, 3, oder 4) Substituenten (vorzugsweise ausgewählt aus C₁₋₆-Alkylgruppen) substituiert sind. Beispielsweise kann R¹, wenn es eine Kombination von Alkylen- und Cycloalkylenresten ist, eine der nachstehenden Formeln (II), (IIa) und (IIb) aufweisen: 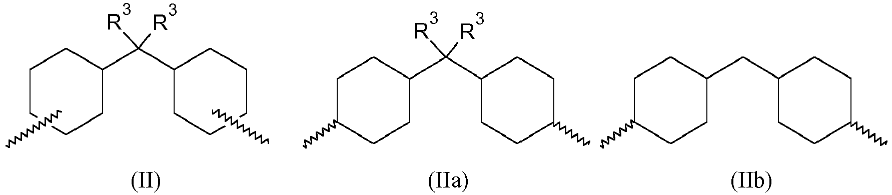 worin R³ ausgewählt wird aus H-Atom und C₁₋₆-Alkylgruppen (insbesondere H-Atom und Methylgruppe), 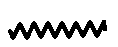 die Anbindung von R¹ an die Stickstoffatome der Formel (I) darstellt und jeder der zwei Cyclohexylringe unabhängig voneinander gegebenenfalls mit 1, 2, 3 oder 4 Substituenten (vorzugsweise 1 Substituenten), ausgewählt aus C₁₋₆-Alkylgruppen (wie C₁₋₃-Alkylgruppe, z.B. Methyl- oder Ethylgruppe, insbesondere Methylgruppe), substituiert ist. Bevorzugt kann R¹, wenn es eine Kombination von Alkylen- und Cycloalkylenresten ist, eine der vorstehenden Formeln (II), (IIa) und (IIb) aufweisen, worin R³ ausgewählt wird aus H-Atom und Methylgruppe und jeder der zwei Cyclohexylringe unabhängig voneinander gegebenenfalls mit 1 Substituenten, ausgewählt aus C₁₋₃-Alkylgruppen (wie Methyl- oder Ethylgruppe, insbesondere Methylgruppe), substituiert ist. Die Substitution der Cyclohexylringe kann symmetrisch (z.B. an den 2- und 2'-Positionen oder 3- und 3'-Positionen) oder asymmetrisch (z.B. ein Cyclohexylring ist substituiert, der andere nicht; oder ein Cyclohexylring ist an der 2-Position (oder 3-Position) substituiert, während der andere an der 3'-Position (oder 2'-Position) substituiert ist) sein. Falls die Cyclohexylringe substituiert sind, sind sie vorzugsweise symmetrisch (z.B. an den 2- und 2'-Positionen oder 3- und 3'-Positionen) mit einem Substituenten substituiert, der vorzugsweise aus C₁₋₃-Alkylgruppen (wie Methyl- oder Ethylgruppe, insbesondere Methylgruppe) ausgewählt wird. D.h. in dieser Ausführungsform weist R¹ vorzugsweise eine der nachstehenden Formeln (IIc), (IId), (IIe) und (IIf) auf: 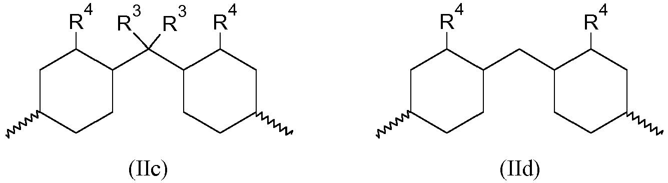 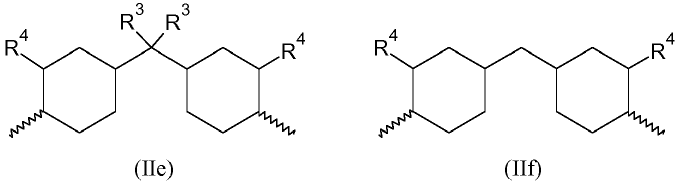 worin (für jede der Formeln (IIc) bis (IIf)) R³ wie vorstehend definiert ist (insbesondere eine C₁₋₆-Alkylgruppe (Methyl- oder Ethylgruppe, mehr bevorzugt Methylgruppe) und R⁴ identisch ist und eine C₁₋₃-Alkylgruppe (insbesondere Methylgruppe) ist. Falls die in den Formeln (II), (IIa) und (IIb) enthaltenen Cyclohexylringe nicht substituiert sind, weist R¹ vorzugsweise eine der nachstehenden Formeln (IIg) und (IIh) auf: 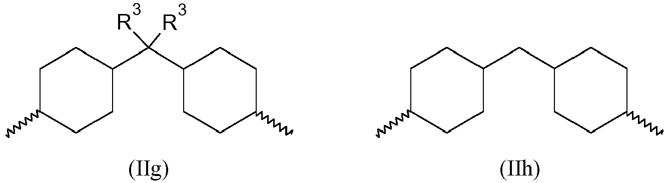 worin (für jede der Formeln (IIg) und (IIh)) R³ wie vorstehend definiert ist (insbesondere R³ eine C₁₋₆-Alkylgruppe (wie Methyl- oder Ethylgruppe, mehr bevorzugt Methylgruppe ist).

Spezifische, nicht begrenzende Beispiele für R¹ beinhalten Methylen, Ethylen (1,1- oder 1,2-Ethylen), die Propylenisomere (wie 1,1-, 1,2-, 2,2- und 1,3-Propylen), die Butylenisomere (wie 1,1-, 1,2-, 2,2-, 1,3-, 2,3-, 1,4-Butylen, 1,1-, 1,2- und 1,3-iso-Butylen), die Pentylenisomere (wie 1,1-, 1,2-, 1,3-, 1,4-, 1,5-Pentylen-, 1,1-iso-Pentylen, 1,1-sec-Pentylen, 1,1-neo-Pentylen), die Hexylenisomere (wie 1,1-, 1,2-, 1,3-, 1,4-, 1,5-, 1,6-Hexylen, 2-Methylpentan-1,5-diyl), 2,2,4-Trimethylhexan-1,6-diyl, 2,4,4-Trimethylhexan-1,6-diyl, 3,3,5-Trimethylcyclohexan-1,5-diyl, Methandiyldicyclohexan-4,4'-diyl (d.h. der Rest der Formel (IIh)), Methandiyldi(2-methylcyclohexan)-4,4'-diyl (d.h. der Rest der Formel (IId), worin R⁴ eine Methylgruppe ist) und Methandiyldi(3-methylcyclohexan)-4,4'-diyl (d.h. der Rest der Formel (IIf), worin R⁴ eine Methylgruppe ist).

In einer Ausführungsform weist die mindestens eine Polyaminverbindung die nachstehende Formel (Ib) auf: 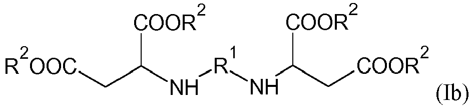 worin R¹ wie vorstehend (insbesondere mit Bezug auf die Formeln (I), (II), (IIa), (IIb), (IIc), (IId), (IIe), (IIf), (IIg) und (IIh)) oder nachstehend definiert ist und R² jeweils unabhängig ausgewählt wird aus C₁₋₆-Alkyl-, C₃₋₁₀-Cycloalkyl- und C₆₋₁₀-Arylgruppen (insbesondere C₁₋₆-Alkyl- und C₃₋₇-Cycloalkylgruppen). In einer Ausführungsform der Formel (Ib) wird R² jeweils unabhängig ausgewählt aus C₁₋₆-Alkylgruppen, insbesondere aus Methyl-, Ethyl-, n-Propyl- und Isopropylgruppen. Die Reste R² können identisch oder voneinander verschieden sein. In einer Ausführungsform der Formel (Ib) sind alle R²-Reste identisch und werden ausgewählt aus C₁₋₆-Alkylgruppen, mehr bevorzugt aus Methyl-, Ethyl-, n-Propyl- und Isopropylgruppen. Insbesondere können alle R²-Reste identisch und entweder Ethyl-, n-Propyl- oder Isopropylgruppen (mehr bevorzugt Ethylgruppen) sein.

In einer Ausführungsform weist die mindestens eine Polyaminverbindung die nachstehende Formel (Ic) auf: 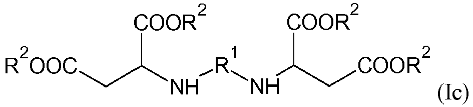 worin R¹ die Formel (IIc), (IId), (IIe), (IIf), (IIg) oder (IIh) (insbesondere (IId), (IIf) oder (IIh)) aufweist und R² identisch ist und aus C₁₋₃-Alkylgruppen, insbesondere Methyl-, Ethyl-, n-Propyl- und Isopropylgruppen (mehr bevorzugt Methyl-, Ethyl-, n-Propyl- und Isopropylgruppen, mehr bevorzugt Ethylgruppe) ausgewählt wird.

In einer Ausführungsform enthält die Bindemittelkomponente nur eine Polyaminverbindung der Formel (I) (insbesondere der Formel (Ia), (Ib) oder (Ic) wie vorstehend definiert).

In einer Ausführungsform kann die Bindemittelkomponente (A) mindestens zwei (wie 2, 3 oder 4, insbesondere 2) Polyaminverbindungen der Formel (I) (insbesondere der Formel (Ia), (Ib) oder (Ic) wie vorstehend definiert) umfassen. Beispielsweise kann die Bindemittelkomponente zwei Polyaminverbindungen der Formel (I) aufweisen, wobei R¹ die Formel (II), (IIa), (IIb), (IIc), (IId), (IIe), (IIf), (IIg) oder (IIh) aufweist, wobei R³ H-Atom oder C₁₋₃-Alkylgruppe (wie Methylgruppe) ist und, falls R¹ eine der Formeln (II), (IIa) oder (IIb) aufweist, jeder der zwei Cyclohexylringe unabhängig voneinander gegebenenfalls mit einer C₁₋₃-Alkylgruppe (wie Methylgruppe) substituiert ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen) ausgewählt wird. Vorzugsweise weist die Bindemittelkomponente zwei Polyaminverbindungen der Formel (Ic) auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. In dieser Ausführungsform ist es bevorzugt, dass R² identisch ist und aus C₁₋₃-Alkylgruppen, insbesondere Methyl-, Ethyl-, n-Propyl- und Isopropylgruppen (mehr bevorzugt Methyl-, Ethyl-, n-Propyl- und Isopropylgruppen, mehr bevorzugt Ethylgruppe) ausgewählt wird.

Neben den vorstehend beschriebenen Polyaminverbindungen der Formel (I) kann die Bindemittelkomponente (A) noch ein oder mehrere weitere Bindemittel, die auf dem Fachgebiet bekannt sind und üblicherweise mit Polyisocyanaten als Härtern verwendet werden können, beinhalten. Diese ein oder mehreren weiteren Bindemittel sollen bevorzugt jedoch diejenigen Bindemittel nicht einschließen, die Styrol (z.B. als Teilstruktur) enthalten und/oder einen ungesättigten Polyester enthalten. Vorzugsweise ist jedoch die Bindemittelkomponente (A) (insbesondere die erfindungsgemäße Beschichtungszusammensetzung) im Wesentlichen frei von Bindemitteln, die nicht unter die Formel (I) fallen. D.h. es ist bevorzugt, dass die Bindemittelkomponente (A) (insbesondere die gesamte erfindungsgemäße Beschichtungszusammensetzung) neben der mindestens einen Polyaminverbindung der Formel (I) (insbesondere der Formel (Ia), (Ib) oder (Ic) wie vorstehend definiert) keine weiteren Polyaminverbindungen enthält. Falls die Bindemittelkomponente (A) (insbesondere die gesamte erfindungsgemäße Beschichtungszusammensetzung) nur eine Polyaminverbindung der Formel (I) (insbesondere der Formel (Ia), (Ib) oder (Ic) wie vorstehend definiert) enthält, ist es daher bevorzugt, dass die Bindemittelkomponente (A) (insbesondere die gesamte erfindungsgemäße Beschichtungszusammensetzung) - mit der Ausnahme der einen Polyaminverbindung der Formel (I) (insbesondere der Formel (Ia), (Ib) oder (Ic) wie vorstehend definiert) - im Wesentlichen frei von Polyaminverbindungen ist. Falls die Bindemittelkomponente (A) mindestens zwei (wie 2, 3 oder 4, insbesondere 2) Polyaminverbindungen der Formel (I) (insbesondere der Formel (Ia), (Ib) oder (Ic) wie vorstehend definiert) enthält, ist es gleichermaßen bevorzugt, dass die Bindemittelkomponente (A) (insbesondere die gesamte erfindungsgemäße Beschichtungszusammensetzung) - mit der Ausnahme der mindestens zwei (wie 2, 3 oder 4, insbesondere 2) Polyaminverbindungen der Formel (I) (insbesondere der Formel (Ia), (Ib) oder (Ic) wie vorstehend definiert) - im Wesentlichen frei von Polyaminverbindungen ist.

Allgemein kann die mindestens eine Polyaminverbindung der Formel (I) in der erfindungsgemäßen Beschichtungszusammensetzung in einer Menge von mindestens 25 Gew.-%, beispielsweise 30 bis 55 Gew.-%, mehr bevorzugt 32 bis 50 Gew.-%, mehr bevorzugt 34 bis 45 Gew.-%, mehr bevorzugt 36 bis 43 Gew.-%, bezogen auf das Gesamtgewicht der Beschichtungszusammensetzung, vorhanden sein. Falls die erfindungsgemäße Beschichtungszusammensetzung zwei oder mehr Polyaminverbindungen der Formel (I) umfasst, beziehen sich die vorstehenden Mengenangaben auf die Gesamtmenge der zwei oder mehr Polyaminverbindungen der Formel (I). Falls die erfindungsgemäße Beschichtungszusammensetzung neben der mindestens einen Polyaminverbindung der Formel (I) ein oder mehrere weitere Bindemittel umfasst, so kann/können dieses eine oder die mehreren weiteren Bindemittel in einer Gesamtmenge von maximal 20 Gew.-%, (vorzugsweise 1 bis 15 Gew.-%, mehr bevorzugt 2 bis 10 Gew.-%, mehr bevorzugt 3 bis 5 Gew.-%), bezogen auf das Gesamtgewicht der Beschichtungszusammensetzung, vorhanden sein.

Polyaminverbindungen, die unter die vorstehende Formel (I) fallen, und Verfahren zu ihrer Herstellung sind dem Fachmann bekannt (vgl. z.B. DD 297 982 A5, DE 10 2009 010 068 A1 und WO 2010/120617). Solche Polyaminverbindungen sind beispielsweise von Bayer (z.B. unter dem Handelsnamen Desmophen^{®}) kommerziell erhältlich.

### Härterkomponente (B)

Die erfindungsgemäße Beschichtungszusammensetzung enthält als Bestandteil (B) eine Härterkomponente, die (i) ein auf Isophorondiisocyanat basierendes Polyisocyanat und (ii) ein Allophanat-Multimer eines aliphatischen Polyisocyanats umfasst.

### B(i) Auf Isophorondiisocyanat basierendes Polyisocyanat

Da niedermolekulare Diisocyanate wie Isophorondiisocyanat allgemein einen relativ hohen Dampfdruck aufweisen, sollten sie aus sicherheitstechnischen Gründen nicht in monomerer Form verwendet werden. Daher weist das auf Isophorondiisocyanat basierende Polyisocyanat eine nichtmonomere, höhermolekulare Form auf, d.h. eine Form, die aus 2 (z.B. Uretdiontyp), 3 (z.B. Isocyanurattyp), 4, 5, 6, 7, 8, 9, 10 oder mehr Isophorondiisocyanat-Einheiten oder einem Gemisch aus solchen höhermolekularen Formen besteht. Bevorzugt umfasst das auf Isophorondiisocyanat basierende Polyisocyanat mindestens eine trimere Form (Isocyanurattyp) oder einem Gemisch davon mit anderen nicht-monomeren Formen.

Vorzugsweise weist das auf Isophorondiisocyanat basierende Polyisocyanat einen NCO-Gehalt von mindestens 10% (wie mindestens 12%, mindestens 13%, mindestens 14%, mindestens 15%, mindestens 16%) auf. Der NCO-Gehalt des auf Isophorondiisocyanat basierenden Polyisocyanats sollte maximal 30% (wie maximal 26%, maximal 24%, maximal 22%, maximal 20%, maximal 18,5%) betragen. Vorzugsweise sollte der NCO-Gehalt des auf Isophorondiisocyanat basierenden Polyisocyanats im Bereich von 10% bis 30% (wie 12% bis 26%, 13% bis 24%, 14% bis 22%, 15% bis 20% oder 16% bis 18,5%) liegen.

Allgemein kann das auf Isophorondiisocyanat basierende Polyisocyanat in der erfindungsgemäßen Beschichtungszusammensetzung in einer Menge von mindestens 9 Gew.-%, beispielsweise 11 bis 30 Gew.-%, mehr bevorzugt 13 bis 25 Gew.-%, mehr bevorzugt 15 bis 22 Gew.-%, mehr bevorzugt 16 bis 20 Gew.-%, mehr bevorzugt 17 bis 19 Gew.-%, bezogen auf das Gesamtgewicht der Beschichtungszusammensetzung, vorhanden sein.

Auf Isophorondiisocyanat basierende Polyisocyanate sowie Verfahren zu ihrer Herstellung sind dem Fachmann bekannt (vgl. z.B. US 4,288586). Solche Polyisocyanate sind beispielsweise von Bayer (z.B. unter dem Handelsnamen Desmodur^{®} Z 4470 oder Desmodur^{®} VP LS 2138), von Evonik (z.B. unter dem Handelsnamen Vestanat P1890L) oder von Vencorex (z.B. unter dem Handelsnamen Tolonate XIDT70B) kommerziell erhältlich.

### B(ii) Allophanat-Multimer eines aliphatischen Polyisocyanats

Allgemein weist das Allophanat-Multimer eines aliphatischen Polyisocyanats die Struktur Z(Allo)ₙ auf, worin Z ein mindestens divalenter (wie di-, tri-, tetra-, penta-, hexavalenter, bevorzugt trivalenter) organischer Rest (vorzugsweise ein organischer Rest, der sich von dem nachstehend definierten Polyalkohol ableitet) ist, Allo eine aus dem aliphatischen Polyisocyanat hervorgegangene Allophanat-Gruppe ist, und n mindestens 2 (vorzugsweise gleich der Anzahl an OH-Gruppen des nachstehend definierten Polyalkohols, wie 2, 3, 4, 5, 6, insbesondere 3) ist. Die Allophanat-Gruppe weist vorzugsweise die Formel -O-C(O)N(R⁵)-C(O)-NH(R⁵) auf, worin R⁵ den monovalenten Rest des aliphatischen Polyisocyanats darstellt, der nach Entfernung einer Isocyanatgruppe von dem aliphatischen Polyisocyanat übrig bleiben würde (beispielweise würde, wenn das aliphatische Polyisocyanat Hexamethylendiisocyanat ist, der monovalente Rest nach Entfernung einer Isocyanatgruppe von dem aliphatischen Polyisocyanat die Formel -(CH₂)₆-NCO aufweisen). Der monovalente Rest des aliphatischen Polyisocyanats kann eine monomere Form (d.h. die nach Entfernung der einen Isocyanatgruppe verbliebenen Isocyanatgruppe(n) ist/sind frei) oder eine höhermolekulare Form (d.h. die nach Entfernung der einen Isocyanatgruppe verbliebenen Isocyanatgruppe(n) hat/haben sich an eine oder mehrere Isocyanatgruppen weiterer aliphatischer Polyisocyanate addiert, um z.B. eine Uretdion- oder Isocyanurat-Struktur auszubilden) aufweisen. Das aliphatische Polyisocyanat in dem Allophanat-Multimer ist vorzugsweise ein gesättigtes aliphatisches Polyisocyanat, wie Hexamethylendiisocyanat, Bis(4-isocyanatocyclohexyl)methan, Butandiisocyanat, Pentandiisocyanat, 4-Isocyanato-1,8-octandiisocyanat oder ω,ω'-Diisocyanato-1,3-dimethylcyclohexan, insbesondere Hexamethylendiisocyanat oder Bis(4-isocyanatocyclohexyl)methan.

Das Allophanat-Multimer eines aliphatischen Polyisocyanats ist vorzugsweise ein Allophanat-Multimer von Hexamethylendiisocyanat. Bevorzugt ist das Allophanat-Multimer eines aliphatischen Polyisocyanats das Reaktionsprodukt eines aliphatischen Polyalkohols mit Hexamethylendiisocyanat. Der aliphatische Polyalkohol weist mindestens 2 (wie 2, 3, 4, 5 oder 6) OH-Gruppen und mindestens 2 (wie 2, 3, 4, 5, 6, 7, 8, 9, 10, 11, 12, 13, 14 oder 15) Kohlenstoffatome auf. Der aliphatische Polyalkohol kann linear, verzweigt oder cyclisch sein und ist vorzugsweise linear oder verzweigt. In einer Ausführungsform weist der aliphatische Polyalkohol die Formel RC[(CH₂)₁₋₄OH]₃ auf, worin R ein aliphatischer monovalenter organischer Rest (der vorzugsweise inert gegenüber Isocyanatgruppen ist, insbesondere bei einer Temperatur, bei der die erfindungsgemäße Beschichtungszusammensetzung verwendet wird), z.B. ein C₁₋₆-Alkylrest oder C₃₋₁₀-Cycloalkylrest, ist. In einer Ausführungsform umfasst das Allophanat-Multimer eines aliphatischen Polyisocyanats ein Polyadditionsprodukt aus einem aliphatischen Polyalkohol der Formel RC[(CH₂)₁₋₄OH]₃ und Hexamethylendiisocyanat, wobei jeder Arm des Polyalkohols eine aus 2 Einheiten Hexamethylendiisocyanat gebildete Allophanat-Struktur aufweist und R wie vorstehend definiert ist (mehr bevorzugt R ein C₁₋₃-Alkylrest, wie Methyl-, Ethyl-, n-Propyl- oder Isopropylrest, mehr bevorzugt ein Ethylrest ist). Neben diesem Polyadditionsprodukt kann das Allophanat-Multimer auch weitere Additionsprodukte des Hexamethylendiisocyanats und/oder aliphatischen Polyalkohols umfassen, wie z.B. ein oder mehrere höhermolekulare Formen (wie eine trimere Form (Isocyanurattyp)) von Hexamethylendiisocyanat und/oder ein Additionsprodukt aus dem Allophanat-Multimer eines aliphatischen Polyisocyanats, bei dem jeder Arm des Polyalkohols eine aus 2 Einheiten Hexamethylendiisocyanat gebildete Allophanat-Struktur aufweist und bei dem sich eine freie Isocyanatgruppe eines Arms an zwei weitere Einheiten Hexamethylendiisocyanat addiert hat, so dass dieser eine Arm neben der Allophanat-Struktur auch eine Isocyanurat-Struktur aufweist.

In einer Ausführungsform weist das Allophanat-Multimer eines aliphatischen Polyisocyanats einen NCO-Gehalt von mindestens 13% (wie mindestens 14%, mindestens 15%, mindestens 16%, mindestens 17%, mindestens 18%) auf. Der NCO-Gehalt des Allophanat-Multimer eines aliphatischen Polyisocyanats sollte maximal 30% (wie maximal 26%, maximal 24%, maximal 22%, maximal 21%, maximal 20,5%) betragen. Vorzugsweise sollte der NCO-Gehalt des Allophanat-Multimers eines aliphatischen Polyisocyanats im Bereich von 13% bis 30% (wie 14% bis 26%, 15% bis 24%, 16% bis 22%, 17% bis 21% oder 18% bis 20,5%) liegen.

Allgemein kann das Allophanat-Multimer eines aliphatischen Polyisocyanats in der erfindungsgemäßen Beschichtungszusammensetzung in einer Menge von mindestens 8 Gew.-%, beispielsweise 9 bis 25 Gew.-%, mehr bevorzugt 10 bis 23 Gew.-%, mehr bevorzugt 11 bis 20 Gew.-%, mehr bevorzugt 12 bis 17 Gew.-%, mehr bevorzugt 13 bis 14 Gew.-%, bezogen auf das Gesamtgewicht der Beschichtungszusammensetzung, vorhanden sein.

Allophanat-Multimere eines aliphatischen Polyisocyanats sowie deren Herstellung sind dem Fachmann bekannt (z.B. GB 994,890, EP 0 000 194 A1 oder EP 0 682 012 A1). Solche Allophanat-Multimere sind beispielsweise von Bayer (z.B. unter dem Handelsnamen Desmodur^{®} XP 2679 oder Desmodur^{®} XP 2731) kommerziell erhältlich.

### B(iii) Kombinationen des auf Isophorondiisocyanat basierenden Polyisocyanats und des Allophanat-Multimers eines aliphatischen Polyisocyanats

Die Härterkomponente (B) kann eine jegliche Kombination des wie vorstehend unter B(i) beschriebenen, auf Isophorondiisocyanat basierenden Polyisocyanats und des wie vorstehend unter B(ii) beschriebenen Allophanat-Multimers eines aliphatischen Polyisocyanats umfassen.

In einer Ausführungsform umfasst die Härterkomponente (B) (i) ein auf Isophorondiisocyanat basierendes Polyisocyanat, das mindestens eine trimere Form (Isocyanurattyp) von Isophorondiisocyanat oder ein Gemisch davon mit anderen höhermolekularen Formen Isophorondiisocyanat umfasst, und (ii) ein wie vorstehend unter B(ii) beschriebenes Allophanat-Multimer der Struktur Z(Allo)ₙ, insbesondere ein wie vorstehend beschriebenes Allophanat-Multimer der Struktur Z(Allo)ₙ, bei dem das aliphatische Polyisocyanat Hexamethylendiisocyanat ist, mehr bevorzugt ein Allophanat-Multimer der Struktur Z(Allo)ₙ, bei dem das aliphatische Polyisocyanat Hexamethylendiisocyanat ist und n 3 ist, mehr bevorzugt ein Polyadditionsprodukt aus einem aliphatischen Polyalkohol der Formel RC[(CH₂)₁₋₄OH]₃ und Hexamethylendiisocyanat, wobei jeder Arm des Polyalkohols eine aus 2 Einheiten Hexamethylendiisocyanat gebildete Allophanat-Struktur aufweist und R ein aliphatischer monovalenter organischer Rest, der inert gegenüber Isocyanatgruppen ist (insbesondere bei einer Temperatur, bei der die erfindungsgemäße Beschichtungszusammensetzung verwendet wird), vorzugsweise ein C₁₋₆-Alkylrest oder C₃₋₁₀-Cycloalkylrest, mehr bevorzugt ein C₁₋₃-Alkylrest (wie Methyl-, Ethyl-, n-Propyl- oder Isopropylrest, mehr bevorzugt ein Ethylrest) ist. Gegebenenfalls kann in dieser Ausführungsform das Allophanat-Multimer neben diesem Polyadditionsprodukt aus einem aliphatischen Polyalkohol der Formel RC[(CH₂)₁₋₄OH]₃ und Hexamethylendiisocyanat weitere Additionsprodukte des Hexamethylendiisocyanats und/oder aliphatischen Polyalkohols umfassen, wie z.B. ein oder mehrere höhermolekulare Formen (wie eine trimere Form (Isocyanurattyp)) von Hexamethylendiisocyanat und/oder ein Additionsprodukt aus dem Allophanat-Multimer eines aliphatischen Polyisocyanats, bei dem jeder Arm des Polyalkohols eine aus 2 Einheiten Hexamethylendiisocyanat gebildete Allophanat-Struktur aufweist und bei dem sich eine freie Isocyanatgruppe eines Arms an zwei weitere Einheiten Hexamethylendiisocyanat addiert hat, so dass dieser eine Arm neben der Allophanat-Struktur auch eine Isocyanurat-Struktur aufweist. In jeder der vorstehenden Kombinationen von (i) einem auf Isophorondiisocyanat basierenden Polyisocyanat und (ii) einem Allophanat-Multimer eines aliphatischen Polyisocyanats kann das Allophanat-Multimer eines aliphatischen Polyisocyanats einen NCO-Gehalt von mindestens 13% (wie mindestens 14%, mindestens 15%, mindestens 16%, mindestens 17%, mindestens 18%) aufweisen. Der NCO-Gehalt des Allophanat-Multimers eines aliphatischen Polyisocyanats sollte maximal 30% (wie maximal 26%, maximal 24%, maximal 22%, maximal 21%, maximal 20,5%) betragen.

In einer weiteren Ausführungsform umfasst die Härterkomponente (B) (i) ein auf Isophorondiisocyanat basierendes Polyisocyanat, dessen NCO-Gehalt mindestens 10% und/oder maximal 30% beträgt und vorzugsweise im Bereich von 10% bis 30% (wie 12% bis 26%, 13% bis 24%, 14% bis 22%, 15% bis 20% oder 16% bis 18,5%) liegt, und (ii) ein wie vorstehend unter B(ii) beschriebenes Allophanat-Multimer der Struktur Z(Allo)ₙ, insbesondere ein wie vorstehend beschriebenes Allophanat-Multimer der Struktur Z(Allo)ₙ, bei dem das aliphatische Polyisocyanat Hexamethylendiisocyanat ist, mehr bevorzugt ein Allophanat-Multimer der Struktur Z(Allo)ₙ, bei dem das aliphatische Polyisocyanat Hexamethylendiisocyanat ist und n 3 ist, mehr bevorzugt ein Polyadditionsprodukt aus einem aliphatischen Polyalkohol der Formel RC[(CH₂)₁₋₄OH]₃ und Hexamethylendiisocyanat, wobei jeder Arm des Polyalkohols eine aus 2 Einheiten Hexamethylendiisocyanat gebildete Allophanat-Struktur aufweist und R ein aliphatischer monovalenter organischer Rest, der inert gegenüber Isocyanatgruppen ist (insbesondere bei einer Temperatur, bei der die erfindungsgemäße Beschichtungszusammensetzung verwendet wird), vorzugsweise ein C₁₋₆-Alkylrest oder C₃₋₁₀-Cycloalkylrest, mehr bevorzugt ein C₁₋₃-Alkylrest (wie Methyl-, Ethyl-, n-Propyl- oder Isopropylrest, mehr bevorzugt ein Ethylrest) ist. Gegebenenfalls kann in dieser Ausführungsform das Allophanat-Multimer neben diesem Polyadditionsprodukt aus einem aliphatischen Polyalkohol der Formel RC[(CH₂)₁₋₄OH]₃ und Hexamethylendiisocyanat weitere Additionsprodukte des Hexamethylendiisocyanats und/oder aliphatischen Polyalkohols umfassen, wie z.B. ein oder mehrere höhermolekulare Formen (wie eine trimere Form (Isocyanurattyp)) von Hexamethylendiisocyanat und/oder ein Additionsprodukt aus dem Allophanat-Multimer eines aliphatischen Polyisocyanats, bei dem jeder Arm des Polyalkohols eine aus 2 Einheiten Hexamethylendiisocyanat gebildete Allophanat-Struktur aufweist und bei dem sich eine freie Isocyanatgruppe eines Arms an zwei weitere Einheiten Hexamethylendiisocyanat addiert hat, so dass dieser eine Arm neben der Allophanat-Struktur auch eine Isocyanurat-Struktur aufweist. In jeder der vorstehenden Kombinationen von (i) einem auf Isophorondiisocyanat basierenden Polyisocyanat und (ii) einem Allophanat-Multimer eines aliphatischen Polyisocyanats kann das Allophanat-Multimer eines aliphatischen Polyisocyanats einen NCO-Gehalt von mindestens 13% (wie mindestens 14%, mindestens 15%, mindestens 16%, mindestens 17%, mindestens 18%) aufweisen. Der NCO-Gehalt des Allophanat-Multimers eines aliphatischen Polyisocyanats sollte maximal 30% (wie maximal 26%, maximal 24%, maximal 22%, maximal 21%, maximal 20,5%) betragen.

In einer weiteren Ausführungsform umfasst die Härterkomponente (B) (i) ein auf Isophorondiisocyanat basierendes Polyisocyanat, das mindestens eine trimere Form (Isocyanurattyp) von Isophorondiisocyanat oder ein Gemisch davon mit anderen höhermolekularen Formen Isophorondiisocyanat umfasst und dessen NCO-Gehalt mindestens 10% und/oder maximal 30% beträgt und vorzugsweise im Bereich von 10% bis 30% (wie 12% bis 26%, 13% bis 24%, 14% bis 22%, 15% bis 20% oder 16% bis 18,5% liegt, und (ii) ein wie vorstehend unter B(ii) beschriebenes Allophanat-Multimer der Struktur Z(Allo)ₙ, insbesondere ein wie vorstehend beschriebenes Allophanat-Multimer der Struktur Z(Allo)ₙ, bei dem das aliphatische Polyisocyanat Hexamethylendiisocyanat ist, mehr bevorzugt ein Allophanat-Multimer der Struktur Z(Allo)ₙ, bei dem das aliphatische Polyisocyanat Hexamethylendiisocyanat ist und n 3 ist, mehr bevorzugt ein Polyadditionsprodukt aus einem aliphatischen Polyalkohol der Formel RC[(CH₂)₁₋₄OH]₃ und Hexamethylendiisocyanat, wobei jeder Arm des Polyalkohols eine aus 2 Einheiten Hexamethylendiisocyanat gebildete Allophanat-Struktur aufweist und R ein aliphatischer monovalenter organischer Rest, der inert gegenüber Isocyanatgruppen ist (insbesondere bei einer Temperatur, bei der die erfindungsgemäße Beschichtungszusammensetzung verwendet wird), vorzugsweise ein C₁₋₆-Alkylrest oder C₃₋₁₀-Cycloalkylrest, mehr bevorzugt ein C₁₋₃-Alkylrest (wie Methyl-, Ethyl-, n-Propyl- oder Isopropylrest, mehr bevorzugt ein Ethylrest) ist. Gegebenenfalls kann in dieser Ausführungsform das Allophanat-Multimer neben diesem Polyadditionsprodukt aus einem aliphatischen Polyalkohol der Formel RC[(CH₂)₁₋₄OH]₃ und Hexamethylendiisocyanat weitere Additionsprodukte des Hexamethylendiisocyanats und/oder aliphatischen Polyalkohols umfassen, wie z.B. ein oder mehrere höhermolekulare Formen (wie eine trimere Form (Isocyanurattyp)) von Hexamethylendiisocyanat und/oder ein Additionsprodukt aus dem Allophanat-Multimer eines aliphatischen Polyisocyanats, bei dem jeder Arm des Polyalkohols eine aus 2 Einheiten Hexamethylendiisocyanat gebildete Allophanat-Struktur aufweist und bei dem sich eine freie Isocyanatgruppe eines Arms an zwei weitere Einheiten Hexamethylendiisocyanat addiert hat, so dass dieser eine Arm neben der Allophanat-Struktur auch eine Isocyanurat-Struktur aufweist. In jeder der vorstehenden Kombinationen von (i) einem auf Isophorondiisocyanat basierenden Polyisocyanat und (ii) einem Allophanat-Multimer eines aliphatischen Polyisocyanats kann das Allophanat-Multimer eines aliphatischen Polyisocyanats einen NCO-Gehalt von mindestens 13% (wie mindestens 14%, mindestens 15%, mindestens 15%, mindestens 17%, mindestens 18%) aufweisen. Der NCO-Gehalt des Allophanat-Multimers eines aliphatischen Polyisocyanats sollte maximal 30% (wie maximal 26%, maximal 24%, maximal 22%, maximal 21%, maximal 20,5%) betragen.

Allgemein können das auf Isophorondiisocyanat basierende Polyisocyanat und das Allophanat-Multimer eines aliphatischen Polyisocyanats in der erfindungsgemäßen Beschichtungszusammensetzung in einer Gesamtmenge von mindestens 17 Gew.-%, beispielsweise 20 bis 40 Gew.-%, mehr bevorzugt 15 bis 38 Gew.-%, mehr bevorzugt 20 bis 36 Gew.-%, mehr bevorzugt 25 bis 34 Gew.-%, mehr bevorzugt 30 bis 32 Gew.-%, bezogen auf das Gesamtgewicht der Beschichtungszusammensetzung, vorhanden sein.

Das Gewichtsverhältnis von (i) dem auf Isophorondiisocyanat basierenden Polyisocyanat zu (ii) dem Allophanat-Multimer eines aliphatischen Polyisocyanats in der erfindungsgemäßen Beschichtungszusammensetzung beträgt 1:1 bis 2:1, wie 1:1 bis 1,5:1.

### optionale Bestandteile

Die erfindungsgemäße Beschichtungszusammensetzung kann zusätzlich ein oder mehrere Lösungsmittel und/oder ein oder mehrere Zusatzstoffe (sog. Additive), die auf dem Fachgebiet üblich sind, enthalten, wobei die Zusatzstoffe z.B. ein oder mehrere Rheologiemodifizierungsmittel (inkl. Dispergierhilfsmittel, Emulgatoren, Netzmittel, Verlaufsmittel), einen oder mehrere Stabilisatoren (inkl. Lichtschutzmittel wie UV-Absorber und Radikalfänger), ein oder mehrere Farbmittel (wie Farbstoffe und/oder Pigmente), ein oder mehrere Flammschutzmittel, einen oder mehrere Füllstoffe und/oder ein oder mehrere Trocknungsmittel umfassen.

### Lösungsmittel

Die erfindungsgemäße Beschichtungszusammensetzung kann ein oder mehrere Lösungsmittel enthalten. Zumindest teilweise können Lösungsmittel durch Bestandteile der Beschichtungszusammensetzung (z.B. die Härter und/oder die optionalen Bestandteile) in die Beschichtungszusammensetzung eingebracht werden (z.B. kann eine Lösung von einem oder mehreren Härtern in einem Lösungsmittel verwendet werden, wodurch dieses Lösungsmittel in die erfindungsgemäße Beschichtungszusammensetzung eingebracht wird). Beispielhafte Lösungsmittel, die in der erfindungsgemäßen Beschichtungszusammensetzung allein oder in einem Gemisch verwendet werden können, beinhalten Butylacetat, 1-Methoxy-2-propylacetat (Methoxypropylacetat oder MPA), Butylglykolacetat (BGA), Xylol und Naphtha. Ein bevorzugtes Lösungsmittel ist ein aliphatisches (d.h. nicht-aromatisches) Lösungsmittel (z.B. Butylacetat), entweder allein oder in Kombination mit einem oder mehreren der vorstehenden (insbesondere aliphatischen) Lösungsmittel (wie 1-Methoxy-2-propylacetat und/oder Butylglykolacetat). Z.B. kann, falls ein Härter als Lösung in Naphtha verwendet wird, die erfindungsgemäße Beschichtungszusammensetzung als Lösungsmittel ein aliphatisches Lösungsmittel (z.B. Butylacetat) und Naphtha, gegebenenfalls in Kombination mit einem oder mehreren anderen, insbesondere aliphatischen, Lösungsmitteln (z.B. 1-Methoxy-2-propylacetat und/oder Butylglykolacetat) enthalten.

Allgemein kann/können das/die Lösungsmittel, das/die durch Bestandteile der Beschichtungszusammensetzung (d.h. die Bestandteile (A), (B) und/oder die optionalen Bestandteile) in die Beschichtungszusammensetzung eingebracht wird/werden, in einer Gesamtmenge von weniger als 15 Gew.-%, mehr bevorzugt weniger als 14 Gew.-%, mehr bevorzugt weniger als 13 Gew.-%, mehr bevorzugt weniger als 12 Gew.-%, mehr bevorzugt weniger als 11 Gew.-%, mehr bevorzugt weniger als 10 Gew.-%, mehr bevorzugt weniger als 9 Gew.-%, mehr bevorzugt weniger als 8 Gew.-%, mehr bevorzugt weniger als 7 Gew.-%, mehr bevorzugt weniger als 6 Gew.-%, mehr bevorzugt weniger als 5 Gew.-%, bezogen auf das Gesamtgewicht der Beschichtungszusammensetzung, vorhanden sein. Die Gesamtmenge an sonstigem Lösungsmittel / sonstigen Lösungsmitteln in der erfindungsgemäßen Beschichtungszusammensetzung kann 0 bis 18 Gew.-%, beispielweise 4 bis 17 Gew.-%, vorzugsweise 6 bis 16 Gew.-%, mehr bevorzugt 8 bis 15 Gew.-%, mehr bevorzugt 10 bis 14 Gew.-%, bezogen auf das Gesamtgewicht der Beschichtungszusammensetzung, betragen. Die Gesamtmenge an Lösungsmitteln (eingebrachte Lösungsmittel + sonstige Lösungsmittel) in der erfindungsgemäßen Beschichtungszusammensetzung kann beispielsweise 0 bis 30 Gew.-%, vorzugsweise 5 bis 29 Gew.-%, mehr bevorzugt 10 bis 28 Gew.-%, mehr bevorzugt 15 bis 27 Gew.-%, mehr bevorzugt 20 bis 26 Gew.-%, mehr bevorzugt 23 bis 25 Gew.-%, bezogen auf das Gesamtgewicht der Beschichtungszusammensetzung, betragen.

### Rheologiemodifizierungsmittel

Rheologiemodifizierungsmittel, die unter anderem Dispergierhilfsmittel, Emulgatoren, Netzmittel und Verlaufsmittel umfassen, werden für verschiedene Zwecke eingesetzt, insbesondere um ein Absetzen von Partikeln in einer Suspension zu verhindern, das Standvermögen einer flüssigen Zusammensetzung während und nach dem Auftrag auf ein Substrat zu verbessern (Thixotropierung) und/oder Oberflächenfehler zu beseitigen und die Untergrundbenetzung zu verbessern. Rheologiemodifizierungsmittel sind dem Fachmann bekannt und beinhalten verschiedenste Substanzen, wie Cellulose-Derivate (z.B. Ethylcellulose, Carboxymethylcellulose, Nitrocellulose, Ethylnitrocellulose), Polyalkylencarbonate, Schichtsilikate, pyrogene Kieselsäuren, hydrierte Rizinusöle und Polyacrylate. Beispielhafte Rheologiemodifizierungsmittel beinhalten Modaflow 9200 (von Cytec Surface Specialties SA/NV) und Byk^{®} 310 (von BYK-Chemie GmbH). Vorzugsweise sind ein oder mehrere (z.B. 2, 3, 4, 5 oder 6, mehr bevorzugt 2, 3 oder 4) verschiedene Rheologiemodifizierungsmittel in der erfindungsgemäßen Beschichtungszusammensetzung vorhanden.

Allgemein kann/können das eine oder die mehreren Rheologiemodifizierungsmittel in der erfindungsgemäßen Beschichtungszusammensetzung in einer Gesamtmenge von 0 bis 2,0 Gewichtsteile, vorzugsweise 0,2 bis 1,8 Gewichtsteile, mehr bevorzugt 0,4 bis 1,6 Gewichtsteile, mehr bevorzugt 0,6 bis 1,4 Gewichtsteile, mehr bevorzugt 0,7 bis 1,2 Gewichtsteile, bezogen auf 100 Gewichteile der mindestens einen Polyaminverbindung der Formel (I), vorhanden sein. Es ist wünschenswert, dass, bezogen auf das Gesamtgewicht der Beschichtungszusammensetzung, das eine oder die mehreren Rheologiemodifizierungsmittel in der erfindungsgemäßen Beschichtungszusammensetzung in einer Gesamtmenge von 0 bis 1,5 Gew.-%, vorzugsweise 0,10 bis 1,2 Gew.-%, mehr bevorzugt 0,15 bis 0,8 Gew.-%, mehr bevorzugt 0,20 bis 0,6 Gew.-%, mehr bevorzugt 0,25 bis 0,5 Gew.-%, mehr bevorzugt 0,3 bis 0,4 Gew.-%, vorhanden sind.

### Stabilisatoren

Zu den Stabilisatoren gehören unter anderem Lichtschutzmittel, Antioxidantien, Korrosionsinhibitoren und Biozide. Beispielhafte Lichtschutzmittel umfassen UV-Absorber (wie Benzophenon-, Benzotriazole- und Triazin-Derivate) und Radikalfänger (z.B. gehinderte Amine, wie 2,2,6,6-Tetramethylpiperdin-Derivate). Diese Lichtschutzmittel sind kommerziell erhältlich, z.B. von BASF unter den Handelsnamen Tinuvin^{®} und Chimassorb^{®}. Antioxidantien sind kommerziell erhältlich, z.B. von BASF unter dem Handelsnamen Irganox^{®}. Korrosionsinhibitoren, die die Oberfläche von Substraten, insbesondere Metalloberflächen vor Korrosion schützen sollen, sind vorzugsweise frei von Schwermetallen. Beispielhafte, schwermetallfreie Korrosionsinhibitoren sind unter dem Handelsnamen Igorcor^{®} von BASF kommerziell erhältlich. Biozide umfassen Bakterizide, Algizide und Fungizide. Vorzugsweise sind in der erfindungsgemäßen Beschichtungszusammensetzung ein Stabilisator (z.B. ein UV-Absorber oder Radikalfänger) oder mehrere (z.B. 2, 3, 4, 5 oder 6, mehr bevorzugt 2, 3 oder 4) verschiedene Stabilisatoren (wie ein UV-Absorber und ein Radikalfänger) vorhanden.

Allgemein kann/können der eine oder die mehreren Stabilisatoren (wie Lichtschutzmittel) in der erfindungsgemäßen Beschichtungszusammensetzung in einer Gesamtmenge von 0 bis 4,0 Gewichtsteile, vorzugsweise 1,0 bis 3,8 Gewichtsteile, mehr bevorzugt 2,0 bis 3,6 Gewichtsteile, mehr bevorzugt 2,5 bis 3,4 Gewichtsteile, mehr bevorzugt 2,8 bis 3,2 Gewichtsteile, bezogen auf 100 Gewichteile der mindestens einen Polyaminverbindung der Formel (I), vorhanden sein. Es ist wünschenswert, dass, bezogen auf das Gesamtgewicht der Beschichtungszusammensetzung, der oder die mehreren Stabilisatoren in der erfindungsgemäßen Beschichtungszusammensetzung in einer Gesamtmenge von 0 bis 2,0 Gew.-%, vorzugsweise 0,5 bis 1,8 Gew.-%, mehr bevorzugt 0,9 bis 1,6 Gew.-%, mehr bevorzugt 1,1 bis 1,4 Gew.-%, vorhanden sind.

### Farbmittel

Die erfindungsgemäße Beschichtungszusammensetzung kann ein oder mehrere Farbmittel (Farbstoffe und/oder Pigmente) umfassen. Farbmittel können anorganisch oder organisch sein, natürlich vorkommende oder synthetisch hergestellte Farbmittel sein. Man kann zwischen Weißpigmenten, Buntpigmenten und Buntfarbstoffen, Schwarzpigmenten und Buntfarbstoffen, Effektpigmenten sowie Leuchtpigmenten und Leuchtfarbstoffen unterscheiden. Farbmittel können in der erfindungsgemäßen Beschichtungszusammensetzung in üblichen Mengen enthalten sein, wobei sich die Mengen von Farbton zu Farbton und je nach gewünschter Intensität bzw. Deckvermögen unterscheiden können.

Allgemein kann/können das eine oder die mehreren Farbmitteln in der erfindungsgemäßen Beschichtungszusammensetzung in einer Gesamtmenge von 0 bis 30 Gew.-%, wie 5 bis 25 Gew.-%, 10 bis 22 Gew.-% oder 15 bis 20 Gew.-%, bezogen auf das Gesamtgewicht der Beschichtungszusammensetzung, vorhanden sein. Generell wird die Gesamtmenge an Farbmitteln, die in der erfindungsgemäßen Beschichtungszusammensetzung enthalten sein kann, auch von dem Deckvermögen der jeweiligen verwendeten Farbmittel abhängen. So kann, falls Farbmittel mit einem starken Deckvermögen (wie Pigmente mit einem starken Deckvermögen (z.B. Ruß) oder Farbstoffe mit einem starken Deckvermögen (z.B. Dioxazinviolett)) in der erfindungsgemäßen Beschichtungszusammensetzung verwendet werden, die Gesamtmenge der Farbmittel z.B. lediglich bis zu 10 Gew.-% (oder bis zu 8 Gew.-%, vorzugsweise 0,3 bis 5,0 Gew.-%, mehr bevorzugt 0,4 bis 4,0 Gew.-%, mehr bevorzugt 0,5 bis 3,0 Gew.-%), bezogen auf das Gesamtgewicht der Beschichtungszusammensetzung, betragen. Anderseits kann, falls Farbmittel mit einem schwachen Deckvermögen (wie Pigmente mit einem schwachen Deckvermögen (z.B. Titandioxid) oder Farbstoffe mit einem schwachen Deckvermögen (z.B. ein Triphenylmethanfarbstoff wie Malachitgrün)) in der erfindungsgemäßen Beschichtungszusammensetzung verwendet werden, die Gesamtmenge der Farbmittel z.B. im Bereich von 15 bis 30 Gew.-% (wie 20 bis 29 Gew.-%, 22 bis 28 Gew.-% oder 24 bis 26 Gew.-%), bezogen auf das Gesamtgewicht der Beschichtungszusammensetzung, liegen.

### Flammschutzmittel

Flammschutzmittel (die auch als Brandhemmer bezeichnet werden) sind Verbindungen, die fähig sind, die Ausbreitung von Bränden einzuschränken, zu verlangsamen oder zu verhindern. Flammschutzmittel können anorganisch oder organisch sein, halogeniert oder halogenfrei (bevorzugt halogenfrei) sein. Beispielhafte Flammschutzmittel beinhalten organische Phosphorverbindungen (wie Tris(chlorethyl)phosphat, Tris(chlorpropyl)phosphat, Tris(dichlorisopropyl)phosphat, Triphenylphosphat, Tris-(2-ethylhexyl)phosphat, Trikresylphosphat, isopropyliertes Triphenylphosphat, Mono-, Bis- und Tris(isopropylphenyl)phosphate unterschiedlichen Isopropylierungsggrades, Resorcinolbis(diphenylphosphat) oder Bisphenol-A-bis(diphenylphosphat) und anorganische Verbindungen (wie Aluminiumhydroxid, Magnesiumhydroxid, Ammoniumsulfat und -phosphat, Zinkborate oder gelöschter Kalk (Ca(OH)₂). Bevorzugte Flammschutzmittel beinhalten organische Phosphorverbindungen, insbesondere halogenfreie organische Phosphorverbindungen, wie die vorstehend genannten. Flammschutzmittel sind dem Fachmann bekannt und sind z.B. von Clariant, Lanxess oder Thor GmbH kommerziell erhältlich.

Allgemein kann/können das eine oder die mehreren Flammschutzmittel in der erfindungsgemäßen Beschichtungszusammensetzung in einer Gesamtmenge von 0 bis 30 Gew.-% (vorzugsweise 5 bis 28 Gew.-%, wie 10 bis 27 Gew.-%, 15 bis 26 Gew.% oder 20 bis 25 Gew.-%) vorhanden sind.

### Füllstoffe

Füllstoffe können dazu dienen, Pigmente teilweise zu ersetzen (um somit die Formulierungskosten zu senken) und/oder die Eigenschaften der Beschichtung (z.B. Glanzgrad, Oberflächenstruktur, mechanische Eigenschaften) zu verbessern. Beispiele für häufig eingesetzte Füllstoffe sind Calciumcarbonat, Bariumsulfat und Kaolin. Füllstoffe können in der erfindungsgemäßen Beschichtungszusammensetzung in üblichen Mengen enthalten sein, wobei sich die Mengen je nach gewünschten Zweck unterscheiden können.

Allgemein kann/können der eine oder die mehreren Füllstoffen in der erfindungsgemäßen Beschichtungszusammensetzung in einer Gesamtmenge von 0 bis 5 Gew.-%, vorzugsweise 0,5 bis 4,0 Gew.-%, mehr bevorzugt 1,0 bis 3,0 Gew.-%, mehr bevorzugt 1,5 bis 2,0 Gew.-%, bezogen auf das Gesamtgewicht der Beschichtungszusammensetzung, vorhanden sein.

### Trocknungsmittel

Trocknungsmittel sind fähig, Feuchtigkeit und Restwasser zu binden, um somit Probleme zu vermeiden, die bei Anwesenheit von Wasser (selbst in geringer Menge) auftreten würden. Solche Probleme umfassen z.B. eine Reaktion von Wasser mit Isocyanatverbindungen (u.a. bei der Lagerung), was zu der Freisetzung von CO₂, zur Verringerung des NCO-Gehalts (und somit schlechterer Aushärtung zwischen der Bindemittelkomponente und der Härterkomponente) und Schäumen der Beschichtungszusammensetzung führen kann, wodurch die Beschichtungseigenschaften (Haftung, Kratzbeständigkeit und/oder Glanz) verschlechtert werden kann. Beispielhafte Trocknungsmittel beinhalten natürliche und synthetische Zeolithe (auch als Molekularsiebe bezeichnet). Ein bevorzugtes Trocknungsmittel ist ein Zeolith, dessen Porenweite für die Adsorption von Wasser geeignet ist, wie z.B. Zeolithe mit einer Porenweite von 3 bis 4 Å (z.B. Sylosiv^{®}A3; von Grace Davison).

Allgemein kann ein Trocknungsmittel in der erfindungsgemäßen Beschichtungszusammensetzung in einer Gesamtmenge von 0 bis 8,0 Gewichtsteile, vorzugsweise 0,5 bis 6,0 Gewichtsteile, mehr bevorzugt 1,0 bis 4,0 Gewichtsteile, bezogen auf 100 Gewichteile der Gesamtmenge des Allophanat-Multimers eines aliphatischen Polyisocyanats und des auf Isophorondiisocyanat basierendes Polyisocyanats oder bezogen auf 100 Gewichteile der mindestens einen Polyaminverbindung der Formel (I), betragen. Allgemein ist es wünschenswert, dass, bezogen auf das Gesamtgewicht der Beschichtungszusammensetzung, das Trocknungsmittel in der erfindungsgemäßen Beschichtungszusammensetzung in einer Gesamtmenge von 0 bis 1,0 Gew.-%, vorzugsweise 0,1 bis 0,8 Gew.-%, mehr bevorzugt 0,2 bis 0,6 Gew.-%, mehr bevorzugt 0,3 bis 0,4 Gew.-%, vorhanden ist.

### Beschichtungszusammensetzung

In einem ersten Aspekt wird erfindungsgemäß eine Beschichtungszusammensetzung bereitgestellt, die folgende essentielle Bestandteile umfasst: (A) eine Bindemittelkomponente, die mindestens eine Polyaminverbindung der Formel (I) (insbesondere mindestens eine der vor- oder nachstehend beschriebenen Polyaminverbindungen der Formel (Ia), (Ib) und/oder (Ic)) und (B) eine Härterkomponente, die (i) ein wie vorstehend unter B(i) beschriebenes, auf Isophorondiisocyanat basierendes Polyisocyanat (insbesondere ein auf Isophorondiisocyanat basierendes Polyisocyanat, wie es nachstehend spezifiziert ist) und (ii) ein Allophanat-Multimer eines aliphatischen Polyisocyanats (insbesondere ein Allophanat-Multimer eines aliphatischen Polyisocyanats, wie es vorstehend unter B(ii) beschrieben oder nachstehend spezifiziert ist) umfasst. Insbesondere kann die erfindungsgemäße Beschichtungszusammensetzung eine Bindemittelkomponente (A), die mindestens eine Polyaminverbindung der Formel (I) (insbesondere mindestens eine der vor- oder nachstehend beschriebenen Polyaminverbindungen der Formel (Ia), (Ib) und/oder (Ic)) umfasst, und eine Härterkomponente (B) umfassen, die eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In einer Ausführungsform ist es bevorzugt, dass die Bindemittelkomponente (A) nur eine Polyaminverbindung der Formel (I) (insbesondere der Formel (Ia), (Ib) oder (Ic) wie vorstehend definiert) enthält. In einer alternativen Ausführungsform umfasst die Bindemittelkomponente (A) mindestens zwei (wie 2, 3 oder 4, insbesondere 2) Polyaminverbindungen der Formel (I) (insbesondere der Formel (Ia), (Ib) oder (Ic) wie vorstehend definiert). Beispielsweise kann die Bindemittelkomponente zwei Polyaminverbindungen der Formel (I) umfassen, wobei R¹ die Formel (II), (IIa), (IIb), (IIc), (IId), (IIe), (IIf), (IIg) oder (IIh) aufweist, wobei R³ H-Atom oder C₁₋₃-Alkylgruppe (wie Methylgruppe) ist und, falls R¹ eine der Formeln (II), (IIa) oder (IIb) aufweist, jeder der zwei Cyclohexylringe unabhängig voneinander gegebenenfalls mit einer C₁₋₃-Alkylgruppe (wie Methylgruppe) substituiert ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen), ausgewählt wird, wobei es bevorzugt ist, dass die R²-Reste identisch sind. Vorzugsweise weist die Bindemittelkomponente zwei Polyaminverbindungen der Formel (I) auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. Es ist weiterhin bevorzugt, dass die Bindemittelkomponente (A) (insbesondere die gesamte erfindungsgemäße Beschichtungszusammensetzung) - mit der Ausnahme der mindestens einen Polyaminverbindung (wie 2, 3 oder 4, insbesondere 2 Polyaminverbindungen) der Formel (I) (insbesondere der Formel (Ia), (Ib) oder (Ic) wie vorstehend definiert) - im Wesentlichen frei von Polyaminverbindungen ist.

In einer grundlegenden Ausführungsform umfasst die erfindungsgemäße Beschichtungszusammensetzung eine Bindemittelkomponente (A), die mindestens eine Polyaminverbindung der Formel (Ia) umfasst, und eine Härterkomponente (B), die eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In dieser Ausführungsform kann es bevorzugt sein, dass die Bindemittelkomponente (A) nur eine Polyaminverbindung der Formel (Ia) enthält. Alternativ kann die Bindemittelkomponente (A) mindestens zwei (wie 2, 3 oder 4, insbesondere 2) Polyaminverbindungen der Formel (Ia) umfassen. Beispielsweise kann die Bindemittelkomponente zwei Polyaminverbindungen der Formel (Ia) aufweisen, wobei R¹ die Formel (II), (IIa), (IIb), (IIc), (IId), (IIe), (IIf), (IIg) oder (IIh) aufweist, wobei R³ H-Atom oder C₁₋₃-Alkylgruppe (wie Methylgruppe) ist und, falls R¹ eine der Formeln (II), (IIa) oder (IIb) aufweist, jeder der zwei Cyclohexylringe unabhängig voneinander gegebenenfalls mit einer C₁₋₃-Alkylgruppe (wie Methylgruppe) substituiert ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen), ausgewählt wird, wobei es bevorzugt ist, dass die R²-Reste identisch sind. Vorzugsweise weist die Bindemittelkomponente zwei Polyaminverbindungen der Formel (Ia) auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. Es ist weiterhin bevorzugt, dass die Bindemittelkomponente (A) (insbesondere die gesamte erfindungsgemäße Beschichtungszusammensetzung) - mit der Ausnahme der mindestens einen Polyaminverbindung (wie 2, 3 oder 4, insbesondere 2 Polyaminverbindungen) der Formel (Ia) - im Wesentlichen frei von Polyaminverbindungen ist.

In einer weiteren grundlegenden Ausführungsform umfasst die erfindungsgemäße Beschichtungszusammensetzung eine Bindemittelkomponente (A), die mindestens eine Polyaminverbindung der Formel (Ib) umfasst, und eine Härterkomponente (B), die eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In dieser Ausführungsform kann es bevorzugt sein, dass die Bindemittelkomponente (A) nur eine Polyaminverbindung der Formel (Ib) enthält. Alternativ kann die Bindemittelkomponente (A) mindestens zwei (wie 2, 3 oder 4, insbesondere 2) Polyaminverbindungen der Formel (Ib) umfassen. Beispielsweise kann die Bindemittelkomponente zwei Polyaminverbindungen der Formel (Ib) aufweisen, wobei R¹ die Formel (II), (IIa), (IIb), (IIc), (IId), (IIe), (IIf), (IIg) oder (IIh) aufweist, wobei R³ H-Atom oder C₁₋₃-Alkylgruppe (wie Methylgruppe) ist und, falls R¹ eine der Formeln (II), (IIa) oder (IIb) aufweist, jeder der zwei Cyclohexylringe unabhängig voneinander gegebenenfalls mit einer C₁₋₃-Alkylgruppe (wie Methylgruppe) substituiert ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen), ausgewählt wird, wobei es bevorzugt ist, dass die R²-Reste identisch sind. Vorzugsweise weist die Bindemittelkomponente zwei Polyaminverbindungen der Formel (Ib) auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. Es ist weiterhin bevorzugt, dass die Bindemittelkomponente (A) (insbesondere die gesamte erfindungsgemäße Beschichtungszusammensetzung) - mit der Ausnahme der mindestens einen Polyaminverbindung (wie 2, 3 oder 4, insbesondere 2 Polyaminverbindungen) der Formel (Ib) - im Wesentlichen frei von Polyaminverbindungen ist.

In einer weiter grundlegenden Ausführungsform umfasst die erfindungsgemäße Beschichtungszusammensetzung eine Bindemittelkomponente (A), die mindestens eine Polyaminverbindung der Formel (Ic) umfasst, und eine Härterkomponente (B), die eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In dieser Ausführungsform kann es bevorzugt sein, dass die Bindemittelkomponente (A) nur eine Polyaminverbindung der Formel (Ic) enthält. Alternativ kann die Bindemittelkomponente (A) mindestens zwei (wie 2, 3 oder 4, insbesondere 2) Polyaminverbindungen der Formel (Ic) umfassen. Beispielsweise kann die Bindemittelkomponente zwei Polyaminverbindungen der Formel (Ic) aufweisen, wobei R¹ die Formel (IIc), (IId), (IIe), (IIf), (IIg) oder (IIh) aufweist, wobei R³ H-Atom oder C₁₋₃-Alkylgruppe (wie Methylgruppe) ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen), ausgewählt wird, wobei es bevorzugt ist, dass die R²-Reste identisch sind. Vorzugsweise weist die Bindemittelkomponente zwei Polyaminverbindungen der Formel (Ic) auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. Es ist weiterhin bevorzugt, dass die Bindemittelkomponente (A) (insbesondere die gesamte erfindungsgemäße Beschichtungszusammensetzung) - mit der Ausnahme der mindestens einen Polyaminverbindung (wie 2, 3 oder 4, insbesondere 2 Polyaminverbindungen) der Formel (Ic) - im Wesentlichen frei von Polyaminverbindungen ist.

In jeder der vorstehenden grundlegenden Ausführungsformen kann die erfindungsgemäße Beschichtungszusammensetzung neben den essentiellen Bestandteilen (A) und (B) auch ein oder mehrere Lösungsmittel, gegebenenfalls zusätzlich ein oder mehrere Zusatzstoffe, die auf dem Fachgebiet üblich sind, enthalten, wie einen oder beide der nachstehenden Bestandteile:
- ein oder mehrere Rheologiemodifizierungsmittel; und
- ein oder mehrere Stabilisatoren (wie ein oder mehrere Lichtschutzmittel).
In einer Ausführungsform kann daher die erfindungsgemäße Beschichtungszusammensetzung eine Bindemittelkomponente (A), eine Härterkomponente (B) und ein oder mehrere Lösungsmittel umfassen, wobei die Bindemittelkomponente (A) mindestens eine Polyaminverbindung der Formel (I) (insbesondere eine der vor- oder nachstehend beschriebenen Polyaminverbindungen der Formel (Ia), (Ib) und/oder (Ic)) umfasst, und die Härterkomponente (B) eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In einer weiteren Ausführungsform kann die erfindungsgemäße Beschichtungszusammensetzung eine Bindemittelkomponente (A), eine Härterkomponente (B), ein oder mehrere Lösungsmittel und ein oder mehrere Rheologiemodifizierungsmittel umfassen, wobei die Bindemittelkomponente (A) mindestens eine Polyaminverbindung der Formel (I) (insbesondere eine der vor- oder nachstehend beschriebenen Polyaminverbindungen der Formel (Ia), (Ib) und/oder (Ic)) umfasst, und die Härterkomponente (B) eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In einer weiteren Ausführungsform kann die erfindungsgemäße Beschichtungszusammensetzung eine Bindemittelkomponente (A), eine Härterkomponente (B), ein oder mehrere Lösungsmittel und ein oder mehrere Stabilisatoren (wie ein oder mehrere Lichtschutzmittel) umfassen, wobei die Bindemittelkomponente (A) mindestens eine Polyaminverbindung der Formel (I) (insbesondere eine der vor- oder nachstehend beschriebenen Polyaminverbindungen der Formel (Ia), (Ib) und/oder (Ic)) umfasst, und die Härterkomponente (B) eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In einer weiteren Ausführungsform kann die erfindungsgemäße Beschichtungszusammensetzung eine Bindemittelkomponente (A), eine Härterkomponente (B), ein oder mehrere Lösungsmittel, ein oder mehrere Rheologiemodifizierungsmittel und ein oder mehrere Stabilisatoren (wie ein oder mehrere Lichtschutzmittel) umfassen, wobei die Bindemittelkomponente (A) mindestens eine Polyaminverbindung der Formel (I) (insbesondere eine der vor- oder nachstehend beschriebenen Polyaminverbindungen der Formel (Ia), (Ib) und/oder (Ic)) umfasst, und die Härterkomponente (B) eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In jeder dieser Ausführungsformen, in denen neben den essentiellen Bestandteilen (A) und (B) auch (1) ein oder mehrere Lösungsmittel und gegebenenfalls (2) ein oder mehrere Rheologiemodifizierungsmittel und/oder (3) ein oder mehrere Stabilisatoren (wie ein oder mehrere Lichtschutzmittel) in der erfindungsgemäßen Beschichtungszusammensetzung enthalten sind, kann es bevorzugt sein, dass die Bindemittelkomponente (A) nur eine Polyaminverbindung der Formel (I) (insbesondere der Formel (Ia), (Ib) oder (Ic) wie vorstehend definiert) enthält oder, alternativ, dass die Bindemittelkomponente (A) mindestens zwei (wie 2, 3 oder 4, insbesondere 2) Polyaminverbindungen der Formel (I) (insbesondere der Formel (Ia), (Ib) oder (Ic) wie vorstehend definiert) umfasst. Beispielsweise kann die Bindemittelkomponente zwei Polyaminverbindungen der Formel (I) umfassen, wobei R¹ die Formel (II), (IIa), (IIb), (IIc), (IId), (IIe), (IIf), (IIg) oder (IIh) aufweist, wobei R³ H-Atom oder C₁₋₃-Alkylgruppe (wie Methylgruppe) ist und, falls R¹ eine der Formeln (II), (IIa) oder (IIb) aufweist, jeder der zwei Cyclohexylringe unabhängig voneinander gegebenenfalls mit einer C₁₋₃-Alkylgruppe (wie Methylgruppe) substituiert ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen), ausgewählt wird, wobei es bevorzugt ist, dass die R²-Reste identisch sind. Vorzugsweise weist die Bindemittelkomponente zwei Polyaminverbindungen der Formel (I) auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. Es ist weiterhin bevorzugt, dass die Bindemittelkomponente (A) (insbesondere die gesamte erfindungsgemäße Beschichtungszusammensetzung) - mit der Ausnahme der mindestens einen Polyaminverbindung (wie 2, 3 oder 4, insbesondere 2 Polyaminverbindungen) der Formel (I) (insbesondere der Formel (Ia), (Ib) oder (Ic) wie vorstehend definiert) - im Wesentlichen frei von Polyaminverbindungen ist.

In weiteren analogen Ausführungsformen kann die erfindungsgemäße Beschichtungszusammensetzung eine Bindemittelkomponente (A), eine Härterkomponente (B) und (1) ein oder mehrere Lösungsmittel, (2) ein oder mehrere Lösungsmittel und ein oder mehrere Rheologiemodifizierungsmittel, (3) ein oder mehrere Lösungsmittel und ein oder mehrere Stabilisatoren (wie ein oder mehrere Lichtschutzmittel) oder (4) ein oder mehrere Lösungsmittel, ein oder mehrere Rheologiemodifizierungsmittel und ein oder mehrere Stabilisatoren (wie ein oder mehrere Lichtschutzmittel) umfassen, wobei die Bindemittelkomponente (A) mindestens eine Polyaminverbindung der Formel (Ia) (oder (Ib) oder (Ic)) umfasst, und die Härterkomponente (B) eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In diesen analogen Ausführungsformen kann es bevorzugt sein, dass die Bindemittelkomponente (A) nur eine Polyaminverbindung der Formel (Ia) (oder (Ib) oder (Ic)) enthält oder dass, alternativ, die Bindemittelkomponente (A) mindestens zwei (wie 2, 3 oder 4, insbesondere 2) Polyaminverbindungen der Formel (Ia) (oder (Ib) oder (Ic)) umfasst. Beispielsweise kann die Bindemittelkomponente zwei Polyaminverbindungen der Formel (Ia) (oder (Ib) oder (Ic)) aufweisen, wobei R¹ die Formel (II), (IIa), (IIb), (IIc), (IId), (IIe), (IIf), (IIg) oder (IIh) umfassen, wobei R³ H-Atom oder C₁₋₃-Alkylgruppe (wie Methylgruppe) ist und, falls R¹ eine der Formeln (II), (IIa) oder (IIb) aufweist, jeder der zwei Cyclohexylringe unabhängig voneinander gegebenenfalls mit einer C₁₋₃-Alkylgruppe (wie Methylgruppe) substituiert ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen), ausgewählt wird, wobei es bevorzugt ist, dass die R²-Reste identisch sind. Vorzugsweise weist die Bindemittelkomponente zwei Polyaminverbindungen der Formel (Ia) (oder (Ib) oder (Ic)) auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. Es ist weiterhin bevorzugt, dass die Bindemittelkomponente (A) (insbesondere die gesamte erfindungsgemäße Beschichtungszusammensetzung) - mit der Ausnahme der mindestens einen Polyaminverbindung (wie 2, 3 oder 4, insbesondere 2 Polyaminverbindungen) der Formel (Ia) (oder (Ib) oder (Ic)) - im Wesentlichen frei von Polyaminverbindungen ist.

Zusätzlich kann in jeder der vorstehend beschriebenen Ausführungsformen, insbesondere in denen neben den essentiellen Bestandteilen (A) und (B) auch (1) ein oder mehrere Lösungsmittel, (2) ein oder mehrere Lösungsmittel und ein oder mehrere Rheologiemodifizierungsmittel, (3) ein oder mehrere Lösungsmittel und ein oder mehrere Stabilisatoren (wie ein oder mehrere Lichtschutzmittel) oder (4) ein oder mehrere Lösungsmittel, ein oder mehrere Rheologiemodifizierungsmittel und ein oder mehrere Stabilisatoren (wie ein oder mehrere Lichtschutzmittel) in der erfindungsgemäßen Beschichtungszusammensetzung enthalten sind, auch ein Trocknungsmittel und/oder ein oder mehrere Farbmittel und/oder ein oder mehrere Flammschutzmittel enthalten sein. So kann die erfindungsgemäße Beschichtungszusammensetzung neben den vorstehenden essentiellen Bestandteilen (A) und (B) (1) ein oder mehrere Lösungsmittel, (2) ein oder mehrere Lösungsmittel und ein oder mehrere Rheologiemodifizierungsmittel, (3) ein oder mehrere Lösungsmittel und ein oder mehrere Stabilisatoren (wie ein oder mehrere Lichtschutzmittel) oder (4) ein oder mehrere Lösungsmittel, ein oder mehrere Rheologiemodifizierungsmittel und ein oder mehrere Stabilisatoren (wie ein oder mehrere Lichtschutzmittel) und entweder (a) ein Trocknungsmittel, (b) ein oder mehrere Farbmittel, (c) ein oder mehrere Flammschutzmittel, (d) ein Trocknungsmittel und ein oder mehrere Farbmittel, (e) ein Trocknungsmittel und ein oder mehrere Flammschutzmittel, (f) ein oder mehrere Farbmittel und ein oder mehrere Flammschutzmittel oder (g) ein Trocknungsmittel, ein oder mehrere Farbmittel und ein oder mehrere Flammschutzmittel umfassen.

Falls die erfindungsgemäße Beschichtungszusammensetzung ein oder mehrere Farbmittel umfasst, kann sie als farbiges Beschichtungssystem angesehen und verwendet werden. Z.B. kann die erfindungsgemäße Beschichtungszusammensetzung ein oder mehrere deckende Farbmittel (insbesondere deckende Pigmente) und/oder ein oder mehrere deckende Füllstoffe enthalten, wodurch eine deckende Qualität erreicht werden kann, die entweder unbunt (z.B. bei Verwendung von schwarzen, weißen und/oder grauen Pigmenten und/oder Füllstoffen) oder bunt (z.B. bei Verwendung von bunten Pigmenten) sein können. Andererseits kann die erfindungsgemäße Beschichtungszusammensetzung ein oder mehrere transparente Farbstoffe, d.h. farbige Verbindungen, die in der erfindungsgemäßen Beschichtungszusammensetzung (z.B. in dem einen oder den mehreren Lösungsmitteln, die in der Beschichtungszusammensetzung vorhanden sind), löslich sind, enthalten. Somit kann eine farbige, transparente Beschichtung erzeugt werden. In einer alternativen Ausführungsform ist die erfindungsgemäße Beschichtungszusammensetzung frei von Farbmitteln (und/oder frei von nicht transparenten Verbindungen wie Füllstoffen) und kann daher als nichtfarbiges Klarlacksystem (d.h. nichtfarbiges transparentes Lacksystem) angesehen und verwendet werden.

Die erfindungsgemäße Beschichtungszusammensetzung, wie sie insbesondere in einer der vorstehenden grundlegenden Ausführungsformen, in einer der vorstehenden analogen Ausführungsformen oder in einer der anderen vor- oder nachstehenden Ausführungsformen spezifiziert ist, liegt vorzugsweise als 2-Komponentenzusammensetzung oder Mehrkomponentenzusammensetzung vor, wobei z.B. eine Komponente die Bindemittelkomponente (A), gegebenenfalls in Kombination mit einem oder mehreren Lösungsmitteln, einem oder mehreren Rheologiemodifizierungsmitteln und/oder einem oder mehreren Stabilisatoren, in einem Behälter umfasst und eine andere Komponente die Härterkomponente (B), gegebenenfalls in Kombination mit einem oder mehreren Lösungsmitteln, in einem anderen Behälter umfasst. Weiterhin kann in einer Komponente oder in allen Komponenten ein Trocknungsmittel vorhanden sein und/oder in einer Komponente (insbesondere der Komponente, die die Bindemittelkomponente (A) umfasst) können ein oder mehrere Farbmittel vorhanden sein.

In jeder der vor- oder nachstehenden Ausführungsformen der erfindungsgemäßen Beschichtungszusammensetzung, insbesondere in jeder der vorstehenden grundlegenden Ausführungsformen oder in jeder der vorstehenden analogen Ausführungsformen, ist es bevorzugt, dass die erfindungsgemäße Beschichtungszusammensetzung im Wesentlichen frei von (i) Styrol-Verbindungen und/oder (ii) Wasser und/oder (iii) ungesättigten Polyestern ist. In einer Ausführungsform ist die erfindungsgemäße Beschichtungszusammensetzung im Wesentlichen frei von (i) Styrol-Verbindungen, (ii) Wasser und (iii) ungesättigten Polyestern. Falls die erfindungsgemäße Beschichtungszusammensetzung als 2- oder Mehrkomponentenzusammensetzung vorliegt, können eine, mehrere oder alle Komponenten der Beschichtungszusammensetzung im Wesentlichen frei von (i) Styrol-Verbindungen, (ii) Wasser und/oder (iii) ungesättigten Polyestern sein. Es ist z.B. bevorzugt, dass alle Komponenten der Beschichtungszusammensetzung im Wesentlichen frei von Styrol-Verbindungen und/oder ungesättigten Polyestern sind. Auch ist es bevorzugt, dass zumindest die Komponente, die die Härterkomponente (B) enthält, im Wesentlichen frei von Wasser ist (was z.B. durch das Vorhandensein eines Trocknungsmittels in dieser Komponente erreicht werden kann). In einer Ausführungsform liegt die erfindungsgemäße Beschichtungszusammensetzung als 2- oder Mehrkomponentenzusammensetzung vor, wobei alle Komponenten der Beschichtungszusammensetzung im Wesentlichen frei von Styrol-Verbindungen, Wasser und ungesättigten Polyestern sind.

In einer bevorzugten Ausführungsform liegt die erfindungsgemäße Beschichtungszusammensetzung als 2-Komponentenzusammensetzung vor, wobei die Komponente (1) die Bindemittelkomponente (A), ein oder mehrere Lösungsmittel, ein oder mehrere Rheologiemodifizierungsmittel und ein oder mehrere Stabilisatoren (wie ein oder mehrere Lichtschutzmittel) umfasst, wobei die Bindemittelkomponente (A) mindestens eine Polyaminverbindung der Formel (Ia) oder (Ib) oder (Ic), insbesondere (Ic), umfasst, und die Komponente (2) die Härterkomponente (B) und ein oder mehrere Lösungsmittel umfasst, wobei die Härterkomponente (B) eine Kombination eines auf Isophorondiisocyanat basierenden Polyisocyanats und eines Allophanat-Multimers eines aliphatischen Polyisocyanats, wie sie vorstehend unter B(iii) beschrieben oder nachstehend spezifiziert ist, umfasst. In dieser bevorzugten Ausführungsformen kann es bevorzugt sein, dass die Bindemittelkomponente (A) nur eine Polyaminverbindung der Formel (Ia) oder (Ib) oder (Ic), insbesondere (Ic), enthält oder dass, alternativ, die Bindemittelkomponente (A) mindestens zwei (wie 2, 3 oder 4, insbesondere 2) Polyaminverbindungen der Formel (Ia) oder (Ib) oder (Ic), insbesondere (Ic), umfasst. Beispielsweise kann die Bindemittelkomponente zwei Polyaminverbindungen der Formel (Ia) oder (Ib) oder (Ic), insbesondere (Ic), umfassen, wobei R¹ die Formel (II), (IIa), (IIb), (IIc), (IId), (IIe), (IIf), (IIg) oder (IIh) aufweist, wobei R³ H-Atom oder C₁₋₃-Alkylgruppe (wie Methylgruppe) ist und, falls R¹ eine der Formeln (II), (IIa) oder (IIb) aufweist, jeder der zwei Cyclohexylringe unabhängig voneinander gegebenenfalls mit einer C₁₋₃-Alkylgruppe (wie Methylgruppe) substituiert ist, und R² aus C₁₋₆-Alkyl- und C₆₋₁₀-Arylgruppen, insbesondere C₁₋₃-Alkylgruppen (wie Methyl-, Ethyl-, n-Propyl- und Isopropylgruppen), ausgewählt wird, wobei es bevorzugt ist, dass die R²-Reste identisch sind. Vorzugsweise weist die Bindemittelkomponente zwei Polyaminverbindungen der Formel (Ia) oder (Ib) oder (Ic), insbesondere (Ic), auf, wobei in der einen Polyaminverbindung R¹ die Formel (IIc), (IId), (IIe) oder (IIf) (insbesondere (IId) oder (IIf)) aufweist und in der anderen Polyaminverbindung R¹ die Formel (IIg) oder (IIh) (insbesondere (IIh)) aufweist. Es ist weiterhin bevorzugt, dass die Bindemittelkomponente (A) (insbesondere die gesamte Komponente (1), noch mehr bevorzugt die gesamte erfindungsgemäße Beschichtungszusammensetzung) - mit der Ausnahme der mindestens einen Polyaminverbindung (wie 2, 3 oder 4, insbesondere 2 Polyaminverbindungen) der Formel (Ia) oder (Ib) oder (Ic), insbesondere (Ic), - im Wesentlichen frei von Polyaminverbindungen ist. Auch ist es insbesondere bevorzugt, dass (a) die erfindungsgemäße Beschichtungszusammensetzung im Wesentlichen frei von Styrol-Verbindungen ist, (b) die gesamte erfindungsgemäße Beschichtungszusammensetzung im Wesentlichen frei von Styrol-Verbindungen und ungesättigten Polyestern ist, (c) die gesamte erfindungsgemäße Beschichtungszusammensetzung im Wesentlichen frei von Styrol-Verbindungen ist und mindestens die Komponente (2) (insbesondere beide Komponenten (1) und (2)) im Wesentlichen frei von Wasser ist (was z.B. durch das Vorhandensein eines Trocknungsmittels in dieser/diesen Komponente(n) erreicht werden kann), oder (d) die gesamte erfindungsgemäße Beschichtungszusammensetzung im Wesentlichen frei von Styrol-Verbindungen und ungesättigten Polyestern ist und mindestens die Komponente (2) (insbesondere beide Komponenten (1) und (2)) im Wesentlichen frei von Wasser ist (was z.B. durch das Vorhandensein eines Trocknungsmittels in dieser/diesen Komponente(n) erreicht werden kann).

Die essentiellen und optionalen Bestandteile der erfindungsgemäßen Beschichtungszusammensetzung können in üblichen Mengen und Verhältnissen vorhanden sein. Nachstehend werden allgemeine und bevorzugte Mengen bzw. Verhältnisse für die einzelnen essentiellen und optionalen Bestandteile der erfindungsgemäßen Beschichtungszusammensetzung aufgelistet.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Menge der mindestens einen Polyaminverbindung der Formel (I) in der erfindungsgemäßen Beschichtungszusammensetzung mindestens 25 Gew.-%, beispielsweise 30 bis 55 Gew.-%, mehr bevorzugt 32 bis 50 Gew.-%, mehr bevorzugt 34 bis 45 Gew.-%, mehr bevorzugt 36 bis 43 Gew.-%, bezogen auf das Gesamtgewicht der Beschichtungszusammensetzung, betragen. Falls die erfindungsgemäße Beschichtungszusammensetzung zwei oder mehr Polyaminverbindungen der Formel (I) umfasst, beziehen sich die vorstehenden Mengenangaben auf die Gesamtmenge der zwei oder mehr Polyaminverbindungen der Formel (I). Falls die erfindungsgemäße Beschichtungszusammensetzung neben der mindestens einen Polyaminverbindung der Formel (I) ein oder mehrere weitere Bindemittel umfasst, so kann/können dieses eine oder die mehreren weiteren Bindemittel in einer Gesamtmenge von maximal 20 Gew.-%, (vorzugsweise 1 bis 15 Gew.-%, mehr bevorzugt 2 bis 10 Gew.-%, mehr bevorzugt 3 bis 5 Gew.-%), bezogen auf das Gesamtgewicht der Beschichtungszusammensetzung, vorhanden sein.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Menge des auf Isophorondiisocyanat basierenden Polyisocyanats in der erfindungsgemäßen Beschichtungszusammensetzung mindestens 9 Gew.-%, beispielsweise 11 bis 30 Gew.-%, mehr bevorzugt 13 bis 25 Gew.-%, mehr bevorzugt 15 bis 22 Gew.-%, mehr bevorzugt 16 bis 20 Gew.-%, mehr bevorzugt 17 bis 19 Gew.-%, bezogen auf das Gesamtgewicht der Beschichtungszusammensetzung, betragen.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Menge des Allophanat-Multimers eines aliphatischen Polyisocyanats in der erfindungsgemäßen Beschichtungszusammensetzung mindestens 8 Gew.-%, beispielsweise 9 bis 25 Gew.-%, mehr bevorzugt 10 bis 23 Gew.-%, mehr bevorzugt 11 bis 20 Gew.-%, mehr bevorzugt 12 bis 17 Gew.-%, mehr bevorzugt 13 bis 14 Gew.-%, bezogen auf das Gesamtgewicht der Beschichtungszusammensetzung, betragen.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Gesamtmenge von (i) dem auf Isophorondiisocyanat basierenden Polyisocyanat und (ii) dem Allophanat-Multimer eines aliphatischen Polyisocyanats in der erfindungsgemäßen Beschichtungszusammensetzung mindestens 17 Gew.-%, beispielsweise 20 bis 40 Gew.-%, mehr bevorzugt 15 bis 38 Gew.-%, mehr bevorzugt 20 bis 36 Gew.-%, mehr bevorzugt 25 bis 34 Gew.-%, mehr bevorzugt 30 bis 32 Gew.-%, bezogen auf das Gesamtgewicht der Beschichtungszusammensetzung, betragen.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, beträgt das Gewichtsverhältnis von (i) dem auf Isophorondiisocyanat basierenden Polyisocyanat zu (ii) dem Allophanat-Multimer eines aliphatischen Polyisocyanats in der erfindungsgemäßen Beschichtungszusammensetzung 1:1 bis 2:1, wie 1:1 bis 1,5:1.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Menge an Lösungsmittel(n), die durch Bestandteile der Beschichtungszusammensetzung (d.h. die Bestandteile (A), (B) und/oder die optionalen Bestandteile) in die Beschichtungszusammensetzung eingebracht wird, weniger als 15 Gew.-%, mehr bevorzugt weniger als 14 Gew.-%, mehr bevorzugt weniger als 13 Gew.-%, mehr bevorzugt weniger als 12 Gew.-%, mehr bevorzugt weniger als 11 Gew.-%, mehr bevorzugt weniger als 10 Gew.-%, mehr bevorzugt weniger als 9 Gew.-%, mehr bevorzugt weniger als 8 Gew.-%, mehr bevorzugt weniger als 7 Gew.-%, mehr bevorzugt weniger als 6 Gew.-%, mehr bevorzugt weniger als 5 Gew.-%, bezogen auf das Gesamtgewicht der Beschichtungszusammensetzung, betragen. In jeder der vor- oder nachstehenden Ausführungsformen der erfindungsgemäßen Beschichtungszusammensetzung kann die Gesamtmenge an sonstigem Lösungsmittel / sonstigen Lösungsmitteln in der erfindungsgemäßen Beschichtungszusammensetzung 0 bis 18 Gew.-%, beispielweise 4 bis 17 Gew.-%, vorzugsweise 6 bis 16 Gew.-%, mehr bevorzugt 8 bis 15 Gew.-%, mehr bevorzugt 10 bis 14 Gew.-%, bezogen auf das Gesamtgewicht der Beschichtungszusammensetzung, betragen. In jeder der vor- oder nachstehenden Ausführungsformen der erfindungsgemäßen Beschichtungszusammensetzung kann die Gesamtmenge an Lösungsmitteln (eingebrachte Lösungsmittel + sonstige Lösungsmittel) in der erfindungsgemäßen Beschichtungszusammensetzung beispielsweise 0 bis 30 Gew.-%, vorzugsweise 5 bis 29 Gew.-%, mehr bevorzugt 10 bis 28 Gew.-%, mehr bevorzugt 15 bis 27 Gew.-%, mehr bevorzugt 20 bis 26 Gew.-%, mehr bevorzugt 23 bis 25 Gew.-%, bezogen auf das Gesamtgewicht der Beschichtungszusammensetzung, betragen.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Gesamtmenge des einen oder der mehreren Rheologiemodifizierungsmittel in der erfindungsgemäßen Beschichtungszusammensetzung 0 bis 2,0 Gewichtsteile, vorzugsweise 0,2 bis 1,8 Gewichtsteile, mehr bevorzugt 0,4 bis 1,6 Gewichtsteile, mehr bevorzugt 0,6 bis 1,4 Gewichtsteile, mehr bevorzugt 0,7 bis 1,2 Gewichtsteile, bezogen auf 100 Gewichteile der mindestens einen Polyaminverbindung der Formel (I), betragen. Allgemein ist es wünschenswert, dass, bezogen auf das Gesamtgewicht der Beschichtungszusammensetzung, das eine oder die mehreren Rheologiemodifizierungsmittel in der erfindungsgemäßen Beschichtungszusammensetzung in einer Gesamtmenge von 0 bis 1,5 Gew.-%, vorzugsweise 0,10 bis 1,2 Gew.-%, mehr bevorzugt 0,15 bis 0,8 Gew.-%, mehr bevorzugt 0,20 bis 0,6 Gew.-%, mehr bevorzugt 0,25 bis 0,5 Gew.-%, mehr bevorzugt 0,3 bis 0,4 Gew.-%, vorhanden sind.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Gesamtmenge des einen oder der mehreren Stabilisatoren (wie Lichtschutzmittel) in der erfindungsgemäßen Beschichtungszusammensetzung 0 bis 4,0 Gewichtsteile, vorzugsweise 1,0 bis 3,8 Gewichtsteile, mehr bevorzugt 2,0 bis 3,6 Gewichtsteile, mehr bevorzugt 2,5 bis 3,4 Gewichtsteile, mehr bevorzugt 2,8 bis 3,2 Gewichtsteile, bezogen auf 100 Gewichteile der mindestens einen Polyaminverbindung der Formel (I), betragen. Allgemein ist es wünschenswert, dass, bezogen auf das Gesamtgewicht der Beschichtungszusammensetzung, die einen oder mehreren Stabilisatoren in der erfindungsgemäßen Beschichtungszusammensetzung in einer Gesamtmenge von 0 bis 2,0 Gew.-%, vorzugsweise 0,5 bis 1,8 Gew.-%, mehr bevorzugt 0,9 bis 1,6 Gew.-%, mehr bevorzugt 1,1 bis 1,4 Gew.-%, vorhanden sind.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, ist es insbesondere bevorzugt, dass die Konzentration an flüchtigen organischen Verbindungen (VOC) in der Beschichtungszusammensetzung (d.h. Menge an VOC in g pro Volumen an Beschichtungszusammensetzung in l) weniger als 500 g/l (vorzugsweise weniger als 450 g/l, mehr bevorzugt weniger als 400 g/l, mehr bevorzugt weniger als 350 g/l, mehr bevorzugt weniger als 300 g/l, mehr bevorzugt weniger als 280 g/l, mehr bevorzugt weniger als 260 g/l) beträgt.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Menge an Trocknungsmittel in der erfindungsgemäßen Beschichtungszusammensetzung 0 bis 8,0 Gewichtsteile, vorzugsweise 0,5 bis 6,0 Gewichtsteile, mehr bevorzugt 1,0 bis 4,0 Gewichtsteile, bezogen auf 100 Gewichteile der Gesamtmenge des Allophanat-Multimers eines aliphatischen Polyisocyanats und des auf Isophorondiisocyanat basierendes Polyisocyanats, betragen. Allgemein ist es wünschenswert, dass, bezogen auf das Gesamtgewicht der Beschichtungszusammensetzung, das Trocknungsmittel in der erfindungsgemäßen Beschichtungszusammensetzung in einer Menge von 0 bis 1,0 Gew.-%, vorzugsweise 0,1 bis 0,8 Gew.-%, mehr bevorzugt 0,2 bis 0,6 Gew.-%, mehr bevorzugt 0,3 bis 0,4 Gew.-%, vorhanden ist.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Gesamtmenge an dem einen oder den mehreren Flammschutzmitteln in der erfindungsgemäßen Beschichtungszusammensetzung 0 bis 30 Gewichtsteile, vorzugsweise 10 bis 25 Gewichtsteile, mehr bevorzugt 15 bis 20 Gewichtsteile, bezogen auf 100 Gewichteile der in der Beschichtungszusammensetzung enthaltenen Festkörper, betragen. Allgemein ist es wünschenswert, dass, bezogen auf das Gesamtgewicht der Beschichtungszusammensetzung, das eine oder die mehreren Flammschutzmittel in der erfindungsgemäßen Beschichtungszusammensetzung in einer Gesamtmenge von 0 bis 30 Gew.-% (vorzugsweise 5 bis 28 Gew.-%, wie 10 bis 27 Gew.-%, 15 bis 26 Gew.-% oder 20 bis 25 Gew.-%) vorhanden sind.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Gesamtmenge an dem einen oder den mehreren Füllstoffen in der erfindungsgemäßen Beschichtungszusammensetzung 0 bis 5 Gew.-%, vorzugsweise 0,5 bis 4,0 Gew.-%, mehr bevorzugt 1,0 bis 3,0 Gew.-%, mehr bevorzugt 1,5 bis 2,0 Gew.-%, bezogen auf das Gesamtgewicht der Beschichtungszusammensetzung, betragen.

In jeder der vor- oder nachstehenden Ausführungsformen der erfindungsgemäßen Beschichtungszusammensetzung, insbesondere in jeder der vorstehenden grundlegenden, analogen und bevorzugten Ausführungsformen, kann die Gesamtmenge an dem einen oder den mehreren Farbmitteln in der erfindungsgemäßen Beschichtungszusammensetzung 0 bis 30 Gew.-%, wie 5 bis 25 Gew.-%, 10 bis 22 Gew.-% oder 15 bis 20 Gew.-%, bezogen auf das Gesamtgewicht der Beschichtungszusammensetzung, vorhanden sein. Generell wird die Gesamtmenge an Farbmitteln, die in der erfindungsgemäßen Beschichtungszusammensetzung enthalten sein kann, auch von dem Deckvermögen der jeweiligen verwendeten Farbmittel abhängen. So kann, falls Farbmittel mit einem starken Deckvermögen (wie Pigmente mit einem starken Deckvermögen (z.B. Ruß) oder Farbstoffe mit einem starken Deckvermögen (z.B. Dioxazinviolett)) in der erfindungsgemäßen Beschichtungszusammensetzung verwendet werden, die Gesamtmenge der Farbmittel z.B. lediglich bis zu 10 Gew.-% (oder bis zu 8 Gew.-%, vorzugsweise 0,3 bis 5,0 Gew.-%, mehr bevorzugt 0,4 bis 4,0 Gew.-%, mehr bevorzugt 0,5 bis 3,0 Gew.-%), bezogen auf das Gesamtgewicht der Beschichtungszusammensetzung, betragen. Anderseits kann, falls Farbmittel mit einem schwachen Deckvermögen (wie Pigmente mit einem schwachen Deckvermögen (z.B. Titandioxid) oder Farbstoffe mit einem schwachen Deckvermögen (z.B. ein Triphenylmethanfarbstoff wie Malachitgrün)) in der erfindungsgemäßen Beschichtungszusammensetzung verwendet werden, die Gesamtmenge der Farbmittel z.B. im Bereich von 15 bis 30 Gew.-% (wie 20 bis 29 Gew.-%, 22 bis 28 Gew.-% oder 24 bis 26 Gew.-%), bezogen auf das Gesamtgewicht der Beschichtungszusammensetzung, liegen.

Beispielsweise können die einzelnen Bestandteile in den in der nachstehenden Tabelle 1 angegebenen allgemeinen, bevorzugten und mehr bevorzugten Mengen bzw. Verhältnissen in der erfindungsgemäßen Beschichtungszusammensetzung vorhanden sein (wobei die folgenden Abkürzungen verwendet werden: PA(I): Polyaminverbindung der Formel (I); Allo: Allophanat-Multimer eines aliphatischen Polyisocyanats; IPI: auf Isophorondiisocyanat basierendes Polyisocyanat; GG BZ: Gesamtgewicht der erfindungsgemäßen Beschichtungszusammensetzung; GT: Gewichtsteile; Rheo: Rheologiemodifizierungsmittel; stark deckendes Farbmittel: Farbmittel mit starkem Deckungsvermögen; schwach deckendes Farbmittel: Farbmittel mit schwachem Deckungsvermögen; die Gewichtsangaben in der Tabelle können so kombiniert werden, dass deren Summe 100 Gew.-% nicht übersteigt):

**Tabelle 1**

| Bestandteil | Menge | | | Bezug |
|---|---|---|---|---|
| | allgemein | bevorzugt | mehr bevorzugt | |
| PA(I) [Gew.-%] | ≥ 25 | 30 bis 55 | 36 bis 43 | GG BZ |
| IPI [Gew.-%] | ≥ 9 | 11 bis 30 | 17 bis 19 | GG BZ |
| Allo [Gew.-%] | ≥ 8 | 9 bis 25 | 13 bis 14 | GG BZ |
| Gesamtmenge an IPI und Allo [Gew.-%] | ≥ 17 | 20 bis 40 | 30 bis 32 | GG BZ |
| Verhältnis IPI zu Allo | 1:1 bis 2:1 | 1:1 bis 2:1 | 1:1 bis 1,5:1 | - |
| Lösungsmittel | | | | |
| eingebracht [Gew.-%] | ≤ 15 | ≤ 14 | ≤ 5 | GG BZ |
| sonstige [Gew.-%] | 0 bis 18 | 4 bis 17 | 10 bis 14 | GG BZ |
| gesamt [Gew.-%] | 0 bis 30 | 5 bis 29 | 23 bis 25 | GG BZ |
| Rheo. | | | | |
| [GT] | 0 bis 2,0 | 0,2 bis 1,8 | 0,7 bis 1,2 | 100 GT PA(I) |
| [Gew.-%] | 0 bis 1,5 | 0,10 bis 1,2 | 0,3 bis 0,4 | GG BZ |
| Stabilisatoren | | | | |
| [GT] | 0 bis 4,0 | 1,0 bis 3,8 | 2,8 bis 3,2 | 100 GT PA(I) |
| [Gew.-%] | 0 bis 2,0 | 0,5 bis 1,8 | 1,1 bis 1,4 | GG BZ |
| VOC [g/l] | ≤ 500 | ≤ 450 | ≤ 260 | |
| Trocknungsmittel | | | | |
| [GT] | 0 bis 8,0 | 0,5 bis 6,0 | 1,0 bis 4,0 | 100 GT IPI + Allo |
| [Gew.-%] | 0 bis 1,0 | 0,1 bis 0,8 | 0,3 bis 0,4 | GG BZ |
| Flammschutzmittel [Gew.-%] | 0 bis 30 | 5 bis 28 | 20 bis 25 | GG BZ |
| Füllstoff [Gew.-%] | 0 bis 5 | 0,5 bis 4,0 | 1,5 bis 2,0 | GG BZ |
| Farbmittel [Gew.-%] | | | | |
| allgemein [Gew.-%] | 0 bis 30 | 5 bis 25 | 15 bis 20 | GG BZ |
| stark deckend [Gew.-%] | 0 bis 10 | 0,3 bis 5,0 | 0,5 bis 3,0 | GG BZ |
| schwach deckend [Gew.-%] | 15 bis 30 | 20 bis 29 | 24 bis 26 | GG BZ |

Die vorstehend angegebenen Mengen bzw. Verhältnisse beziehen sich vorzugsweise auf den Fall, dass sich die erfindungsgemäße Beschichtungszusammensetzung in einer Form befindet, in der sie sofort auf ein Substrat aufgetragen werden kann (d.h. dass alle Komponenten der erfindungsgemäße Beschichtungszusammensetzung bereits gemischt wurden und eine 1-Komponentenzusammensetzung vorliegt); sie können aber auch als Grundlage für 2- oder Mehrkomponentenzusammensetzungen herangezogen werden. Falls die erfindungsgemäße Beschichtungszusammensetzung, insbesondere in einer der vorstehenden grundlegenden Ausführungsformen oder in einer der vorstehenden analogen Ausführungsformen, als 2-Komponentenzusammensetzung vorliegt, können die zwei Komponenten die Bestandteile wie folgt enthalten. Beispielsweise kann Komponente (1) das mindestens eine Polyaminverbindung der Formel (I), gegebenenfalls zusammen mit einem oder mehreren Lösungsmitteln, einem oder mehreren Rheologiemodifizierungsmitteln und einem oder mehreren Stabilisatoren umfassen, wobei die Menge der mindestens einen Polyaminverbindung der Formel (I) (bzw. die Gesamtmenge der 2 oder mehr Polyaminverbindungen der Formel (I)) in der Komponente (1) mindestens 55 Gew.-%, beispielsweise 60 bis 100 Gew.-%, mehr bevorzugt 65 bis 95 Gew.-%, mehr bevorzugt 70 bis 90 Gew.-%, mehr bevorzugt 75 bis 90 Gew.-%, bezogen auf das Gesamtgewicht der Komponente (1), betragen kann. Falls die Komponente (1) ein oder mehrere Lösungsmittel enthält, können diese in entsprechenden Mengen, z.B. bis zu 5 Gew.-% (wie bis zu 1,5 Gew.-%, mehr bevorzugt bis zu 1 Gew.-%) an eingebrachten Lösungsmitteln, und/oder bis zu 15 Gew.-% (wie 4 bis 14 Gew.-%, mehr bevorzugt 8 bis 13 Gew.-%) an sonstigen Lösungsmitteln und/oder bis zu 17 Gew.-% (wie 8 bis 16 Gew.-%, mehr bevorzugt 9 bis 14 Gew.-%) aller Lösungsmittel (eingebrachte + sonstige Lösungsmittel), jeweils bezogen auf das Gesamtgewicht der Komponente (1), vorhanden sein. Falls die Komponente (1) ein oder mehrere Rheologiemodifizierungsmittel enthält, können diese in entsprechenden Mengen, z.B. bis zu 2,0 Gewichtsteile (vorzugsweise 0,2 bis 1,8 Gewichtsteile, mehr bevorzugt 0,7 bis 1,2 Gewichtsteile), bezogen auf 100 Gewichteile der mindestens einen Polyaminverbindung der Formel (I), und/oder in einer Gesamtmenge von bis zu 1,5 Gew.-% (vorzugsweise 0,2 bis 1,3 Gew.-%, mehr bevorzugt 0,5 bis 1,0 Gew.-%), bezogen auf das Gesamtgewicht der Komponente (1), vorhanden sein. Falls die Komponente (1) ein oder mehrere Stabilisatoren (wie Lichtschutzmittel) enthält, können diese in entsprechenden Mengen, z.B. bis zu 5,0 Gewichtsteile (vorzugsweise 1,5 bis 4,0 Gewichtsteile, mehr bevorzugt 2,5 bis 3,5 Gewichtsteile), bezogen auf 100 Gewichteile der mindestens einen Polyaminverbindung der Formel (I), und/oder in einer Gesamtmenge von bis zu 4,0 Gew.-% (vorzugsweise 1,0 bis 3,5 Gew.-%, mehr bevorzugt 2,0 bis 3,0 Gew.-%), bezogen auf das Gesamtgewicht der Komponente (1), vorhanden sein. Es ist insbesondere bevorzugt, dass die Konzentration an flüchtigen organischen Verbindungen (VOC) in der Komponente (1) (d.h. Menge an VOC in g pro Volumen an Komponente (1) in l) weniger als 250 g/l (vorzugsweise weniger als 200 g/l, mehr bevorzugt weniger als 180 g/l, mehr bevorzugt weniger als 160 g/l, mehr bevorzugt weniger als 150 g/l, mehr bevorzugt weniger als 140 g/l, mehr bevorzugt weniger als 130 g/l, mehr bevorzugt weniger als 120 g/l) beträgt. Falls die Komponente (1) ein oder mehrere Flammschutzmittel enthält, können diese in entsprechenden Mengen, z.B. in einer Gesamtmenge von bis 60 Gew.-% (vorzugsweise 10 bis 56 Gew.-%, wie 20 bis 54 Gew.-%, 30 bis 52 Gew.-% oder 40 bis 50 Gew.-%) vorhanden sein. Falls sowohl die Komponente (1) als auch die Komponente (2) ein oder mehrere Flammschutzmittel enthalten, kann/können das eine oder die mehreren Flammschutzmittel in der Komponente (1) in einer entsprechend niedrigeren Gesamtmenge (z.B. in einer Gesamtmenge von bis 30 Gew.-% (vorzugsweise 5 bis 28 Gew.-%, wie 10 bis 27 Gew.-%, 15 bis 26 Gew.% oder 20 bis 25 Gew.-%)) vorhanden sein, wobei die Gesamtmenge an Flammschutzmittel in dem Gemisch der Komponenten (1) und (2) vorzugsweise im Bereich von bis 30 Gew.-% (vorzugsweise 5 bis 28 Gew.-%, wie 10 bis 27 Gew.-%, 15 bis 26 Gew.% oder 20 bis 25 Gew.-%) liegen soll. Falls die Komponente (1) ein oder mehrere Trocknungsmittel enthält, können diese in entsprechenden Mengen, z.B. bis zu 8,0 Gewichtsteile (vorzugsweise 0,5 bis 6,0 Gewichtsteile, mehr bevorzugt 1,0 bis 4,0 Gewichtsteile), bezogen auf 100 Gewichteile der mindestens einen Polyaminverbindung der Formel (I), und/oder in einer Gesamtmenge von bis zu 2,0 Gew.-% (vorzugsweise 0,2 bis 1,6 Gew.-%, mehr bevorzugt 0,6 bis 0,8 Gew.-%), bezogen auf das Gesamtgewicht der Komponente (1), vorhanden sein. Die Komponente (2) kann das auf Isophorondiisocyanat basierende Polyisocyanat und das Allophanat-Multimer eines aliphatischen Polyisocyanats, gegebenenfalls zusammen mit einem oder mehreren Lösungsmitteln enthalten. Die Menge des auf Isophorondiisocyanat basierenden Polyisocyanats in der Komponente (2) kann beispielsweise mindestens 20 Gew.-% (wie 24 bis 50 Gew.-%, vorzugsweise 28 bis 45 Gew.-%, mehr bevorzugt 32 bis 40 Gew.-%), bezogen auf das Gesamtgewicht der Komponente (2), betragen, während die Menge des Allophanat-Multimers eines aliphatischen Polyisocyanats in der Komponente (2) mindestens 15 Gew.-% (wie 18 bis 35 Gew.-%, vorzugsweise 21 bis 32 Gew.-%, mehr bevorzugt 24 bis 30 Gew.-%), bezogen auf das Gesamtgewicht der Komponente (2), betragen kann. Die Gesamtmenge von (i) dem auf Isophorondiisocyanat basierenden Polyisocyanat und (ii) dem Allophanat-Multimer eines aliphatischen Polyisocyanats in der Komponente (2) kann mindestens 35 Gew.-%, beispielsweise 42 bis 85 Gew.-%, mehr bevorzugt 45 bis 81 Gew.-%, mehr bevorzugt 48 bis 77 Gew.-%, mehr bevorzugt 52 bis 74 Gew.-%, mehr bevorzugt 56 bis 70 Gew.-%, bezogen auf das Gesamtgewicht der Beschichtungszusammensetzung, betragen. Das Gewichtsverhältnis von (i) dem auf Isophorondiisocyanat basierenden Polyisocyanat zu (ii) dem Allophanat-Multimer eines aliphatischen Polyisocyanats in der Komponente (2) kann 1:2 bis 3:1, beispielsweise 1:1,5 bis 2,5:1, mehr bevorzugt 1:1 bis 2:1, wie 1:1 bis 1,5:1, betragen. Falls die Komponente (2) ein oder mehrere Lösungsmittel enthält, können diese in entsprechenden Mengen, z.B. bis zu 30 Gew.-% (wie bis zu 25 Gew.-%, mehr bevorzugt bis zu 22 Gew.-%) an eingebrachten Lösungsmitteln, und/oder bis zu 20 Gew.-% (wie 5 bis 18 Gew.-%, mehr bevorzugt 10 bis 16 Gew.-%) an sonstigen Lösungsmitteln und/oder bis zu 50 Gew.-% (wie 15 bis 42 Gew.-%, mehr bevorzugt 20 bis 40 Gew.-%) aller Lösungsmittel (eingebrachte + sonstige Lösungsmittel), jeweils bezogen auf das Gesamtgewicht der Komponente (2), vorhanden sein. Es ist insbesondere bevorzugt, dass die Konzentration an flüchtigen organischen Verbindungen (VOC) in der Komponente (2) (d.h. Menge an VOC in g pro Volumen an Komponente (2) in 1) weniger als 500 g/l (vorzugsweise weniger als 480 g/l, mehr bevorzugt weniger als 440 g/l, mehr bevorzugt weniger als 420 g/l, mehr bevorzugt weniger als 400 g/l, mehr bevorzugt weniger als 380 g/l, mehr bevorzugt weniger als 370 g/l) beträgt. Falls die Komponente (2) ein oder mehrere Flammschutzmittel enthält, können diese in entsprechenden Mengen, z.B. in einer Gesamtmenge von bis 60 Gew.-% (vorzugsweise 10 bis 56 Gew.-%, wie 20 bis 54 Gew.-%, 30 bis 52 Gew.-% oder 40 bis 50 Gew.-%) vorhanden sein. Falls sowohl die Komponente (2) als auch die Komponente (1) ein oder mehrere Flammschutzmittel enthalten, kann/können das eine oder die mehreren Flammschutzmittel in der Komponente (2) in entsprechend niedriger Gesamtmenge (z.B. in einer Gesamtmenge von bis 30 Gew.-% (vorzugsweise 5 bis 28 Gew.-%, wie 10 bis 27 Gew.-%, 15 bis 26 Gew.% oder 20 bis 25 Gew.-%)) vorhanden sein, wobei die Gesamtmenge an Flammschutzmittel in dem Gemisch der Komponenten (2) und (1) vorzugsweise im Bereich von bis 30 Gew.-% (vorzugsweise 5 bis 28 Gew.-%, wie 10 bis 27 Gew.-%, 15 bis 26 Gew.% oder 20 bis 25 Gew.-%) liegen soll. Falls die Komponente (2) ein oder mehrere Trocknungsmittel enthält, können diese in entsprechenden Mengen, z.B. bis zu 8,0 Gewichtsteile (vorzugsweise 0,5 bis 6,0 Gewichtsteile, mehr bevorzugt 1,0 bis 4,0 Gewichtsteile), bezogen auf 100 Gewichteile der Gesamtmenge des Allophanat-Multimers eines aliphatischen Polyisocyanats und des auf Isophorondiisocyanat basierenden Polyisocyanats, und/oder in einer Gesamtmenge von bis zu 2,0 Gew.-% (vorzugsweise 0,2 bis 1,6 Gew.-%, mehr bevorzugt 0,6 bis 0,8 Gew.-%), bezogen auf das Gesamtgewicht der Komponente (1), vorhanden sein.

Beispielsweise können die einzelnen Bestandteile in den in der nachstehenden Tabelle 2 angegebenen allgemeinen, bevorzugten und mehr bevorzugten Mengen in der Komponente (1) bzw. (2) der erfindungsgemäßen Beschichtungszusammensetzung vorhanden sein (wobei folgende zusätzliche Abkürzungen verwendet werden: Kom(1): Gesamtgewicht der Komponente (1); Kom(2): Gesamtgewicht der Komponente (2); die Gewichtsangaben in der Tabelle können so kombiniert werden, dass deren Summe 100 Gew.-% für die Komponente (1) bzw. (2) nicht übersteigt):

**Tabelle 2**

| | Menge | | | Bezug |
|---|---|---|---|---|
| | allgemein | bevorzugt | mehr bevorzugt | |
| *Komponente (1)* | | | | |
| PA(I) (PA(I)) [Gew.-%] | ≥ 55 | 60 bis 100 | 75 bis 90 | Kom(1) |
| Lösungsmittel | | | | |
| eingebrachte [Gew.-%] | ≤ 2 | ≤ 1,5 | ≤ 1 | Kom(1 ) |
| sonstige [Gew.-%] | 0 bis 15 | 4 bis 14 | 8 bis 13 | Kom(1 ) |
| gesamt [Gew.-%] | 0 bis 17 | 8 bis 16 | 9 bis 14 | Kom(1 ) |
| Rheo | | | | |
| [GT] | 0 bis 2,0 | 0,2 bis 1,8 | 0,7 bis 1,2 | 100 GT PA(I) |
| [Gew.-%] | 0 bis 1,5 | 0,2 bis 1,3 | 0,5 bis 1,0 | Kom(1 ) |
| Stabilisatoren | | | | |
| [GT] | 0 bis 5,0 | 1,5 bis 4,0 | 2,5 bis 3,5 | 100 GT PA(I) |
| [Gew.-%] | 0 bis 4,0 | 1,0 bis 3,5 | 2,0 bis 3,0 | Kom(1 ) |
| VOC [g/l] | ≤ 250 | ≤ 200 | ≤ 120 | Kom(1 ) |
| Flammschutzmittel [Gew.-%] | 0 bis 60 | 10 bis 56 | 40 bis 50 | Kom(1 ) |
| Trocknungsmittel | | | | |
| [GT] | 0 bis 8,0 | 0,5 bis 6,0 | 1,0 bis 4,0 | 100 GT PA(I) |
| [Gew.-%] | 0 bis 2,0 | 0,2 bis 1,6 | 0,6 bis 0,8 | Kom(1 ) |
| | | | | |

| *Komponente (2)* | | | | |
|---|---|---|---|---|
| IPI [Gew.-%] | ≥ 20 | 24 bis 50 | 32 bis 40 | Kom(2) |
| Allo [Gew.-%] | ≥ 15 | 18 bis 35 | 24 bis 30 | Kom(2) |
| Gesamtmenge an IPI und Allo [Gew.-%] | ≥ 35 | 42 bis 85 | 56 bis 70 | Kom(2) |
| Verhältnis IPI zu Allo | 1:1 bis 2:1 | 1:1 bis 2:1 | 1:1 bis 1,5:1 | - |
| Lösungsmittel | | | | |
| eingebrachte [Gew.-%] | < 30 | < 25 | < 22 | Kom(2) |
| sonstige [Gew.-%] | 0 bis 20 | 5 bis 18 | 10 bis 16 | Kom(2) |
| gesamt [Gew.-%] | 0 bis 50 | 15 bis 42 | 20 bis 40 | Kom(2) |
| VOC [g/l] | < 500 | < 420 | < 400 | Kom(2) |
| Flammschutzmittel [Gew.-%] | 0 bis 60 | 10 bis 56 | 40 bis 50 | Kom(2) |
| Trocknungsmittel | | | | |
| [GT] | 0 bis 8,0 | 0,5 bis 6,0 | 1,0 bis 4,0 | 100 GT IPI + Allo |
| [Gew.-%] | 0 bis 2,0 | 0,2 bis 1,6 | 0,6 bis 0,8 | Kom(2) |

Ein oder mehrere Füllstoffe kann/können zusätzlich in der Komponente (1) oder (2) in entsprechenden Mengen (z.B. in einer Gesamtmenge von 0 bis 5 Gew.-%, vorzugsweise 0,5 bis 4,0 Gew.-%, mehr bevorzugt 1,0 bis 3,0 Gew.-%, mehr bevorzugt 1,5 bis 2,0 Gew.-%, bezogen auf das Gesamtgewicht der Beschichtungszusammensetzung), vorhanden sein.

Ein oder mehrere Farbmittel kann/können zusätzlich in der Komponente (1) oder (2) in entsprechenden Mengen (z.B. allgemein in einer Gesamtmenge von 0 bis 30 Gew.-% (wie 5 bis 25 Gew.-%, 10 bis 22 Gew.-% oder 15 bis 20 Gew.-%); für Farbmittel mit einem starken Deckvermögen: bis zu 10 Gew.-% (oder bis zu 8 Gew.-%, vorzugsweise 0,3 bis 5,0 Gew.-%, mehr bevorzugt 0,4 bis 4,0 Gew.-%, mehr bevorzugt 0,5 bis 3,0 Gew.-%); für Farbmittel mit einem schwachen Deckvermögen: 15 bis 30 Gew.-% (wie 20 bis 29 Gew.-%, 22 bis 28 Gew.-% oder 24 bis 26 Gew.-%), jeweils bezogen auf das Gesamtgewicht der Beschichtungszusammensetzung), vorhanden sein.

Zur Herstellung der erfindungsgemäßen Beschichtungszusammensetzung werden die Bestandteile (A) und (B) sowie gegebenenfalls ein oder mehrere optionale Bestandteile mittels Verfahren, die dem Fachmann bekannt sind, gemischt (z.B. mit Hilfe eines Dissolvers oder einer ähnlichen Rührvorrichtung), so dass eine Dispersion (falls ein oder mehrere Pigmente und/oder ein oder mehrere Füllstoffe in der Beschichtungszusammensetzung enthalten sind) oder Lösung (insbesondere eine homogene Dispersion oder Lösung) erreicht wird. Zur Einstellung der Thixotropie und/oder Viskosität der erfindungsgemäßen Beschichtungszusammensetzung können ein oder mehrere Rheologiemodifizierungsmittel und/oder ein oder mehrere Lösungsmittel zugesetzt werden. Falls die erfindungsgemäße Beschichtungszusammensetzung als 2- oder Mehrkomponentenzusammensetzung vorliegt, können die einzelnen Komponenten in einer Weise, die ähnlich zu der vorstehend beschriebenen ist, hergestellt werden. So kann beispielsweise eine 2-Komponentenzusammensetzung dadurch hergestellt werden, dass die Bestandteile der Komponente (1) (z.B. die mindestens eine Polyaminverbindung der Formel (I), gegebenenfalls zusammen mit einem oder mehreren Lösungsmitteln, einem oder mehreren Rheologiemodifizierungsmitteln, einem oder mehreren Stabilisatoren und/oder einem oder mehreren Flammschutzmitteln) wie vorstehend beschrieben gemischt werden und die Bestandteile der Komponente (2) (z.B. das auf Isophorondiisocyanat basierende Polyisocyanat und das Allophanat-Multimer eines aliphatischen Polyisocyanats, gegebenenfalls zusammen mit einem oder mehreren Lösungsmitteln, einem Trocknungsmittel und/oder einem oder mehreren Flammschutzmitteln) getrennt von der Komponente (1) wie vorstehend beschrieben gemischt werden. Vor Auftragung z.B. auf eine Oberfläche werden dann die Komponenten derart gemischt, dass sich eine erfindungsgemäße Beschichtungszusammensetzung in der Form einer 1-Komponentenzusammensetzung ergibt. Das Verhältnis von Komponente (1) (die z.B. die mindestens eine Polyaminverbindung der Formel (I), gegebenenfalls zusammen mit einem oder mehreren Lösungsmitteln, einem oder mehreren Rheologiemodifizierungsmitteln, einem oder mehreren Stabilisatoren und/oder einem oder mehreren Flammschutzmitteln, enthält) zu Komponente (2) (die z.B. das auf Isophorondiisocyanat basierende Polyisocyanat und das Allophanat-Multimer eines aliphatischen Polyisocyanats, gegebenenfalls zusammen mit einem oder mehreren Lösungsmitteln, einem Trocknungsmittel und/oder einem oder mehreren Flammschutzmitteln, enthält) kann vorzugsweise 4:1 bis 1:4, beispielsweise 3,5:1 bis 1:3,5, bevorzugt 3:1 bis 1:3, mehr bevorzugt 2,5:1 bis 1:2,5, mehr bevorzugt 2:1 bis 1:2, mehr bevorzugt 1,5:1 bis 1:1,5, mehr bevorzugt 1,2:1 bis 1:1,2, mehr bevorzugt 1,1:1 bis 1:1,1, wie 1:1, betragen, wobei sich das Verhältnis auf das Gewicht oder das Volumen der Komponenten (1) und (2) beziehen kann. Insbesondere kann das Verhältnis von Komponente (1) (die z.B. die mindestens eine Polyaminverbindung der Formel (I), gegebenenfalls zusammen mit einem oder mehreren Lösungsmitteln, einem oder mehreren Rheologiemodifizierungsmitteln, einem oder mehreren Stabilisatoren und/oder einem oder mehreren Flammschutzmitteln, enthält) zu Komponente (2) (die z.B. das auf Isophorondiisocyanat basierende Polyisocyanat und das Allophanat-Multimer eines aliphatischen Polyisocyanats, gegebenenfalls zusammen mit einem oder mehreren Lösungsmitteln, einem Trocknungsmittel und/oder einem oder mehreren Flammschutzmitteln, enthält) derart gewählt, dass das Verhältnis des Gewichts der mindestens einen Polyaminverbindung der Formel (I) zu dem Gesamtgewicht von (i) dem auf Isophorondiisocyanat basierenden Polyisocyanat und (ii) dem Allophanat-Multimer eines aliphatischen Polyisocyanats in der erfindungsgemäßen Beschichtungszusammensetzung 2:1 bis 1:2, beispielsweise 1,9:1 bis 1:1,8, mehr bevorzugt 1,8:1 bis 1:1,6, mehr bevorzugt 1,7:1 bis 1:1,4, mehr bevorzugt 1,6:1 bis 1:1,2, mehr bevorzugt 1,55:1 bis 1:1,0, mehr bevorzugt 1,5:1 bis 1,1:1, mehr bevorzugt 1,45:1 bis 1,2:1, mehr bevorzugt 1,4:1 bis 1,3:1, beträgt.

Die Topfzeit der erfindungsgemäßen Beschichtungszusammensetzung beträgt vorzugsweise 15 bis 60 min, mehr bevorzugt 20 bis 40 min, mehr bevorzugt 25 bis 30 min, insbesondere bei 20°C und 65% RF.

Wie vorstehend beschrieben, werden Oberflächen von Gegenständen (wie z.B. carbonfaserverstärkte Kunststoffe, Musikinstrumente (wie Piano oder Geige) oder Edelholzfurniere) häufig mit einer Beschichtung versehen, um der Oberfläche ein besonderes ästhetisches Aussehen (wie Hochglanz) zu verleihen und/oder die Oberfläche vor äußeren Einwirkungen (wie Kratzer und/oder Korrosion) zu schützen, wobei jedoch die gegenwärtig verwendeten Beschichtungssysteme, die auf ungesättigten Polyestern oder Acryl-Polyurethanen (Acryl-PU-Lacke) basieren, Nachteile aufweisen, wie z.B. fehlende oder unzureichende UV-Beständigkeit, Kratzempfindlichkeit, hohe Lösungsmittelemission, Einsatz von ökologisch bedenklichen Verbindungen (wie Styrole), geringe Produktivität, hoher Zeitaufwand und hohe Energiekosten (da viele Einzelschichten mit jeweils Zwischentrocknung und - schliff erforderlich sind) und/oder unzureichende mechanische Eigenschaften (z.B. Glanzreduktion und/oder Strukturbildung) durch Schrumpfung.

Daher wird in einem zweiten Aspekt die Verwendung einer erfindungsgemäßen Beschichtungszusammensetzung (wie im ersten Aspekt beschrieben) zur Ausbildung einer Beschichtung, insbesondere einer Korrosionsschutz- und/oder Brandschutzbeschichtung, auf einer Oberfläche, bereitgestellt. Vor dem Auftragen werden die Bestandteile der erfindungsgemäßen Beschichtungszusammensetzung vermischt (beispielsweise wie vorstehend bei der Herstellung der erfindungsgemäßen Beschichtungszusammensetzung beschrieben; liegt die erfindungsgemäße Beschichtungszusammensetzung z.B. als 2- oder Mehrkomponentenzusammensetzung vor, werden zunächst die 2 oder mehreren Komponenten derart gemischt, dass eine erfindungsgemäße Beschichtungszusammensetzung in der Form einer 1-Komponentenzusammensetzung entsteht). Die erfindungsgemäße Beschichtungszusammensetzung kann auf die Oberfläche in einer jeglichen, dem Fachmann bekannten Form aufgebracht werden, beispielsweise durch Spritzen (z.B. mit Luft, luftlos (airless) oder mit einem Luftgemisch (Airmix)), Streichen (z.B. mit einem Pinsel) oder einem anderen Standardverfahren. Allgemein sollte die Auftragung der erfindungsgemäßen Beschichtungszusammensetzung bei einer Temperatur von mindestens 0°C (z.B. mindestens 5°C, mindestens 10°C oder mindestens 15°C, z.B. 5°C bis 100°C, wie 10°C bis 90°C, 15°C bis 80°C, 15°C bis 70°C, 20°C bis 60°C, 20 bis 50°C, 20°C bis 40°C oder 20°C bis 30°C) und einer relativen Luftfeuchtigkeit von maximal 90% (z.B. maximal 80%, mehr bevorzugt maximal 70%, mehr bevorzugt maximal 65%, wie z.B. 35 bis 75% oder 40 bis 70%) erfolgen. Der auf der Oberfläche durch die erfindungsgemäße Beschichtungszusammensetzung ausgebildete Film (sogenannter Beschichtungsfilm) kann sodann aktiv (z.B. durch Trocknung) und/oder passiv ausgehärtet werden. In einer Ausführungsform umfasst die Trocknung ein Erwärmen auf maximal 100°C (z.B. 30 bis 90°C, bevorzugt 40 bis 80°C, mehr bevorzugt 45 bis 75°C, mehr bevorzugt 50 bis 70°C, mehr bevorzugt 55 bis 65°C), beispielsweise für 1,0 bis 10,0 min, vorzugsweise 0,5 bis 5,0 min, mehr bevorzugt 20 s bis 1,0 min, mehr bevorzugt 25 bis 50 s, mehr bevorzugt 30 bis 40 s. Eine passive Aushärtung kann bei Raumtemperatur (20°C) erfolgen, beispielsweise in 1 bis 90 min, vorzugsweise 5 bis 60 min, mehr bevorzugt 10 bis 50 min, mehr bevorzugt 15 bis 45 min, mehr bevorzugt 15 bis 30 min. Bevorzugt erfolgt die Aushärtung passiv, wie z.B. bei Raumtemperatur, ohne weitere Energiezufuhr. Vorzugsweise beträgt die Schichtdicke der durch einmaliges Auftragen der erfindungsgemäßen Beschichtungszusammensetzung und Aushärtung erzeugten Beschichtung (Trockenschichtdicke) 50 bis 300 µm, wie 60 bis 80 µm oder 100 bis 290 µm, vorzugsweise 150 bis 280 µm, mehr bevorzugt 170 bis 270 µm, mehr bevorzugt 180 bis 260 µm, mehr bevorzugt 190 bis 250 µm. Der Zyklus aus Auftragen der erfindungsgemäßen Beschichtungszusammensetzung und Aushärten kann ein- oder mehrmals (z.B. 2-, 3-, 4-, 5-, 6-, 7-, 8-, 9- oder 10-mal) wiederholt werden, um die gewünschte Gesamtschichtdicke (z.B. 200 bis 2000 µm, mehr bevorzugt 400 bis 1800 µm, mehr bevorzugt 600 bis 1600 µm, mehr bevorzugt 700 bis 1400 µm, mehr bevorzugt 800 bis 1200 µm, mehr bevorzugt 900 bis 1100 µm) zu erreichen. Sofern erforderlich, kann vor dem erstmaligen Auftragen der erfindungsgemäßen Beschichtungszusammensetzung die Oberfläche einer Vorbehandlung unterzogen werden. Diese Vorbehandlung kann beispielsweise ein Schleifen (und/oder Strahlen) und/oder ein Entfetten der Oberfläche umfassen. Des Weiteren kann auf die Beschichtung, die durch den letzten Zyklus aus Auftragen der erfindungsgemäßen Beschichtungszusammensetzung auf die Oberfläche und Aushärten des Beschichtungsfilms erzeugt wird, eine Deckbeschichtung ausgebildet werden. Die Deckbeschichtung kann durch Auftragen einer dem Fachmann bekannten Deckbeschichtungszusammensetzung (z.B. eine lösungsmittelhaltige oder wasserbasierende 2-Komponenten-Deckbeschichtungszusammensetzung) in an sich bekannter Weise ausgebildet werden.

In einem dritten erfindungsgemäßen Aspekt wird ein Verfahren zur Beschichtung einer Oberfläche bereitgestellt, das die Schritte (a) eines Aufbringens einer erfindungsgemäßen Beschichtungszusammensetzung (wie im ersten Aspekt beschrieben) auf zumindest einen Teil der Oberfläche und gegebenenfalls (b) eines Aushärtens der Beschichtungszusammensetzung umfasst. In einer Ausführungsform kann vor Schritt (a) ein Mischen der Bestandteile der erfindungsgemäßen Beschichtungszusammensetzung erfolgen (beispielsweise wie vorstehend bei der Herstellung der erfindungsgemäßen Beschichtungszusammensetzung beschrieben; liegt die erfindungsgemäße Beschichtungszusammensetzung z.B. als 2- oder Mehrkomponentenzusammensetzung vor, werden zunächst die 2 oder mehreren Komponenten derart gemischt, dass eine erfindungsgemäße Beschichtungszusammensetzung in der Form einer 1-Komponentenzusammensetzung entsteht). Schritt (a) kann in einer jeglichen, dem Fachmann bekannten Form durchgeführt werden, beispielsweise durch Spritzen (z.B. mit Luft, luftlos (airless) oder mit einem Luftgemisch (Airmix)), Streichen (z.B. mit einem Pinsel) oder einem anderen Standardverfahren. Allgemein sollte die Auftragung der erfindungsgemäßen Beschichtungszusammensetzung bei einer Temperatur von mehr als 0°C (z.B. mindestens 5°C, mindestens 10°C oder mindestens 15°C, z.B. 5°C bis 100°C, wie 10°C bis 90°C, 15°C bis 80°C, 15°C bis 70°C, 20°C bis 60°C, 20 bis 50°C, 20°C bis 40°C oder 20°C bis 30°C) und einer relativen Luftfeuchtigkeit von maximal 90% (z.B. maximal 80%, mehr bevorzugt maximal 70%, mehr bevorzugt maximal 65%, wie z.B. 35 bis 75% oder 40 bis 70%) erfolgen. Schritt (b) kann aktiv (z.B. durch Trocknen) und/oder passiv erfolgen. In einer Ausführungsform umfasst das Trocknen ein Erwärmen auf maximal 100°C (z.B. 30 bis 90°C, bevorzugt 40 bis 80°C, bevorzugt 45 bis 75°C, bevorzugt 50 bis 70°C, bevorzugt 55 bis 65°C), beispielsweise 1,0 bis 10,0 min, vorzugsweise 0,5 bis 5,0 min, mehr bevorzugt 20 s bis 1,0 min, mehr bevorzugt 25 bis 50 s, mehr bevorzugt 30 bis 40 s. Ein passives Aushärten kann bei Raumtemperatur (20°C) erfolgen, beispielsweise in 1 bis 90 min, vorzugsweise 5 bis 60 min, mehr bevorzugt 10 bis 50 min, mehr bevorzugt 15 bis 45 min, mehr bevorzugt 15 bis 30 min. Bevorzugt erfolgt Schritt (b) passiv, wie z.B. bei Raumtemperatur, ohne weitere Energiezufuhr. Vorzugsweise beträgt die Schichtdicke der durch einmaliges Auftragen der erfindungsgemäßen Beschichtungszusammensetzung und Aushärtung erzeugten Beschichtung (Trockenschichtdicke) 50 bis 300 µm, wie 60 bis 80 µm oder 100 bis 290 µm, vorzugsweise 150 bis 280 µm, mehr bevorzugt 170 bis 270 µm, mehr bevorzugt 180 bis 260 µm, mehr bevorzugt 190 bis 250 µm. Der Zyklus aus Auftragen der erfindungsgemäßen Beschichtungszusammensetzung und Aushärten kann ein- oder mehrmals (z.B. 2-, 3-, 4-, 5-, 6-, 7-, 8-, 9- oder 10-mal) wiederholt werden, um die gewünschte Gesamtschichtdicke (z.B. 100 bis 3000 µm, mehr bevorzugt 200 bis 2800 µm, mehr bevorzugt 300 bis 2600 µm, mehr bevorzugt 400 bis 2400 µm, mehr bevorzugt 500 bis 2200 µm, mehr bevorzugt 600 bis 2000 µm, mehr bevorzugt 700 bis 1800 µm, mehr bevorzugt 750 bis 1600 µm, mehr bevorzugt 800 bis 1400 µm, mehr bevorzugt 850 bis 1200 µm, mehr bevorzugt 900 bis 1000 µm) zu erreichen. Sofern erforderlich, kann vor Schritt (a) (d.h. insbesondere vor dem erstmaligen Auftragen der erfindungsgemäßen Beschichtungszusammensetzung auf die Oberfläche) ein Vorbehandeln der Oberfläche erfolgen. Dieses Vorbehandeln kann beispielsweise ein Schleifen (und/oder Strahlen) und/oder ein Entfetten der Oberfläche umfassen. Des Weiteren kann nach Schritt (b) (d.h. insbesondere nach dem letzten Zyklus aus Auftragen der erfindungsgemäßen Beschichtungszusammensetzung auf die Oberfläche und Aushärten des Beschichtungsfilms) ein Ausbilden einer Deckbeschichtung auf der Beschichtung, die durch den letzten Zyklus aus Auftragen der erfindungsgemäßen Beschichtungszusammensetzung auf die Oberfläche und Aushärten des Beschichtungsfilms erzeugt wird, erfolgen. Das Ausbilden der Deckbeschichtung kann durch Auftragen einer dem Fachmann bekannten Deckbeschichtungszusammensetzung (z.B. eine lösungsmittelhaltige oder wasserbasierende 2-Komponenten-Deckbeschichtungszusammensetzung) in an sich bekannter Weise durchgeführt werden.

In jeder der vor- oder nachstehend beschriebenen Ausführungsformen des erfindungsgemäßen zweiten und dritten Aspekts kann die zu beschichtende Oberfläche aus einem jeglichen Material aufgebaut sein. Es ist jedoch anzumerken, dass sich möglicherweise nicht jede erfindungsgemäße Beschichtungszusammensetzung für jede Oberfläche in gleich guter Weise eignet. Der Fachmann ist aber in der Lage, mit Hilfe seines Fachwissens, der Offenbarung der vorliegenden Anmeldung sowie eventuell durchzuführender Experimente festzustellen, welche erfindungsgemäße Beschichtungszusammensetzung für welche spezifische Oberfläche am besten geeignet ist. Vorzugsweise wird die Oberfläche aus der Gruppe, bestehend aus Holz (insbesondere Eiche, Esche, Buche, Ahorn, Kirschbaum (europäisch), Nussbaum (europäisch), Fichte, Teak, Macassar Rosso, Ebenholz), Metall und Kunststoff, ausgewählt. Spezifische Beispiele für Oberflächen, die mit der erfindungsgemäßen Beschichtungszusammensetzung beschichtet werden können, beinhalten carbonfaserverstärkte Kunststoffe, Musikinstrumente (wie Piano oder Geige), Tischlerplatten, Massivhölzer (insbesondere aus Eiche, Esche, Buche, Ahorn, Kirschbaum (europäisch), Nussbaum (europäisch), Fichte, Teak, Macassar Rosso oder Ebenholz), Furniere (wie Furniere aus Eiche, Esche, Buche, Ahorn, Kirschbaum (Europäisch), Nussbaum (Europäisch), Fichte, Teak, Macassar Rosso oder Ebenholz, insbesondere Edelholzfurniere), mitteldichte Faser- bzw. Holzfaserplatten (MDF-Platten mit einer Dichte von 650 kg/m³ bis 800 kg/m³) sowie Substrate, die bereits eine Beschichtung (wie eine Grundier- und/oder Lackfolie) aufweisen, wie z.B. beschichtete Span- und MDF-Platten.

In einem vierten erfindungsgemäßen Aspekt wird eine Beschichtung, insbesondere eine Korrosionsschutz- und/oder Brandschutzbeschichtung, bereitgestellt, die durch Aushärten einer erfindungsgemäßen Beschichtungszusammensetzung erhältlich ist. Vorzugsweise wird die Beschichtung, insbesondere die Korrosionsschutz- und/oder Brandschutzbeschichtung, wie vorstehend beschrieben hergestellt und/oder weist die Merkmale auf, wie sie vorstehend im Zusammenhang mit der erfindungsgemäßen Beschichtungszusammensetzung (erster Aspekt) und deren Verwendung zum Beschichten einer Oberfläche (zweiter und dritter Aspekt) beschrieben wurden. Beispielsweise kann die Beschichtung, insbesondere die Korrosionsschutz- und/oder Brandschutzbeschichtung, eine Schichtdicke von (i) 50 bis 300 µm, wie 60 bis 80 µm oder 100 bis 290 µm, vorzugsweise 150 bis 280 µm, mehr bevorzugt 170 bis 270 µm, mehr bevorzugt 180 bis 260 µm, mehr bevorzugt 190 bis 250 µm (wenn z.B. nur ein Zyklus aus Auftragen der erfindungsgemäßen Beschichtungszusammensetzung und Aushärten des Beschichtungsfilms erfolgt) oder (ii) 100 bis 3000 µm, mehr bevorzugt 200 bis 2800 µm, mehr bevorzugt 300 bis 2600 µm, mehr bevorzugt 400 bis 2400 µm, mehr bevorzugt 500 bis 2200 µm, mehr bevorzugt 600 bis 2000 µm, mehr bevorzugt 700 bis 1800 µm, mehr bevorzugt 750 bis 1600 µm, mehr bevorzugt 800 bis 1400 µm, mehr bevorzugt 850 bis 1200 µm, mehr bevorzugt 900 bis 1000 µm (wenn z.B. zwei oder mehr Zyklen aus Auftragen der erfindungsgemäßen Beschichtungszusammensetzung und Aushärten des Beschichtungsfilms erfolgen) aufweisen. In einer Ausführungsform weist die Beschichtung, insbesondere die Korrosionsschutz- und/oder Brandschutzbeschichtung, auf einer ihrer Seiten eine Deckschicht (z.B. eine lösungsmittelhaltige oder wasserbasierende 2-Komponenten-Deckbeschichtungszusammensetzung wie vorstehend beschrieben) auf.

In einem fünften erfindungsgemäßen Aspekt wird ein Gegenstand bereitgestellt, der eine Oberfläche umfasst, auf der zumindest teilweise eine Beschichtung (insbesondere eine Korrosionsschutz- und/oder Brandschutzbeschichtung) des vierten Aspekts angeordnet ist. Der Gegenstand mit der Beschichtung, insbesondere mit der Korrosionsschutz- und/oder Brandschutzbeschichtung, kann wie im Zusammenhang mit dem zweiten und dritten Aspekt beschrieben hergestellt werden. Die Oberfläche des Gegenstands kann aus einem jeglichen Material aufgebaut sein. Wie vorstehend angemerkt, ist es möglich, dass sich nicht jede erfindungsgemäße Beschichtungszusammensetzung für jede Oberfläche in gleich guter Weise eignet. Der Fachmann ist aber in der Lage, mit Hilfe seines Fachwissens, der Offenbarung der vorliegenden Anmeldung sowie eventuell durchzuführender Experimente festzustellen, welche erfindungsgemäße Beschichtungszusammensetzung für welche spezifische Oberfläche am besten geeignet ist. Vorzugsweise wird die Oberfläche aus der Gruppe, bestehend aus Holz (insbesondere Eiche, Esche, Buche, Ahorn, Kirschbaum (Europäisch), Nussbaum (Europäisch), Fichte, Teak, Macassar Rosso, Ebenholz), Metall und Kunststoff, ausgewählt. Spezifische Beispiele für Oberflächen, die mit der erfindungsgemäßen Beschichtungszusammensetzung beschichtet werden können, beinhalten carbonfaserverstärkte Kunststoffe, Musikinstrumente (wie Piano oder Geige), Tischlerplatten, Massivhölzer (z.B. aus Eiche, Esche, Buche, Ahorn, Kirschbaum (europäisch), Nussbaum (europäisch), Fichte, Teak, Macassar Rosso oder Ebenholz), Furniere (z.B. Furniere aus Eiche, Esche, Buche, Ahorn, Kirschbaum (Europäisch), Nussbaum (Europäisch), Fichte, Teak, Macassar Rosso oder Ebenholz, insbesondere Edelholzfurniere), mitteldichte Faser- bzw. Holzfaserplatten (MDF-Platten mit einer Dichte von 650 kg/m³ bis 800 kg/m³) sowie Substrate, die bereits eine Beschichtung (wie eine Grundier- und/oder Lackfolie) aufweisen, wie z.B. beschichtete Span- und MDF-Platten.

### Prüfungen

Die Beschichtungszusammensetzungen und daraus hergestellten Beschichtungen bzw. beschichteten Oberflächen können hinsichtlich ihrer Eigenschaften mit den nachstehenden Prüfungen getestet werden.

### Lösungsmittelemissionstest

Die Lösungsmittelemission wird anhand der flüchtigen Bestandteile der Beschichtungszusammensetzungen berechnet, unter der Annahme, dass die Beschichtungszusammensetzungen vorschriftsgemäß hergestellt und auf Substrate aufgetragen werden. Zur Berechnung werden die Angaben der Sicherheitsdatenblätter (der Bestandteile der jeweiligen Beschichtungszusammensetzung) über Festkörpergehalt, Dichte und flüchtige Bestandteile sowie die Angaben in der Verarbeitungsvorschrift zur Verarbeitung (Verdünnungszugabe und Mischungsverhältnis mit der Härterkomponente) verwendet.

### Kugelschlagprüfung (DIN EN ISO 6272)

Auf ein nicht federnd gelagertes, beschichtetes Substrat wird aus einer bestimmten Fallhöhe (z.B. 10 cm, 25 cm oder 100 cm) ein Kugelstößel (Durchmesser: 20 mm; Masse: 1 kg) frei fallengelassen. Nach dem Einschlag wird die Beschichtung auf Rissbildungen untersucht (z.B. nach DIN EN ISO 4628-4).

### Kondenswasser-Klima-Test (QCT-Test) nach DIN EN ISO 6270-2

Der QCT-Test kann z.B. in einem QCT Weathering Tester der Firma Q-Lab durchgeführt werden. Bei dem Test werden die zu prüfenden Substrate in einer bestimmten Größe (z.B. 150 mm x 100 mm) in das Testgerät derart eingebaut, so dass ihre Gutseite nach innen gewandt ist. Das in dem Tester befindliche Wasser wird so erhitzt, dass die Innentemperatur im Testgerät eine Temperatur von 50°C erreicht. Dabei mischt sich der Wasserdampf mit Luft und füllt die Kammer, so dass eine Luftfeuchtigkeit von 100% erreicht wird. Auf diese Weise stellen die zu prüfenden Substrate das Dach des Testgerätes dar, und die zu prüfenden Substrate werden durch die umgebende Raumluft auf der Rückseite gekühlt. Die dabei entstehende Temperaturdifferenz bewirkt, dass der Wasserdampf sich gleichmäßig auf der Gutseite der zu prüfenden Substrate niederschlägt. Das Kondensat ist destilliertes Wasser, welches mit gelöstem Sauerstoff gesättigt ist. Ein kleiner Teil des Wasserdampfes tritt durch Diffusion durch die Kanäle auf beiden Seiten der QCT-Einheit aus, so dass der Wasserdampf ständig durch Luft ersetzt wird und auf diese Weise ein konstantes Wasser-Luft-Gemisch im Gerät herrscht.

### Tiefungsprüfung (DIN EN 1520)

Durch diese Verfahren wird die Haftfestigkeit einer Beschichtung auf einem Substrat nach Eindrücken bei langsamer Verformung bestimmt. Eine Kugelkuppe (z.B. mit einem Durchmesser von 20 mm) wird in das lackierte Substrat, meist von der Rückseite bezüglich der Beschichtung, gedrückt, um gleichzeitig die Verformbarkeit und den Haftungsverlust während einer bestimmten Verformung sichtbar zu machen. Sobald der erste Riss an der Oberfläche der Beschichtung sichtbar ist, wird die Eindringbewegung gestoppt und die Tiefe gemessen.

### Haftung (z.B. nach DIN EN ISO 2409)

Zur Prüfung der Haftung der Beschichtung, die sich nach Auftragung der Beschichtungszusammensetzung auf einem Metall ausbildet, wird ein Gitterschnitt (Gt) dadurch erzeugt, dass mehrere Ritzlinien parallel und über Kreuz geführt in die Beschichtung eingebracht werden. Nach Abschluss der Klimaprüfung wird mit einem Klebestreifen, der eine definierte Haftkraft aufweist, die Haftung der Beschichtung geprüft.

### Witterungsbeständigkeit und Glanzveränderung (QUV-Test)

Die Beschichtungen werden nach DIN EN ISO 11507 mit einer Prüfdauer von 1000 h durch UV-Strahlung und Wasser beansprucht. Es können Lampen vom Typ 2, UV-A (340), verwendet werden. Jeweils vor und nach Bewitterung für einen gewissen Zeitraum (z.B. 30 h, 80 h, 220 h, 600 h, 720 h, 890, 1000 h, 1360 h und 1850 h) erfolgt sowohl die farbmetrische Bestimmung des Farbabstands nach der CIELAB-Formel nach DIN 6174 zur Beurteilung der Farbveränderung (ΔE*) nach DIN 5033-3 als auch die Bestimmung des Glanzes bei einem Winkel von 60° nach DIN EN ISO 2813.

### Cold Check-Test

Die Beschichtungen werden mehreren Bewitterungszyklen ausgesetzt, wobei ein Zyklus aus einer Belastung bei 4 h bei -20°C ohne Feuchte, gefolgt von 4 h bei +60°C mit 30% relativer Feuchte, gefolgt von 4 h bei 60°C mit 90% relativer Feuchte besteht. Die Bewertung erfolgt nach einer gewissen Anzahl an Zyklen (z.B. 28) durch visuelle Bewertung der Oberfläche bzw. Kante, sowie durch einer Haftungsprüfung mittels Gitterschnitt gemäß DIN EN ISO 2409.

### Pendelhärte-Tests (König)

Der Pendelhärte-Test (König) nach EN ISO 1522 dient zur Beurteilung der Härte von Beschichtungen durch Messen der Dämpfung eines auf der Beschichtung schwingenden Pendels. Gemessen wird die Anzahl der Schwingungen oder die Zeitspanne in Sekunden (Dämpfungsdauer), bis die Auslenkung des Pendels von dem Ausgangswinkel von 6° auf 3° abklingt. Die Dämpfung ist umso stärker, je weicher die Beschichtung ist.

### Glanzgradverlauf / DIN EN ISO 2813

Die Glanzmessung nach DIN EN ISO 2813 erfolgt mit einem Reflektometer bei gerichteter Reflexion und definiertem Einstrahlwinkel. Gemessen wird die Intensität des reflektierten Lichts in einem schmalen Bereich des Reflexionswinkels. Als Geometrien können die Einstrahlwinkel 20°, 60° und 85° gewählt werden, wobei die 20°-Geometrie für matte Beschichtungen zu bevorzugen ist, während 60° und 85° für glänzende bis hochglänzende Beschichtungen zu wählen sind.

### Chemikalienbeständigkeitstests / DIN 68861-1

Die Beschichtung wird durch Auftrag von verschiedenen Flüssigkeiten einer chemischen Beanspruchung ausgesetzt und bewertet. Die zu verwendenden Flüssigkeiten sind in der Norm DIN 68861-1 aufgelistet. Die Bewertung erfolgt nach DIN EN 12720. Die Prüfflüssigkeiten werden auf die Beschichtung mittels durchtränkter Filterpapierscheiben aufgebracht und mit einer Glasschale abgedeckt. Die Filterpapierscheiben werden nach einer festgelegen Einwirkdauer entfernt und nach einer Regenerationszeit von 16 h bis 24 h mit anschließender Reinigung erfolgt die Bewertung der Oberfläche. Bewertet werden, nach einem numerischen Einstufungscode, Veränderungen wie Entfärbung, Blasenbildung, Aufquellen, Glanzänderung und Farbänderung.

### Brandprüfungen gemäß MSC.307 (88) - (2010 FTP Code) Anlage 1 Teil 5

Die Beschichtungen werden in einer speziellen Messanordnung gemäß Entschließung MSC. 307 (88) einer Flamme ausgesetzt. Als Messgrößen werden Entzündungszeit, Flammenfortschritt, Erlöschen der Flamme, Flammenausdehnung, Rauchentwicklung, Verkohlen/Verfärben/Rissbildung, brennendes Abfallen und Dauer des Brandversuchs ermittelt. Daraus ergeben sich die abgeleiteten Brandeigenschaften wie z.B. der kritische Wärmestrom beim Verlöschen (CFE), die Wärme für anhaltendes Brennen (Qsb), die freigesetzte Gesamtwärmemenge (Qt), die maximale Wärmefreisetzungsrate (Qp) und die Wärme für die Entzündung (QI).

Gegenwärtig werden für die Erzeugung von Hochglanzbeschichtungen auf Oberflächen Systeme auf Basis von ungesättigten Polyestern oder Acryl-Polyurethane verwendet. Wie in den nachstehenden Beispielen gezeigt, weisen die erfindungsgemäßen Zusammensetzungen folgende Vorteile gegenüber gegenwärtig erhältlichen Beschichtungszusammensetzungen auf:
- Verzicht auf physiologisch bedenkliche Inhaltsstoffe (wie Styrole)
- starke Reduzierung von Lösungsmittel (um ca. 75 bis 90%) und somit auch Reduzierung von Lösungsmittelemissionen
- Reduzierung der Anzahl der Schichten, um eine Gesamtschichtdicke von 1000 µm aufzubauen, um 50% bis 70%
- starke Reduzierung (um ca. 80%) des Zeitaufwands zum Aufbau einer Beschichtung mit einer Gesamtschichtdicke von 1000 µm
- starke Reduzierung (um ca. 80%) des Energiebedarfs zum Aufbau einer Beschichtung mit einer Gesamtschichtdicke von 1000 µm
- UV-beständig, dadurch keine Unterkreidung
- bessere Kratzbeständigkeit
- witterungsbeständig
- Verarbeitungssicherheit (staubtrocken in ca. 10 bis 15 min, grifffest in 30 bis 45 min, schleifbar und überlackierbar in 60 min; Topfzeit: 30 min)
- kein Zusatz von Radikalstartern (z.B. Peroxiden) zur Aushärtung erforderlich
- geringer bis kein Schrumpf beim Aushärten
- schwer entflammbar
- Härtung nahezu unabhängig von der Temperatur
- gute mechanische Eigenschaften (z.B. hohe Härte)

Die nachfolgenden Beispiele dienen zur Veranschaulichung der vorliegenden Erfindung. Diejenigen Beispiele, die nicht unter die angehängten Patentansprüche fallen, sind lediglich zu Vergleichszwecken angegeben.

### BEISPIELE

### Beispiel 1

Beschichtungszusammensetzungen, die auf einer Polyaminverbindung der Formel (I) und üblichen Isocyanaten basieren, weisen eine schlechte Haftung auf. Zwar ist die Haftung nach Gitterschnittprüfung gegeben, jedoch kann an einer Fehlstelle die Beschichtung folienartig und großflächig abgezogen werden.

Um dies zu zeigen, wurde in einer Serie von Experimenten ein Bindemittelsystem nach folgender Zusammensetzung verwendet: 100 Gewichtsteile einer Polyaminverbindung der Formel (I) wurden mit 0,75 Gewichtsteilen Rheologiemodifizierungsmittel 1 (Modaflow 9200), 0,50 Gewichtsteilen Rheologiemodifizierungsmittel 2 (Byk 310), 1,30 Gewichtsteilen Stabilisator 1 (Tinivin 292 HP), 1,80 Gewichtsteilen Stabilisator 2 (Tinivin 384-2), 3,0 Gewichtsteilen Methoxypropylacetat (MPA), 3,0 Gewichtsteilen Butylglykolacetat (BGA) und 44,0 Gewichtsteilen Butylacetat versetzt und in einem Dissolver bei 300 U/min 10 min gemischt.

Als Vergleichshärtersysteme V0, V10, V11 und V12 wurden folgende Zusammensetzungen verwendet: 300 Gewichtsteile an Polyisocanat (V0: Desmodur 3900; V10: Desmodur N 3790; V11: Desmdodur Z 4470 SN; V12: Desmodur XP 2679) wurden mit 250 Gewichtsteilen Butylacetat versetzt und das Gemisch wurde durch ein Sieb filtriert.

Das Bindemittelsystem wurde mit einem der Vergleichshärtersysteme oder einem Gemisch von Vergleichshärtersystemen gemischt und eine Holzoberfläche wurde mit den sich ergebenden Vergleichsbeschichtungszusammensetzungen beschichtet. Die beschichteten Holzoberflächen wurden bezüglich der Haftung und Kratzbeständigkeit der Beschichtungen bewertet. Die Ergebnisse sind in der nachstehenden Tabelle 3 gezeigt (MV: Mischverhältnis Gew./Gew.).

**Tabelle 3**

| **Härter** | **MV** | **Haftung** | **Kratzbest.** |
|---|---|---|---|
| V0 | | -- | ++ |
| V10 | | -- | + |
| V10 + V0 | 1:1 | -- | + |
| V11 | | + | -- |
| V11 + V0 | 1:1 | -- | 0 |
| V12 | | -- | ++ |
| V12 + V0 | 1:1 | -- | ++ |

Wie aus Tabelle 3 ersichtlich, weisen Beschichtungen, die auf einer Polyaminverbindung der Formel (I) und üblichen Isocyanaten (wie Desmodur 3900, Desmodur N 3790, Desmdodur Z 4470 SN oder Desmodur XP 2679) basieren, eine schlechte Haftung auf. Außerdem wurde ein weiteres Vergleichshärtersystem hergestellt, das auf V0 basierte, aber Desmodur 3390 anstelle von Desmodur 3900 enthielt. Wurde dieses Vergleichshärtersystem 1:1 mit dem Bindemittelsystem gemischt und die sich ergebende Vergleichsbeschichtungszusammensetzung zum Beschichten einer Holzoberfläche verwendet, ergaben sich dieselben Haftungsprobleme sowie zusätzlich ein schlechterer Glanz.

Es wurden weitere Beschichtungsversuche durchgeführt, wobei verschiedene Gemische von Härtersystemen verwendet wurden. Die Ergebnisse dieser weiteren Versuche sind in der Tabelle 4 gezeigt.

**Tabelle 4**

| **Härter** | **MV** | **Haftung** | **Kratzbest.** |
|---|---|---|---|
| V11 + V0 | 1,5:1 | -- | 0 |
| V11 + V0 | 2:1 | - | - |
| V11 + V0 | 3:1 | + | -- |
| V11 + V0 | 4:1 | ++ | -- |
| V11 + V12 | 1:1 | ++ | + |
| V11 + V12 | 1,5:1 | ++ | ++ |
| V11 + V12 | 2:1 | 0 | + |

Überraschenderweise zeigen diese Ergebnisse, dass Kratzfestigkeit und Haftung gleichzeitig durch die Kombination der beiden Isocyanate Z 4470 und XP 2679 erreicht werden kann, während andere Gemischen zu einer unzureichenden Haftung und/oder einer unzureichenden Kratzbeständigkeit führen.

### Beispiel 2

Die Entflammbarkeit von Beschichtungen, die mit den erfindungsgemäßen Beschichtungszusammensetzungen erzeugt werden, wurde getestet und mit einer Beschichtung, die mit einem herkömmlichen Beschichtungssystem erzeugt wird, verglichen. Die erfindungsgemäße Beschichtung BZ o hatte die nachstehende Zusammensetzung.

Die erfindungsgemäße Beschichtung BZ 20 unterschied sich lediglich im Zusatz von 20 Gew.-% eines phosphorhaltigen, halogenfreien Flammschutzmittels. Als Vergleichszusammensetzung (WB) wurde ein herkömmlicher Acryl-PUR-Lack, der auf Acrylharz-Bindemittel und isocyanathaltigem Härter basierte und Flammschutzmittel enthielt, verwendet. Die Prüfung des Brandverhaltens erfolgte gemäß Entschließung MSC. 307 (88) - (2010 FTP Code) Anlage 1 Teil 5. Die Ergebnisse der Entflammbarkeitstests sind in der nachfolgenden Tabelle 5 dargestellt.

**Tabelle 5**

| | WB | Erfindungsgemäße Beschichtung | |
|---|---|---|---|
| | | BZ o | BZ 20 |
| Schichtdicke [µm] | 550 | -- | 380 |
| Auftragsmenge g/m² | | | |
| | | | |
| Brandschutzmittel [%] | + | 0 | 20 |
| | | | |
| Entzündungszeit | 12,5 | 16 | 15,2 |
| Wärme für Entzündung [MJ/m²] | 1,108 | 1,069 | 1,429 |
| Dauer der Flammenausbreitung [s] | 344 | 241 | 235 |
| Maximale Brennstrecke [mm] | 515 | 485 | 395 |
| Kritischer Wärmestrom beim Verlöschen [kW/m²] (> 20) | 8,1 | 10,2 | 18,7 |
| Wärme für anhaltendes Brennen [MJ/m²] (> 1,5) | 1,51 | 1,32 | 1,66 |
| Gesamtwärmefreisetzung [MJ] (< 0,7) | 0,886 | 0,539 | 0,401 |
| Maximale Wärmefreisetzung [kW] (< 4) | 7,77 | 5,66 | 4,59 |

Wie aus der Tabelle 5 ersichtlich, ist die Beschichtung, die mit der erfindungsgemäßen Beschichtungszusammensetzung erzeugt wurde, schwer entflammbar, selbst wenn die Beschichtungszusammensetzung kein Flammschutzmittel enthielt; vgl. auch Beispiel 9 und Abb. 11. Bei Zusatz eines Flammschutzmittels konnten die Eigenschaften hinsichtlich Flammschutz noch weiter verbessert werden (vgl. BZ 20) und übertrafen die Eigenschaften einer Beschichtung, die mit einem herkömmlichen Beschichtungssystem erzeugt wurde und ein Flammschutzmittel enthielt (vgl. WB).

### Beispiel 3

Holzsubstrate wurden vorschriftsgemäß mit verschiedenen Zusammensetzungen beschichtet (Gesamtbeschichtungsdicke: 1000 µm) und die Lösungsmittelemission von jedem beschichteten Substrat wurde wie vorstehend beschrieben anhand der flüchtigen Bestandteile der Beschichtungszusammensetzungen berechnet, wobei die Angaben der Sicherheitsdatenblätter (der Bestandteile der jeweiligen Beschichtungszusammensetzung) über Festkörpergehalt, Dichte und flüchtige Bestandteile sowie die Angaben in der Verarbeitungsvorschrift zur Verarbeitung (Verdünnungszugabe und Mischungsverhältnis mit der Härterkomponente) verwendet wurden. Folgende Beschichtungszusammensetzungen wurden verglichen:
- erfindungsgemäße Beschichtungszusammensetzung (BZ 1)
- Kontrolle 1 (herkömmlicher Acryl-PUR-Lack) und
- Kontrolle 2 (herkömmlicher Polyesterlack).

Die erfindungsgemäße Beschichtungszusammensetzung wurde aus einem 1:1-Gemisch (Gew./Gew.) von (a) einer Bindemittelkomponente, die aus einer Lösung von ca. 85,2 Gew.-% Polyaminverbindungen der Formel (I) und ca. 3,3 Gew.-% Additive in organischen Lösungsmitteln (hauptsächlich Butylacetat) bestand, und (b) einer Härterkomponente, die aus einer Lösung von einem auf Isophorondiisocyanat basierenden Polyisocyanat und einem Allophanat-Multimer eines aliphatischen Polyisocyanats in organischen Lösungsmitteln (hauptsächlich Butylacetat) bestand, wobei die Gesamtmenge der Polyisocyanate in der Härterkomponente ca. 62,3 Gew.-% betrug, hergestellt. Der Festkörperanteil in der erfindungsgemäßen Beschichtungszusammensetzung betrug daher ca. 75 Gew.-%, während der Lösungsmittelanteil ca. 25 Gew.-% ausmachte.

Als Kontrolle 1 wurde ein herkömmlicher Acryl-Polyurethanlack (Acryl-PUR-Lack) verwendet, der auf einem Acrylharz-Bindemittel (ca. 20 bis 40 Gew.%) und einem isocyanathaltigen Härter basierte, wobei das Acrylharz und der Härter in einem Gewichtsverhältnis von 10:1 gemischt wurden, so dass die Kontrolle 1 das Acrylharz, den Härter und Lösungsmittel in Mengen von ca. 22 Gew-%, ca. 4 Gew-% bzw. ca. 74 Gew-% enthielt. Der Festkörpergehalt betrug ca. 26 Gew.-%.

Als Kontrolle 2 wurde ein herkömmlicher Polyesterlack (PE-Lack) verwendet, der auf ungesättigten Polyestern (UPE), Styrol (Reaktivverdünner) und Beschleuniger (Peroxid) basierte. Die Kontrolle 2 enthielt demnach die PE und Styrol in Mengen von ca. 65 Gew-% bzw. ca. 35 Gew-%. Der Festkörpergehalt betrug ca. 80 Gew.-% (da sich nicht das gesamte Styrol mit den PE umsetzt und somit nicht umgesetztes Styrol als Flüssigkeit in der Beschichtung verbleibt bzw. daraus freigesetzt werden kann).

Die aus den vorstehenden Angaben berechneten Lösungsmittelemissionswerte sind in Abbildung 1 dargestellt. Anhand von Abbildung 1 ist ersichtlich, dass durch die Verwendung der erfindungsgemäßen Beschichtungszusammensetzung die Lösungsmittelemission im Vergleich zur Kontrolle 1 um ca. 90% reduziert werden kann.

Weiterhin wurden die vorstehenden Beschichtungszusammensetzungen verwendet, um zu bestimmen, wie lange man braucht, um Holzsubstrate bis zu einer Gesamtschichtdicke von 1000 µm zu beschichten. Hierzu wurden die Substrate solange Spritzgängen (bestehend aus Besprühen und Aushärten) unterzogen, bis die gewünschte Schichtdicke erreicht wurde, und die benötigte Zeit wurde gemessen, einschließlich der erforderlichen Trocknungszeiten. Zur Ermittlung dieser Trocknungszeit wurde die Zeit bis zum Erreichen einer grifffesten Oberfläche verwendet, wobei der Fachmann unter grifffest den Trocknungsgrad einer Beschichtung versteht, bei der ein Anfassen oder Drücken keinen zurückbleibenden Abdruck mehr hinterlässt.

Die Ergebnisse dieser Tests sind in Abbildung 2 gezeigt. Anhand von Abbildung 2 ist ersichtlich, dass durch die Verwendung der erfindungsgemäßen Beschichtungszusammensetzung der Zeitbedarf zur Erzeugung einer Testschichtdicke von 1000 µm im Vergleich zur Kontrolle 1 oder 2 um ca. 80% reduziert werden kann.

### Beispiel 4

Die Widerstandsfähigkeit von Beschichtungen wurde mit Hilfe von Kugelschlagprüfungen nach DIN EN ISO 6272 und mit Hilfe von Tiefungsprüfungen nach DIN EN ISO 1520 untersucht. Hierzu wurden Holzflächen (für die Kugelschlagprüfungen) oder Stahl (für die Tiefungsprüfungen) mit den verschiedenen, in Beispiel 3 beschriebenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) bis zu einer Schichtdicke von 100 µm bzw. 500 µm beschichtet. Nach einer Konditionierung von einer Woche bei Raumtemperatur wurden die beschichteten Holzflächen Kugelschlagprüfungen (Kugel: 20 mm; Matrize: 27 mm; Gewicht: 1 kg; Fallhöhe: 10, 25 bzw. 100 cm) unterzogen. Nach dem Einschlag wurde die Beschichtung auf Rissbildungen untersucht (nach DIN EN ISO 4628-4), wobei der Wert "1" bedeutet, dass die Lackschicht unbeschädigt geblieben ist, und der Wert "6" bedeutet, dass die Lackschicht zerstört worden ist. Für die Tiefungsprüfungen nach DIN EN ISO 1520 wurden lediglich Substrate verwendet, auf die eine Beschichtung mit einer Dicke von 100 µm aufgetragen wurde. Die Tiefungsprüfungen erfolgten wie vorstehend unter der Überschrift "Prüfungen" beschrieben.

Die Ergebnisse der Kugelschlagprüfungen sind in Abbildungen 3a (Trockenschichtdicke: 100 µm) und 3b (Trockenschichtdicke: 500 µm) gezeigt. Anhand der Abbildungen 3a und 3b ist ersichtlich, dass die erfindungsgemäße Beschichtungszusammensetzung eine Beschichtung erzeugt, die unter den Versuchsbedingungen widerstandsfähiger als eine herkömmliche PE-Beschichtung (Kontrolle 2) ist und etwa gleich widerstandsfähig wie eine herkömmliche Acryl-PUR-Beschichtung (Kontrolle 1) ist.

Die Ergebnisse der Tiefungsprüfungen sind in der Abbildung 4 gezeigt. Auch aus dieser Abbildung ist ersichtlich, dass die erfindungsgemäße Beschichtungszusammensetzung eine Beschichtung erzeugt, die unter den Versuchsbedingungen widerstandsfähiger als eine herkömmliche PE-Beschichtung (Kontrolle 2) ist und etwa gleich widerstandsfähig wie eine herkömmliche Acryl-PUR-Beschichtung (Kontrolle 1) ist.

### Beispiel 5

Die Witterungsbeständigkeit von Beschichtungen wurde mit Hilfe von Kondenswasser-Klima-Tests nach DIN EN ISO 6270-2 untersucht. Hierzu wurden Holzflächen (Buche-Vollholz, 76 cm²) mit den verschiedenen, in Beispiel 3 beschriebenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) bis zu einer Trockenschichtdicke von 100 µm bzw. 500 µm beschichtet. Nach einer Konditionierung von einer Woche bei Raumtemperatur wurden die beschichteten Holzflächen Kondenswasser, wie vorstehend unter der Überschrift "Prüfungen" beschrieben, ausgesetzt. Die Wasseraufnahme wurde in gewissen Zeitabständen (bis 2000 h) gemessen.

Die Ergebnisse der Kondenswasser-Klima-Tests sind in Abbildungen 5a (Schichtdicke: 100 µm) und 5b (Schichtdicke: 500 µm) gezeigt. Es wurde festgestellt, dass die herkömmliche PE-Beschichtung bereits nach 190 h (Abb. 5a) bzw. 220 h (Abb. 5b) zerstört war, was zum Testabbruch für die Kontrolle 2 führte. Weiterhin ist ersichtlich, dass die erfindungsgemäße Beschichtungszusammensetzung eine Beschichtung erzeugt, die unter den Versuchsbedingungen etwa gleich witterungsbeständig wie eine herkömmliche Acryl-PUR-Beschichtung (Kontrolle 1) ist.

Die Witterungsbeständigkeit von Beschichtungen wurde auch mit Hilfe von QUV-Tests nach DIN EN ISO 11507 untersucht. Hierzu wurden Holzflächen, die jeweils einen weißen Basislack und darauf eine Beschichtung aufwiesen, die mit den verschiedenen, in Beispiel 3 beschriebenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) erzeugt worden war und eine Trockenschichtdicke von 100 µm aufwies, eine Woche bei Raumtemperatur konditioniert und dann einer künstlichen Bewitterung ausgesetzt, wie vorstehend unter der Überschrift "Prüfungen" beschrieben. Die farbmetrische Bestimmung des Farbabstands nach der CIELAB-Formel nach DIN 6174 zur Beurteilung der Farbveränderung (ΔE*) nach DIN 5033-3 als auch die Bestimmung des Glanzes bei einem Winkel von 60° nach DIN EN ISO 2813 erfolgte jeweils vor und nach Bewitterung für 30 h, 80 h, 220 h, 600 h, 720 h, 890, 1000 h, 1360 h und 1850 h.

Die Ergebnisse dieser QUV-Tests sind in den Abbildungen 6a und 6b gezeigt. Es wurde festgestellt, dass die herkömmliche PE-Beschichtung bereits nach 600 h zerstört war, was zum Testabbruch für die Kontrolle 2 führte. Weiterhin ist aus Abbildung 6b ersichtlich, dass die erfindungsgemäße Beschichtungszusammensetzung eine Beschichtung erzeugt, die unter den Versuchsbedingungen einen höheren Glanzgrad als eine herkömmliche Acryl-PUR-Beschichtung (Kontrolle 1) aufweist.

Die Witterungsbeständigkeit von Beschichtungen wurde auch mit Hilfe von Cold Check-Tests untersucht. Hierzu wurden Holzflächen (Fichte-Vollholz) mit den verschiedenen, in Beispiel 3 beschriebenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) bis zu einer Trockenschichtdicke von 150 µm beschichtet. Nach einer Konditionierung für zwei Wochen bei Raumtemperatur wurden die beschichteten Holzflächen mehreren Bewitterungszyklen ausgesetzt, wobei ein Zyklus aus einer Belastung bei 4 h bei -20°C ohne Feuchte, gefolgt von 4 h bei +60°C mit 30% relativer Feuchte, gefolgt von 4 h bei 60°C mit 90% relativer Feuchte bestand. Die Bewertung erfolgte nach 28 Zyklen durch visuelle Bewertung der Oberfläche bzw. Kante sowie durch eine Haftungsprüfung mittels Gitterschnitt gemäß DIN EN ISO 2409.

Die Ergebnisse dieser Cold Check-Tests sind in Abbildung 7 gezeigt. Es ist ersichtlich, dass die erfindungsgemäße Beschichtungszusammensetzung eine Beschichtung erzeugt, die wesentlich widerstandfähiger unter den Versuchsbedingungen als eine herkömmliche PE-Beschichtung (Kontrolle 2) ist und mindestens die gleiche, wenn nicht sogar eine bessere Widerstandfähigkeit als eine herkömmliche Acryl-PUR-Beschichtung (Kontrolle 1) aufweist.

### Beispiel 6

Die Härte von Beschichtungen wurde mit Hilfe von Pendelhärte-Tests (König) nach EN ISO 1522 in Abhängigkeit der Trockenzeit untersucht. Hierzu wurden Substrate mit den verschiedenen, in Beispiel 3 beschriebenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) bis zu einer Schichtdicke von 150 µm beschichtet und dem Pendelhärte-Test (König) nach EN ISO 152 unterzogen. Gemessen wurde die Anzahl der Schwingungen oder die Zeitspanne in Sekunden (Dämpfungsdauer), bis die Auslenkung des Pendels von dem Ausgangswinkel von 6° auf 3° abgeklungen ist.

Die Ergebnisse dieser Pendelhärte-Tests sind in Abbildung 8 gezeigt. Es ist ersichtlich, dass die erfindungsgemäße Beschichtungszusammensetzung eine Beschichtung erzeugt, die wesentlich schneller hart wird und insgesamt härter ist als eine herkömmliche Acryl-PUR-Beschichtung (Kontrolle 1) oder eine herkömmliche PE-Beschichtung (Kontrolle 2).

### Beispiel 7

Der Glanzgrad von Beschichtungen, die mit den verschiedenen, in Beispiel 3 beschriebenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) erzeugt wurden, wurde gemäß DIN EN ISO 2813, wie vorstehend unter der Überschrift "Prüfungen" beschrieben, bestimmt.

Die Ergebnisse der Glanzmessung sind in Abbildung 9 gezeigt. Es ist ersichtlich, dass die erfindungsgemäße Beschichtungszusammensetzung eine Beschichtung erzeugt, die einen wesentlich besseren Glanzgrad als eine herkömmliche Acryl-PUR-Beschichtung (Kontrolle 1) aufweist und die bezüglich einer herkömmlichen PE-Beschichtung (Kontrolle 2) einen sehr vergleichbaren Glanzgradverlauf zeigt.

### Beispiel 8

Die Chemikalienbeständigkeit von Beschichtungen wurde gemäß DIN 68861-1 und DIN EN 12720 untersucht. Hierzu wurden auf Beschichtungen, die mit den verschiedenen, in Beispiel 3 beschriebenen Zusammensetzungen (erfindungsgemäße Beschichtungszusammensetzung (BZ 1); Kontrolle 1 (herkömmlicher Acryl-PUR-Lack); Kontrolle 2 (herkömmlicher PE-Lack)) erzeugt und für drei Wochen bei Raumtemperatur konditioniert worden waren, verschiedene Flüssigkeiten (gemäß DIN 68861-1) mittels durchtränkter Filterpapierscheiben aufgebracht und die Beschichtungen wurden sodann mit einer Glasschale abgedeckt. Nach einer festgelegen Einwirkdauer wurden die Filterpapierscheiben entfernt und nach einer Regenerationszeit von 16 h bis 24 h mit anschließender Reinigung erfolgte die Bewertung der Oberfläche nach DIN EN 12720.

Die Ergebnisse der Chemikalienbeständigkeitstests sind in den Abbildungen 10a und 10b gezeigt (wobei "schwarze KS-Pastentinte" schwarze Kugelschreiber-Pastentinte bedeutet). Es ist ersichtlich, dass die erfindungsgemäße Beschichtungszusammensetzung eine Beschichtung erzeugt, die hinsichtlich verschiedener Chemikalien mindestens gleich widerstandsfähig ist wie eine herkömmliche Acryl-PUR-Beschichtung (Kontrolle 1) und eine herkömmliche PE-Beschichtung (Kontrolle 2).

### Beispiel 9

Die in Beispiel 3 beschriebene erfindungsgemäße Beschichtungszusammensetzung wurde zusammen mit der in Beispiel 3 beschriebenen Kontrolle 1 (herkömmlicher Acryl-PUR-Lack, enthält Flammschutzmittel) Brandprüfungen gemäß MSC.307 (88) - (2010 FTP Code) Anlage 1 Teil 5 unterzogen. Hierzu wurden Substrate mit den Zusammensetzungen beschichtet, um eine Testschichtdicke von 500 µm zu erzeugen, und in einer speziellen Messanordnung gemäß Entschließung MSC. 307 (88) einer Flamme ausgesetzt. Als Messgrößen wurden Entzündungszeit, Flammenfortschritt, Erlöschen der Flamme, Flammenausdehnung, Rauchentwicklung, Verkohlen/Verfärben/Rissbildung, brennendes Abfallen und Dauer des Brandversuchs ermittelt. Daraus ergaben sich verschiedene Brandeigenschaften, insbesondere die Wärme für anhaltendes Brennen (Q_{sb}; Grenzwert: > 1,5), der kritische Wärmestrom beim Verlöschen (CFE; Grenzwert: > 20), die freigesetzte Gesamtwärmemenge (Qₜ, Grenzwert: < 0,7) und die maximale Wärmefreisetzungsrate (Qₚ; Grenzwert: < 4).

Die Ergebnisse sind in den Abbildungen 11a bis 11d gezeigt, die jeweilige Grenzwerte zum Vergleich enthalten. Es ist ersichtlich, dass die erfindungsgemäße Beschichtungszusammensetzung eine Beschichtung erzeugt, die, obwohl sie kein Flammschutzmittel enthält, vergleichbare (vgl. Abbildungen 11a und b) bzw. bessere Ergebnisse (vgl. Abbildungen 11c und d) erzielt als eine herkömmliche Acryl-PUR-Beschichtung (Kontrolle 1), die bereits ein Flammschutzmittel enthält.

## Patentansprüche

1. Beschichtungszusammensetzung, umfassend:
(A) eine Bindemittelkomponente, die mindestens eine Polyaminverbindung der nachstehenden Formel (I) umfasst: 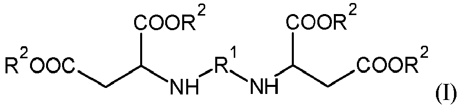 worin
R¹ ein divalenter organischer Rest mit bis zu 30 Kohlenstoffatomen ist und
R² jeweils unabhängig ausgewählt wird aus Alkyl-, Cycloalkyl- und Arylgruppen,
und
(B) eine Härterkomponente, die (i) ein auf Isophorondiisocyanat basierendes Polyisocyanat, bestehend aus einer nicht-monomeren, höhermolekularen Form aus 2, 3, 4, 5, 6, 7, 8, 9, 10 oder mehr Isophorondiisocyanat-Einheiten oder einem Gemisch aus solchen höhermolekularen Formen, und (ii) ein Allophanat-Multimer eines aliphatischen Polyisocyanats umfasst,
wobei die Beschichtungszusammensetzung im Wesentlichen styrolfrei ist und wobei das Gewichtsverhältnis von (i) dem auf Isophorondiisocyanat basierenden Polyisocyanat zu (ii) dem Allophanat-Multimer eines aliphatischen Polyisocyanats in der Beschichtungszusammensetzung 1:1 bis 2:1 beträgt.

2. Beschichtungszusammensetzung nach Anspruch 1, wobei R¹ eine Alkylengruppe mit bis zu 10 Kohlenstoffatomen ist oder die Formel (II) 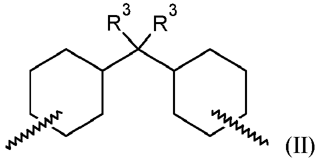 aufweist, wobei R³ ausgewählt wird aus H-Atom und C₁₋₆-Alkylgruppen, 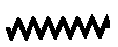 die Anbindung von R¹ an die Stickstoffatome der Formel (I) darstellt und jeder der zwei Cyclohexylringe unabhängig voneinander gegebenenfalls mit 1, 2, 3 oder 4 Substituenten, ausgewählt aus C₁₋₆-Alkylgruppen, substituiert ist.

3. Beschichtungszusammensetzung nach Anspruch 1 oder 2, wobei die Bindemittelkomponente (A) mindestens zwei Polyaminverbindungen der Formel (I) umfasst.

4. Beschichtungszusammensetzung nach Anspruch 3, wobei zwei der Polyaminverbindungen die Formel (I) aufweisen, worin R¹ die Formel (II) aufweist, wobei R³ H-Atom ist und jeder der zwei Cyclohexylringe unabhängig voneinander gegebenenfalls mit einer C₁₋₃-Alkylgruppe substituiert ist, und R² aus C₁₋₃-Alkylgruppen ausgewählt wird.

5. Beschichtungszusammensetzung nach einem der Ansprüche 1 bis 4, wobei der Gehalt der mindestens einen Polyaminverbindung in der Bindemittelkomponente (A) mindestens 70 Gew.-%, insbesondere mindestens 80 Gew.-%, beträgt.

6. Beschichtungszusammensetzung nach einem der Ansprüche 1 bis 5, wobei das Allophanat-Multimer eines aliphatischen Polyisocyanats ein Hexamethylendiisocyanat-Allophanat-Multimer ist.

7. Beschichtungszusammensetzung nach einem der Ansprüche 1 bis 6, wobei das Allophanat-Multimer eines aliphatischen Polyisocyanats einen NCO-Gehalt von mindestens 13%, insbesondere mindestens 14%, aufweist.

8. Beschichtungszusammensetzung nach einem der Ansprüche 1 bis 7, wobei das auf Isophorondiisocyanat basierende Polyisocyanat einen NCO-Gehalt von mindestens 10%, insbesondere mindestens 12%, aufweist.

9. Beschichtungszusammensetzung nach einem der Ansprüche 1 bis 8, wobei die Summe der Mengen an (i) dem auf Isophorondiisocyanat basierenden Polyisocyanat und (ii) dem Allophanat-Multimer eines aliphatischen Polyisocyanats in der Härterkomponente (B) mindestens 40 Gew.-% , insbesondere mindestens 50 Gew.-%, beträgt.

10. Beschichtungszusammensetzung nach einem der Ansprüche 1 bis 9, wobei das Verhältnis von Bindemittelkomponente (A) zu Härterkomponente (B) 4:1 bis 1:4 beträgt.

11. Beschichtungszusammensetzung nach einem der Ansprüche 1 bis 10, wobei die Bindemittelkomponente (A) ferner ein oder mehrere Lösungsmittel und/oder einen oder mehrere Zusatzstoffe, ausgewählt aus der Gruppe, bestehend aus Rheologiemodifizierungsmitteln, Farbmitteln, Stabilisatoren, Flammschutzmitteln, Füllstoffen und Trocknungsmitteln umfasst.

12. Verwendung einer Beschichtungszusammensetzung nach einem der Ansprüche 1 bis 11 zur Ausbildung einer Beschichtung, insbesondere einer Korrosionsschutz- und/oder Brandschutzbeschichtung, auf einer Oberfläche.

13. Verfahren zur Beschichtung einer Oberfläche, umfassend die Schritte:
- Aufbringen einer Beschichtungszusammensetzung nach einem der Ansprüche 1 bis 11 auf zumindest einen Teil der Oberfläche und
- gegebenenfalls Aushärten der Beschichtungszusammensetzung.

14. Verwendung nach Anspruch 12, wobei die Beschichtungszusammensetzung bei Raumtemperatur, insbesondere ohne weitere Energiezufuhr, ausgehärtet wird und/oder wobei die Oberfläche ausgewählt wird aus der Gruppe, bestehend aus Holz, Metall und Kunststoff, insbesondere carbonfaserverstärktem Kunststoff.

15. Verfahren nach Anspruch 13, wobei die Beschichtungszusammensetzung bei Raumtemperatur, insbesondere ohne weitere Energiezufuhr, ausgehärtet wird und/oder die Oberfläche ausgewählt wird aus der Gruppe, bestehend aus Holz, Metall und Kunststoff, insbesondere carbonfaserverstärktem Kunststoff.

## Claims

1. A coating composition comprising:
(A) a binder component comprising at least one polyamine compound of the following formula (I): 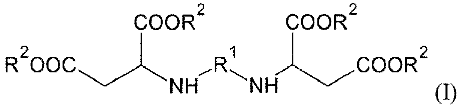 wherein
R¹ is a divalent organic moiety having up to 30 carbon atoms; and
each R² is independently selected from alkyl, cycloalkyl and aryl groups;
and
(B) a hardener component comprising (i) an isophorone diisocyanate-based polyisocyanate consisting of a non-monomeric, higher molecular form of 2, 3, 4, 5, 6, 7, 8, 9, 10 or more isophorone diisocyanate units or a mixture of such higher molecular forms and (ii) an allophanate multimer of an aliphatic polyisocyanate,
wherein the coating composition is substantially free of styrene and wherein the weight ratio of (i) the isophorone diisocyanate-based polyisocyanate to (ii) the allophanate multimer of an aliphatic polyisocyanate in the coating composition is 1:1 to 2:1.

2. The coating composition according to claim 1, wherein R¹ is an alkylene group of up to 10 carbon atoms or has the formula (II) 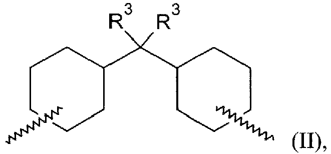 wherein R³ is selected from H atom and C₁₋₆ alkyl groups; 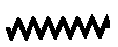 represents the attachment of R¹ to the nitrogen atoms of formula (I); and each of the two cyclohexyl rings independently of each other is optionally substituted with 1, 2, 3 or 4 substituents selected from C₁₋₆ alkyl groups.

3. The coating composition according to claim 1 or 2, wherein the binder component (A) comprises at least two polyamine compounds of formula (I).

4. The coating composition according to claim 3, wherein two of the polyamine compounds have the formula (I), wherein R¹ has the formula (II), wherein R³ is an H atom; and each of the two cyclohexyl rings independently of each other is optionally substituted with a C₁₋₃ alkyl group; and R² is selected from C₁₋₃ alkyl groups.

5. The coating composition according to claims 1 to 4, wherein the content of the at least one polyamine compound in the binder component (A) is at least 70 wt.-%, in particular at least 80 wt.-%.

6. The coating composition according to claims 1 to 5, wherein the allophanate multimer of an aliphatic polyisocyanate is an allophanate multimer of hexamethylene diisocyanate.

7. The coating composition according to claims 1 to 6, wherein the allophanate multimer of an aliphatic polyisocyanate has an NCO content of at least 13%, in particular at least 14%.

8. The coating composition according to claims 1 to 7, wherein the isophorone diisocyanate-based polyisocyanate has an NCO content of at least 10%, in particular at least 12%.

9. The coating composition according to claims 1 to 8, wherein the sum of the amounts of (i) the isophorone diisocyanate-based polyisocyanate and (ii) the allophanate multimer of an aliphatic polyisocyanate in the hardener component (B) is at least 40 wt.-%, in particular at least 50 wt.-%.

10. The coating composition according to claims 1 to 9, wherein the ratio of binder component (A) to hardener component (B) is 4:1 to 1:4.

11. The coating composition according to claims 1 to 10, wherein the binder component (A) further comprises one or more solvents and/or one or more additives selected from the group consisting of rheology modifiers, colorants, stabilizers, flame retardants, fillers and drying agents.

12. Use of a coating composition according to claims 1 to 11 for forming a coating, in particular a corrosion protection and/or fire protection coating, on a surface.

13. A process for coating a surface, comprising the steps:
- applying to at least a portion of the surface a coating composition according to claims 1 to 11; and
- optionally, curing the coating composition.

14. The use according to claim 12, wherein the coating composition is cured at room temperature, in particular without further energy input, and/or wherein the surface is selected from the group consisting of wood, metal, and plastic, in particular carbon fiber reinforced plastic.

15. The process according to claim 13, wherein the coating composition is cured at room temperature, in particular without further energy input, and/or the surface is selected from the group consisting of wood, metal, and plastic, in particular carbon fiber reinforced plastic.

## Revendications

1. Composition de revêtement, comprenant :
(A) un composant liant qui comprend au moins un composé polyamine de formule (I) suivante : 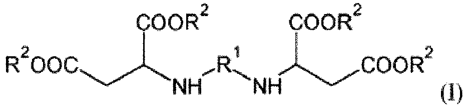 dans laquelle
R¹ est un radical organique divalent ayant jusqu'à 30 atomes de carbone et
R² est choisi chaque fois indépendamment parmi des groupes alkyle, cycloalkyle et aryle,
et
(B) un composant durcisseur qui comprend (i) un polyisocyanate à base d'isophorone-diisocyanate, constitué d'une forme de masse moléculaire élevée, non monomère, à base de 2, 3, 4, 5, 6, 7, 8, 9, 10 ou plus de 10 unités isophorone-diisocyanate ou d'un mélange de telles formes de masse moléculaire élevée, et (ii) un multimère allophanate d'un polyisocyanate aliphatique,
dans laquelle la composition de revêtement est essentiellement exempte de styrène et dans laquelle le rapport pondéral de (i) le polyisocyanate à base d'isophorone-diisocyanate à (ii) le multimère allophanate d'un polyisocyanate aliphatique dans la composition de revêtement vaut de 1:1 à 2:1.

2. Composition de revêtement selon la revendication 1, dans laquelle R¹ est un groupe alkylène ayant jusqu'à 10 atomes de carbone ou présente la formule (II) 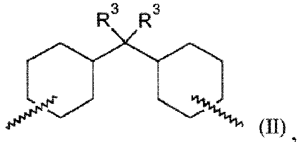 dans laquelle R³ est choisi parmi un atome d'hydrogène et des groupes alkyle en C₁-C₆, 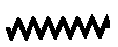 représente la liaison de R¹ aux atomes d'azote de la formule (I) et chacun des deux cycles cyclohexyle est, indépendamment de l'autre, éventuellement porteur de 1, 2, 3 ou 4 substituant(s), choisi(s) parmi des groupes alkyle en C₁-C₆.

3. Composition de revêtement selon la revendication 1 ou 2, dans laquelle le composant liant (A) comprend au moins deux composés polyamine de formule (I).

4. Composition de revêtement selon la revendication 3, dans laquelle deux des composés polyamine présentent la formule (I), dans laquelle R¹ présente la formule (II), où R³ est un atome d'hydrogène et chacun des deux cycles cyclohexyle est, indépendamment de l'autre, éventuellement substitué par un groupe alkyle en C₁-C₃, et R² est choisi parmi des groupes alkyle en C₁-C₃.

5. Composition de revêtement selon l'une quelconque des revendications 1 à 4, dans laquelle la concentration dudit au moins un composé polyamine dans le composant liant (A) vaut au moins 70 % en poids, en particulier au moins 80 % en poids.

6. Composition de revêtement selon l'une quelconque des revendications 1 à 5, dans laquelle le multimère allophanate d'un polyisocyanate aliphatique est un multimère allophanate d'hexaméthylène-diisocyanate.

7. Composition de revêtement selon l'une quelconque des revendications 1 à 6, dans laquelle le multimère allophanate d'un polyisocyanate aliphatique présente une teneur en groupes NCO d'au moins 13 %, en particulier d'au moins 14 %.

8. Composition de revêtement selon l'une quelconque des revendications 1 à 7, dans laquelle le polyisocyanate à base d'isophorone-diisocyanate présente une teneur en groupes NCO d'au moins 10 %, en particulier d'au moins 12 %.

9. Composition de revêtement selon l'une quelconque des revendications 1 à 8, dans laquelle la somme des quantités de (i) le polyisocyanate à base d'isophorone-diisocyanate et (ii) le multimère allophanate d'un polyisocyanate aliphatique dans le composant durcisseur (B) vaut au moins 40 % en poids, en particulier au moins 50 % en poids.

10. Composition de revêtement selon l'une quelconque des revendications 1 à 9, dans laquelle le rapport du composant liant (A) au composant durcisseur (B) vaut de 4:1 à 1:4.

11. Composition de revêtement selon l'une quelconque des revendications 1 à 10, dans laquelle le composant liant (A) comprend encore un ou plusieurs solvant(s) et/ou un ou plusieurs additif(s), choisi(s) dans l'ensemble constitué par les modificateurs de rhéologie, les agents colorants, les stabilisants, les agents ignifuges, les charges et les siccatifs.

12. Utilisation d'une composition de revêtement selon l'une quelconque des revendications 1 à 11, pour la formation d'un revêtement, en particulier d'un revêtement anticorrosion et/ou ignifuge, sur une surface.

13. Procédé pour le revêtement d'une surface, comprenant les étapes :
- application d'une composition de revêtement selon l'une quelconque des revendications 1 à 11 sur au moins une partie de la surface et
- éventuellement durcissement de la composition de revêtement.

14. Utilisation selon la revendication 12, dans laquelle la composition de revêtement est durcie à la température ambiante, en particulier sans autre apport d'énergie, et/ou dans laquelle la surface est choisie dans l'ensemble constitué par le bois, le métal et une matière plastique, en particulier une matière plastique renforcée avec des fibres de carbone.

15. Procédé selon la revendication 13, dans lequel la composition de revêtement est durcie à la température ambiante, en particulier sans autre apport d'énergie, et/ou la surface est choisie dans l'ensemble constitué par le bois, le métal et une matière plastique, en particulier une matière plastique renforcée avec des fibres de carbone.
